(19) Europäisches Patentamt
European Patent Office
Office européen des brevets

(11) EP 4 145 960 B1

(12) FASCICULE DE BREVET EUROPEEN

(45) Date de publication et mention de la délivrance du brevet:
**30.07.2025 Bulletin 2025/31**

(21) Numéro de dépôt: **22193530.7**

(22) Date de dépôt: **01.09.2022**

(51) Classification Internationale des Brevets (IPC):
***H05B 45/12*** *(2020.01)* ***G06V 10/60*** *(2022.01)*
***H05B 47/11*** *(2020.01)* ***H05B 47/175*** *(2020.01)*
***G06V 10/141*** *(2022.01)* ***G06V 20/54*** *(2022.01)*

(52) Classification Coopérative des Brevets (CPC):
**H05B 45/12; G06V 10/141; G06V 20/54; H05B 47/11; H05B 47/175; H05B 47/198**

# (54) SYSTEME DE GESTION D'UNE INSTALLATION D'ECLAIRAGE ADAPTATIF ET PROCEDE CORRESPONDANT

SYSTEM ZUR STEUERUNG EINER ADAPTIVEN BELEUCHTUNGSANLAGE UND ENTSPRECHENDES VERFAHREN

SYSTEM FOR MANAGING AN ADAPTIVE LIGHTING SYSTEM AND CORRESPONDING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2021 FR 2109188**

(43) Date de publication de la demande:
**08.03.2023 Bulletin 2023/10**

(73) Titulaire: **Centre d'Etudes et d'Expertise sur les Risques l'Environnement la mobilite et l'Amenagement
69003 Lyon (FR)**

(72) Inventeurs:
- **BOUCHER, Vincent
49460 FENEU (FR)**
- **GREFFIER, Florian
49000 ECOUFLANT (FR)**

(74) Mandataire: **Ipsilon
Europarc - Bat B7
3, rue Edouard Nignon
44300 Nantes (FR)**

(56) Documents cités:
**WO-A1-2018/046488 US-A1- 2021 112 647**

- **BOMMEL ET AL: "Road Surfaces and lighting", JOINT TECHNICAL REPORT CIE/PIARC, XX, XX, vol. 66, 1 January 1984 (1984-01-01), XP002258261**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

La présente invention concerne de manière générale la gestion d'une installation d'éclairage, notamment pour des luminaires d'éclairage de voie de circulation.

### ART ANTERIEUR

Il est souhaitable que les voies de circulation soient correctement éclairées pour que les utilisateurs de ces voies, tels que des piétons, des cyclistes ou des automobilistes, puissent circuler de manière sécurisée, tout en limitant les nuisances lumineuses ou le gaspillage d'énergie.

Le document US2021112647A1 décrit un système d'émission de lumière qui comprend un dispositif d'émission de lumière à variation angulaire qui permet de modifier individuellement le flux lumineux des sources lumineuses dans différentes zones angulaires de l'environnement. Un capteur de lumière est positionné pour recevoir la lumière provenant du dispositif émetteur de lumière à variation angulaire.

Il reste cependant souhaitable que le flux lumineux soit ajusté de manière fiable et rapide pour pouvoir adapter rapidement l'éclairage à l'état de la voie de circulation, notamment pour limiter le risque d'accidents sur la voie qui pourraient se produire dans le cas d'une modification d'éclairage qui serait effectuée de manière inappropriée ou avec un temps de modification trop long résultant par exemple d'un tâtonnement dans les ajustements.

Le document de BOMMEL et al. intitulé "Road Surfaces and lighting", JOINT TECHNICAL REPORT CIE/PIARC, traite de la caractérisation des propriétés de réflexion des voies de circulation.

La présente invention a pour but de proposer un nouveau système de gestion d'installation d'éclairage et un procédé correspondant permettant de pallier tout ou partie des problèmes exposés ci-dessus.

### RESUME DE L'INVENTION

A cet effet, l'invention a pour objet un système de gestion d'une installation d'éclairage agencée pour éclairer une voie de circulation, selon la revendication 1.

Le système permet de mesurer un changement de propriétés optiques de la voie de circulation et de piloter l'installation d'éclairage pour corriger l'éclairage et obtenir ainsi un éclairage adapté à des critères de référence en tenant compte des propriétés optiques de la voie de circulation. Ces critères de référence peuvent correspondre à des exigences normatives.

Le système de gestion permet ainsi de piloter les caractéristiques photométriques de fonctionnement (luminosité incidente) du ou des luminaires d'éclairage en fonction de propriétés optiques du matériau de la voie de circulation. Les propriétés optiques peuvent dépendre de l'état de surface (sec, humide, mouillé, trempé, ainsi que neuf ou usé) de la voie de circulation.

Le module de commande permet, à l'aide des propriétés optiques de la voie de circulation déterminées à partir des informations fournies par le dispositif d'acquisition d'image, de piloter les luminaires de l'installation d'éclairage selon un scénario d'éclairage adapté aux propriétés optiques de réflexion de la voie de circulation pour obtenir des caractéristiques de luminances souhaitées (critères de référence). Les critères de référence comprennent de préférence une valeur de luminance moyenne minimale, une valeur d'uniformité générale minimale et une valeur d'uniformité longitudinale minimale.

Le système selon l'invention permet ainsi d'optimiser le fonctionnement de l'installation d'éclairage selon les propriétés de réflexion optique de la voie à éclairer.

La connaissance précise des propriétés de réflexion optique de la voie de circulation, permet de commander l'installation d'éclairage pour émettre la quantité de lumière nécessaire et suffisante, et la répartir sur la surface souhaitée de la voie de circulation de manière la plus uniforme possible. Autrement dit, le système selon l'invention, permet de déterminer de manière fiable des paramètres de réflexion optiques, de préférence au minimum 580 valeurs de la table-r réelle de la voie de circulation, pour pouvoir ajuster précisément la distribution de l'intensité lumineuse (éclairage) pour obtenir une luminance moyenne adaptée et optimiser les uniformités de luminance générale et longitudinale.

Selon un mode de réalisation, le système permet aussi de commander le fonctionnement de l'installation d'éclairage en tenant compte du type d'usager, cycliste, piéton, automobiliste... qui emprunte la voie de circulation.

Le système peut aussi comporter une ou plusieurs des caractéristiques suivantes prises dans toute combinaison techniquement admissible.

Selon un mode de réalisation, le module de commande est configuré pour :

- définir une pluralité de scénarii d'éclairage, chaque scénario comprenant les paramètres de définition suivants: une photométrie ou une combinaison de photométries choisie parmi les photométries de l'installation d'éclairage, et une ou des données relatives à l'alimentation électrique de la ou des sources d'éclairage de la photométrie ou de la combinaison de photométries choisie;

- déterminer pour chaque scénario, à partir des caractéristiques de réflexion optiques déterminées de la voie de circulation, des caractéristiques de luminance de la voie de circulation lorsque ladite voie de circulation est éclairée selon les paramètres de définition dudit scénario, et
- comparer pour chaque scénario les caractéristiques de luminance déterminées de la voie de circulation avec les caractéristiques de luminance de référence ;
- identifier le scénario pour lequel les caractéristiques de luminance déterminées sont les plus proches des caractéristiques de luminance de référence ;
- commander les sources d'éclairage de l'installation d'éclairage qui correspondent au scénario identifié, selon la ou les données d'alimentation électriques utilisées dans le scénario identifié.

Le module de détermination d'un ensemble de caractéristiques de réflexion optique est configuré pour déterminer un ensemble de caractéristiques de réflexion optique de la voie de circulation en exécutant au moins les étapes suivantes :

- analyse en composantes principales d'ensembles de caractéristiques de réflexion optique de référence pour générer des ensembles de caractéristiques de réflexion optique virtuelles, encore appelés vecteurs propres $r_{v1}$, $r_{v2}$,..., $r_{vD}$;
- génération de plusieurs cartes de luminance virtuelles $L_{v1}$, $L_{v2}$,..., $L_{vD}$, en fonction : des vecteurs propres $r_{v1}$, $r_{v2}$,..., $r_{vD}$, des données de positionnement des sources d'éclairage de l'installation d'éclairage, par rapport à la zone de la voie de circulation, et des données de photométries en cours d'utilisation de l'installation d'éclairage ;
- décomposition de la carte de luminance fournie par le dispositif d'acquisition d'image, sur les cartes de luminance virtuelles $L_{v1}$, $L_{v2}$,..., $L_{vD}$, de manière à obtenir des coefficients $\lambda_1$,$\lambda_2$...$\lambda_D$ associés aux cartes de luminance virtuelles; et
- détermination de l'ensemble de caractéristiques de réflexion optique de la voie de circulation par combinaison linéaire des vecteurs propres $r_{v1}$, $r_{v2}$,..., $r_{vD}$ avec les coefficients $\lambda_1$,$\lambda_2$...$\lambda_D$ obtenus.

Une telle combinaison d'opérations d'analyse en composantes principales, de génération de cartes de luminance virtuelles et de décomposition de la carte de luminance, permet d'obtenir des coefficients appropriés pour déterminer par combinaison linéaire des vecteurs propres avec ces coefficients, ledit ensemble de caractéristiques de réflexion optique de la voie de circulation. Ces opérations réalisées notamment à partir des paramètres physiques relatifs à la carte de luminance et aux photométries permet de déterminer de manière rapide et fiable les caractéristiques optiques de la voie afin de pouvoir régler directement les sources d'éclairage de l'installation d'éclairage, ce qui permet de gagner du temps et de la précision pour obtenir le réglage adapté et ainsi limiter les problèmes de sécurité, notamment limiter le risque d'accidents sur la voie dus à un éclairage inapproprié, que pourrait causer sinon un tâtonnement des réglages.

Selon un mode de réalisation, les ensembles de caractéristiques de réflexion optique sont des tables-r, chaque table-r comprenant des valeurs d'un coefficient de luminance réduit, noté r, défini selon l'équation :

$$r = k \cdot q \cdot cos(\gamma)^3$$

avec k une constante, et q un coefficient de luminance défini par :

$$q = \frac{L}{E}$$

avec E l'éclairement horizontal généré par une source d'éclairage, et L la luminance,
q étant fonction de:

- l'angle d'observation $\alpha$,
- l'angle $\beta$ entre le plan d'incidence de la lumière de la source d'éclairage et le plan d'observation, et
- l'angle d'incidence $\gamma$ de la lumière,

la table-r comprenant des valeurs de r pour différentes valeurs d'angle $\beta$ et différentes valeurs de tan $\gamma$

Selon un mode de réalisation, les ensembles de caractéristiques de réflexion optique de référence étant des tables-r de référence, lesdites tables-r de référence comprennent des tables-r qui présentent des valeurs de couple {Q0 ; S1} différentes les unes des autres, avec :

$$Q0 = \frac{1}{\Omega}\int_{\Omega} q \, d\Omega \quad \text{et} \quad S1 = \frac{r(\tan\gamma = 2, \beta = 0)}{r(\tan\gamma = 0, \beta = 0)}$$

où Ω est l'angle solide contenant toutes les directions de la lumière incidente.

Selon un mode de réalisation, les ensembles de caractéristiques de réflexion optique de référence comprenant :

- des tables-r de référence de classe R1, R2, R3, R4, C1, C2, N1, N2, N2, N4, W1, W2, W3, et/ou W4, et/ou
- des tables-r mesurées expérimentalement.

Selon un mode de réalisation, les ensembles de caractéristiques de réflexion optique virtuelles sont des tables-r virtuelles, et, pour la génération de plusieurs cartes de luminance virtuelles $L_{v1}$, $L_{v2}$,..., $L_{vD}$, encore appelées cartes propres, le module de détermination est configuré pour appliquer, pour chaque table-r virtuelle, et pour chaque point P de la zone de la voie de circulation dont l'image est acquise, l'équation :

$$L_p = \frac{1}{k}\sum_{i=1}^{N_S} \frac{r_{i,p} \cdot E_{i,p}}{\cos(\gamma_{i,p})^3}$$

à la configuration d'éclairage de l'installation d'éclairage en cours de fonctionnement,
où $N_S$ est le nombre de sources d'éclairage considérées pour le calcul, $\gamma_{i,p}$ est l'angle d'incidence de la ième source d'éclairage au point P,
k est une constante,
$L_p$ est la luminance au point P,
$r_{i,p}$ sont les coefficients de luminance réduits d'une table virtuelle,
$E_{i,p}$ sont les éclairements élémentaires dus à chaque source d'éclairage séparément au point P, calculés à partir de l'équation :

$$E_{i,p} = \sum_{i=1}^{N_S} \frac{I_{i,p} \cdot \cos(\gamma_{i,p})^3}{h^2}$$

où h est la hauteur de la source d'éclairage,
I est l'intensité émise par la ième source d'éclairage de l'installation d'éclairage en direction du point P.

Selon un mode de réalisation, la ou chaque source d'éclairage comprend une ou plusieurs LED.

Selon un mode de réalisation, l'installation d'éclairage comprend plusieurs luminaires, chaque luminaire comprenant une partie desdites sources d'éclairage de l'installation d'éclairage, chaque luminaire comprenant un dispositif de pilotage de l'alimentation des sources d'éclairage du luminaire.

Selon un mode de réalisation, les caractéristiques de luminance de référence comprennent au moins l'une des caractéristiques suivantes :

- la luminance moyenne minimale de la voie de circulation ;
- l'uniformité générale en luminance minimale de la voie de circulation ; et
- l'uniformité longitudinale en luminance minimale de la voie de circulation.

Selon un mode de réalisation, le module de détermination d'un ensemble de caractéristiques de réflexion optique est configuré pour déterminer plusieurs tables-r de la voie de circulation en fonction de plusieurs types d'usager aptes à circuler sur ladite voie de circulation à laquelle sont associés différents angles d'observation de la voie de circulation, le module de commande étant configuré pour, pour un type d'usager déterminé qui circule sur la voie de circulation :

- sélectionner la table-r déterminée dont l'angle d'observation associé correspond au type d'usager déterminé, et
- commander au moins une partie des sources d'éclairage de l'installation d'éclairage, en utilisant la table-r déterminée sélectionnée.

L'invention concerne également un procédé de gestion d'au moins une installation d'éclairage agencée pour éclairer une voie de circulation, selon la revendication 11.

Selon un mode de réalisation, l'étape de commande des sources d'éclairage est réalisée en fonction aussi d'un type d'usager qui circule sur la voie de circulation.

**BREVE DESCRIPTION DES DESSINS**

D'autres caractéristiques et avantages de l'invention ressortiront encore de la description qui suit, laquelle est purement illustrative et non limitative et doit être lue en regard des dessins annexés, sur lesquels :

- la Figure 1 est une vue schématique d'un système de gestion d'installation d'éclairage configuré pour éclairer une voie de circulation selon un mode de réalisation de l'invention ;
- la Figure 2 est une représentation schématique illustrant plusieurs étapes pour la génération d'une table-r d'une voie de circulation, telle que celle représentée en Figure 1, qui peuvent être mises en œuvre par le système d'installation d'éclairage ;
- la Figure 3 est une représentation schématique d'angles utiles pour une installation d'éclairage de voie de circulation ;
- la Figure 4 est un graphique en pourcentage de la médiane de l'erreur quadratique moyenne relative RRMSE pour un mode de réalisation de l'invention ;
- la Figure 5A est un tableau correspondant à la table-r R1 établie par la CIE, utilisée dans un mode de réalisation de l'invention comme table-r de référence pour le calcul de tables-r virtuelles ;
- la Figure 5B est un tableau correspondant à la table-r R2 établie par la CIE, utilisée dans un mode de réalisation de l'invention comme table-r de référence pour le calcul de tables-r virtuelles ;
- la Figure 5C est un tableau correspondant à la table-r R3 établie par la CIE, utilisée dans un mode de réalisation de l'invention comme table-r de référence pour le calcul de tables-r virtuelles ;
- la Figure 5D est un tableau correspondant à la table-r R4 établie par la CIE, utilisée dans un mode de réalisation de l'invention comme table-r de référence pour le calcul de tables-r virtuelles ;
- la Figure 5E est un tableau correspondant à la table-r C1 établie par la CIE, utilisée dans un mode de réalisation de l'invention comme table-r de référence pour le calcul de tables-r virtuelles ;
- la Figure 5F est un tableau correspondant à la table-r C2 établie par la CIE, utilisée dans un mode de réalisation de l'invention comme table-r de référence pour le calcul de tables-r virtuelles ;
- la Figure 5G est un tableau correspondant à la table-r N1 établie par la CIE, utilisée dans un mode de réalisation de l'invention comme table-r de référence pour le calcul de tables-r virtuelles ;
- la Figure 5H est un tableau correspondant à la table-r N2 établie par la CIE, utilisée dans un mode de réalisation de l'invention comme table-r de référence pour le calcul de tables-r virtuelles ;
- la Figure 5I est un tableau correspondant à la table-r N3 établie par la CIE, utilisée dans un mode de réalisation de l'invention comme table-r de référence pour le calcul de tables-r virtuelles ;
- la Figure 5J est un tableau correspondant à la table-r N4 établie par la CIE, utilisée dans un mode de réalisation de l'invention comme table-r de référence pour le calcul de tables-r virtuelles ;
- la Figure 5K est un tableau correspondant à la table-r W1 établie par la CIE, utilisée dans un mode de réalisation de l'invention comme table-r de référence pour le calcul de tables-r virtuelles ;
- la Figure 5L est un tableau correspondant à la table-r W2 établie par la CIE, utilisée dans un mode de réalisation de l'invention comme table-r de référence pour le calcul de tables-r virtuelles ;

- la Figure 5M est un tableau correspondant à la table-r W3 établie par la CIE, utilisée dans un mode de réalisation de l'invention comme table-r de référence pour le calcul de tables-r virtuelles ;

- la Figure 5N est un tableau correspondant à la table-r W4 établie par la CIE, utilisée dans un mode de réalisation de l'invention comme table-r de référence pour le calcul de tables-r virtuelles ;

- la Figure 6A est un exemple de table-r virtuelle, notée $r_{v1}$, obtenue à l'aide des tables-r de référence et de tables-r mesurées expérimentalement ;

- la Figure 6B est un exemple de table-r virtuelle, notée $r_{v2}$, obtenue à l'aide des tables-r de référence et de tables-r mesurées expérimentalement ;

- la Figure 7A est un exemple de carte de luminance virtuelle, notée Lv1, obtenue à partir de tables-r virtuelles et de données de photométrie de l'installation d'éclairage en cours de fonctionnement ;

- la Figure 7B est un exemple de carte de luminance virtuelle, notée Lv2, obtenue à partir de tables-r virtuelles et de données de photométrie de l'installation d'éclairage en cours de fonctionnement ;

- la Figure 8 est un exemple de table-r estimée pour la voie de circulation éclairée par l'installation d'éclairage, à l'aide d'une image en luminance acquise d'une zone de ladite voie et de cartes de luminance virtuelles.

## DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

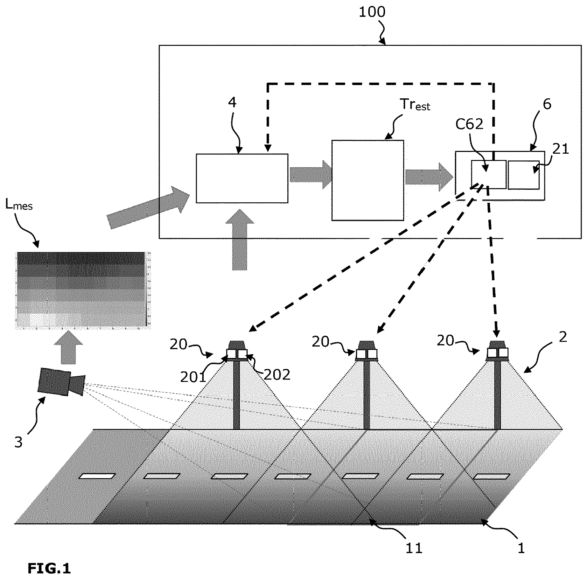

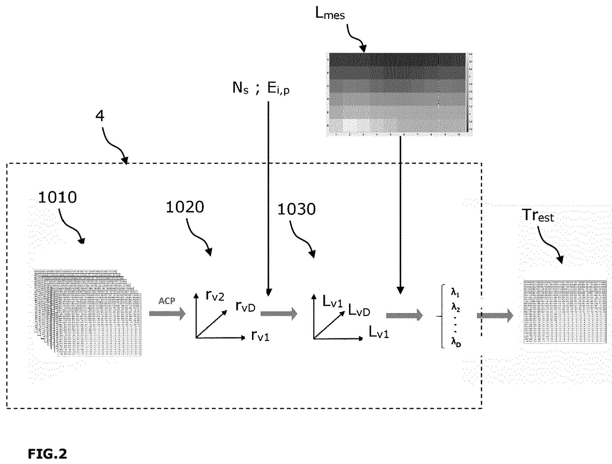

En référence aux Figures 1 et 2, on a représenté un système de gestion d'une installation d'éclairage. L'installation d'éclairage est agencée pour éclairer la voie de circulation 1. Comme détaillé ci-après, le système de gestion d'installation d'éclairage est adaptatif du fait que l'éclairage (nombre de sources d'éclairage alimentées, l'alimentation des sources d'éclairage, la répartition spatiale de l'intensité lumineuse de l'installation) peut être adapté en fonction des caractéristiques de l'objet et/ou de l'environnement de l'objet à éclairer.

Propriétés de réflexion optique

La voie de circulation présente différentes propriétés de réflexion optique. Selon un mode de réalisation, les propriétés de réflexion optique comprennent des valeurs d'un coefficient de luminance réduit r pour différentes valeurs d'angles comme détaillé ci-après. Ces données sont organisées dans une table, ou matrice, appelée table-r.

Comme expliqué ci-après, le système de gestion est configuré pour retrouver des caractéristiques optiques de réflexion d'une voie de circulation. En particulier, le système de gestion permet d'estimer une table-r, notée $Tr_{est}$, de la voie de circulation à partir d'une image en luminance $L_{mes}$ de la zone 11 de la voie de circulation 1 dont l'image a été acquise par un dispositif 3 d'acquisition d'image et de données de photométrie des sources d'éclairage de l'installation d'éclairage en cours d'utilisation.

Les propriétés de réflexion optiques de la voie de circulation peuvent être décrites sous forme de tableaux de coefficients de luminance q. Les coefficients de luminance q relient directement l'éclairement E (lumière incidente, en lux), appelé usuellement éclairement horizontal, généré par une source d'éclairage à la luminance L (lumière réfléchie par la voie de circulation en candela par $m^2$) par l'équation (I) :

$$q = \frac{L}{E}$$

Les coefficients de luminance q sont fonctions de :

- l'angle d'observation $\alpha$ par un observateur d'un point éclairé par la source d'éclairage. $\alpha$ est l'angle mesuré entre la direction d'observation et le plan horizontal.
- l'angle $\beta$ entre le plan d'incidence de la lumière de la source d'éclairage et le plan d'observation. Autrement dit, $\beta$ est l'angle azimut mesuré entre deux plans verticaux contenant l'un la direction d'observation et l'autre la direction d'éclairage.
- l'angle d'incidence $\gamma$ de la lumière (plus particulièrement sa tangente : tan $\gamma$). Autrement dit $\gamma$ est mesuré entre la verticale et la direction d'éclairage.

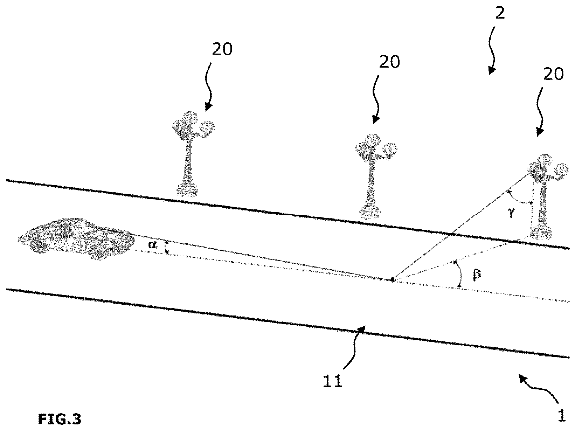

Ces angles sont illustrés à la Figure 3.

Pour une zone de route normalisée entre 60 et 160 mètres devant un conducteur et une hauteur d'observation de 1,5 mètre, les variations de q en fonction de l'angle $\alpha$ sont négligeables et l'angle $\alpha$ est considéré comme égal à 1°. L'angle $\alpha$ étant défini, le coefficient de luminance q dépend de $\beta$ et $\gamma$ (plus particulièrement tan $\gamma$).

Par simplification, le coefficient de luminance réduit r est utilisé à la place du coefficient de luminance q, selon l'équation (II) :

$$r = k \,.\, q \,.\, cos(\gamma)^3$$

k étant une constante ($10^4$).

Usuellement $\beta$ est échantillonné entre 0° and 180° sur 20 points, et tan $\gamma$ est échantillonné entre 0 et 12 ($0° < \gamma < 86°$) sur 29 points. La table-r peut ainsi être présentée sous forme d'une matrice de dimension 29x20.

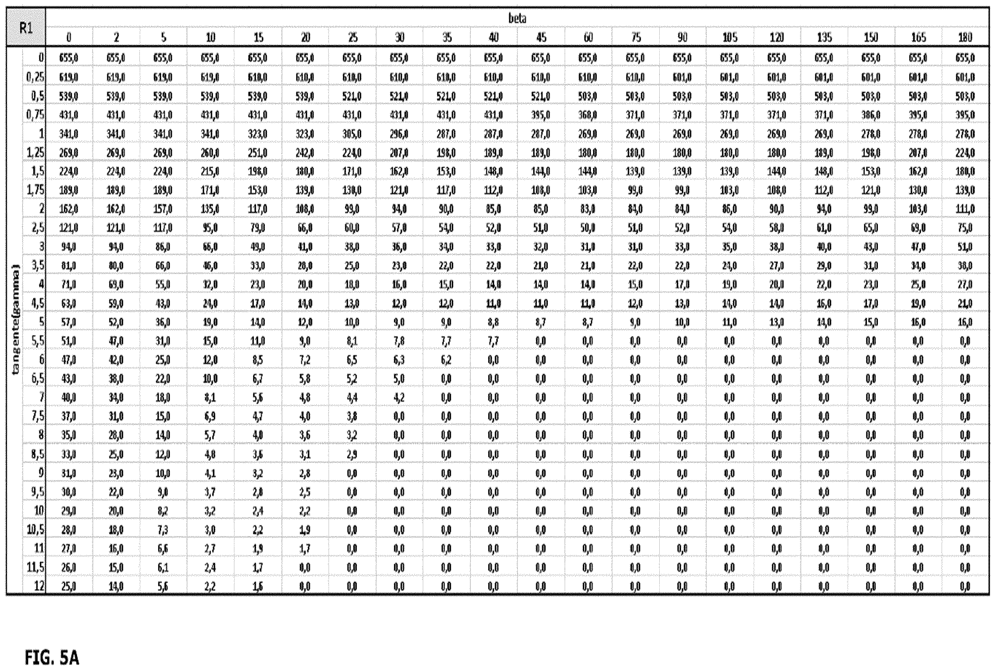

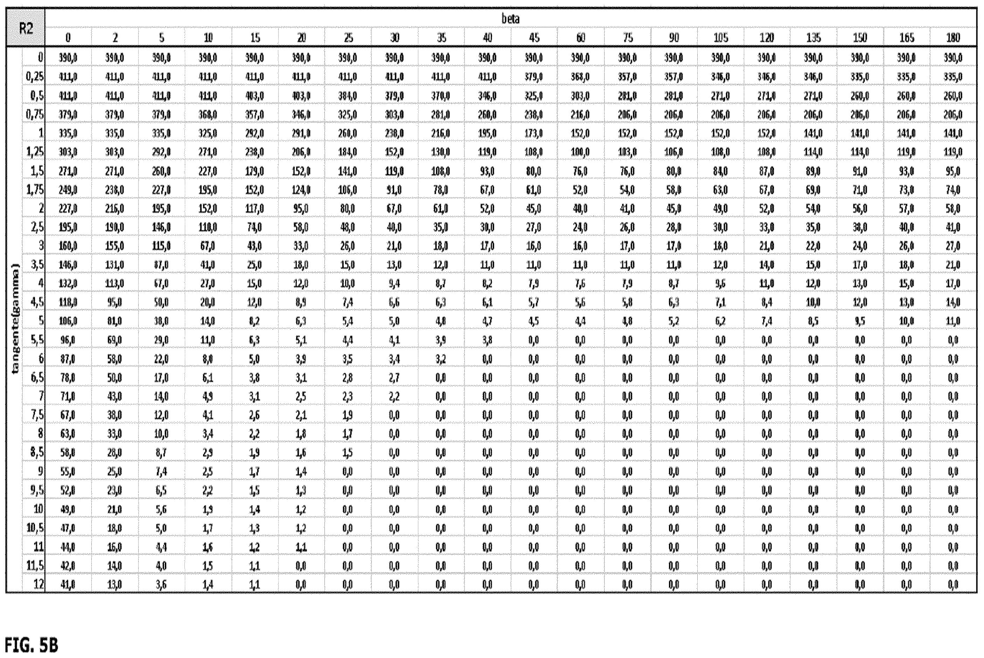

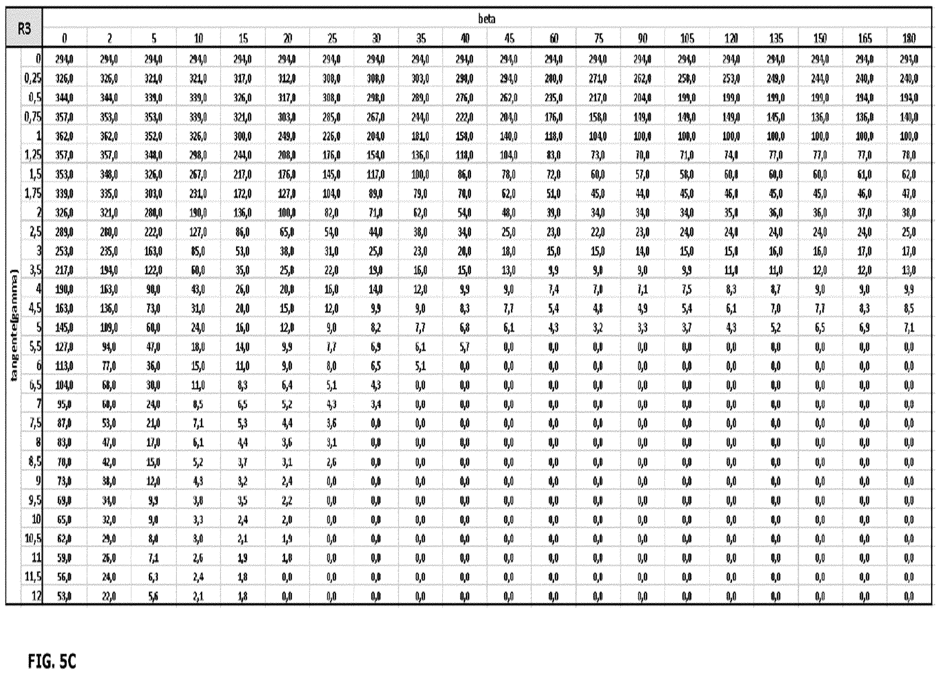

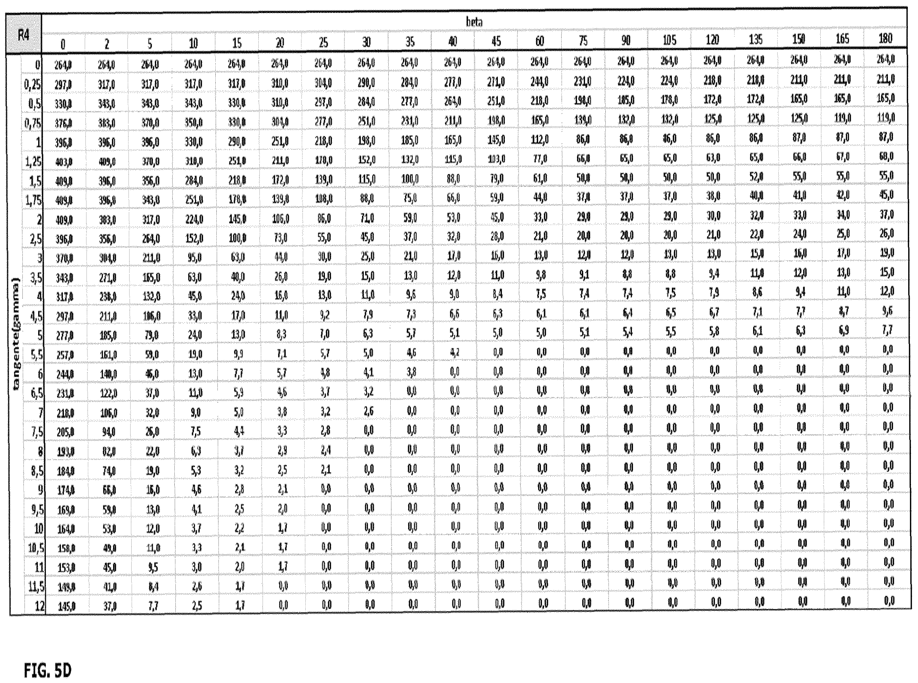

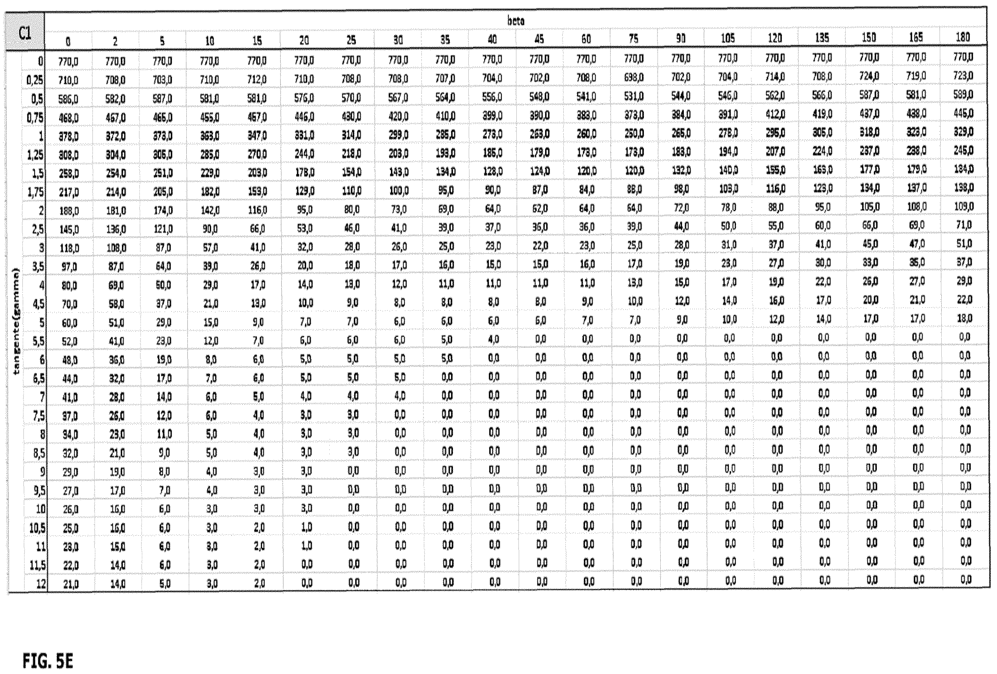

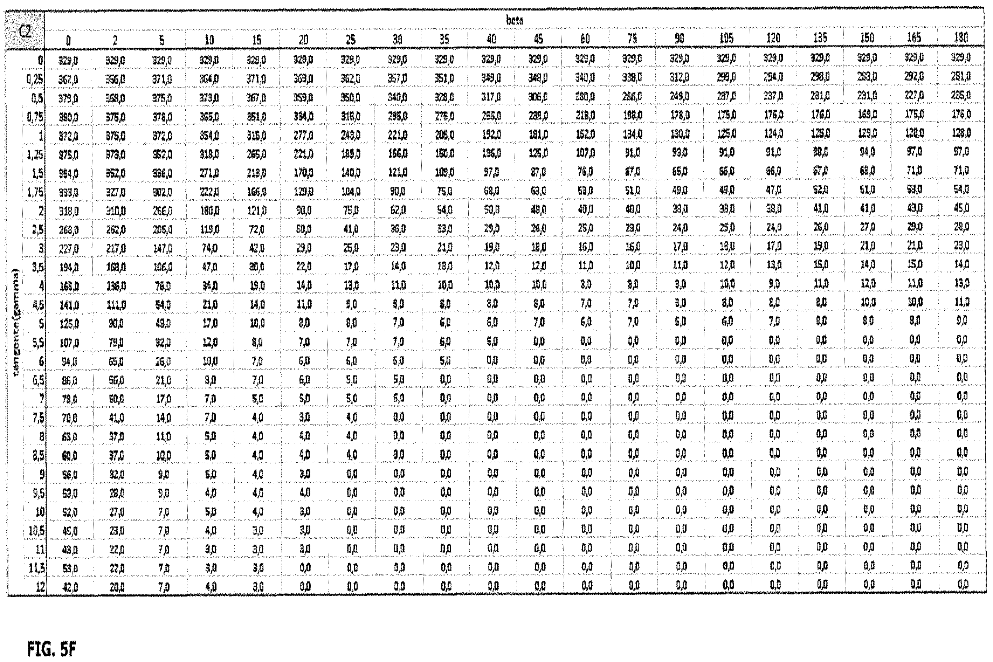

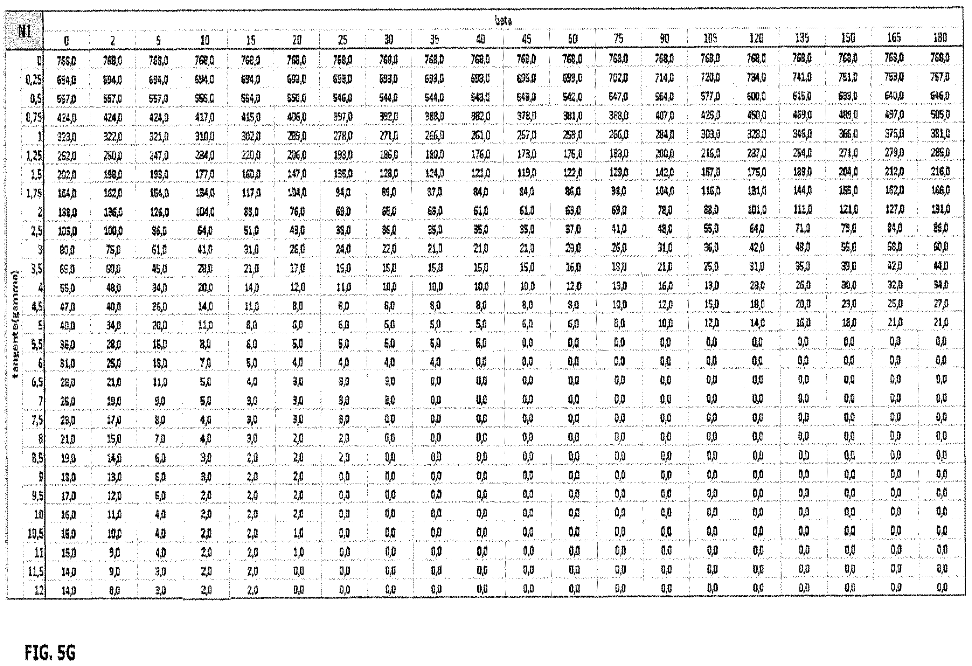

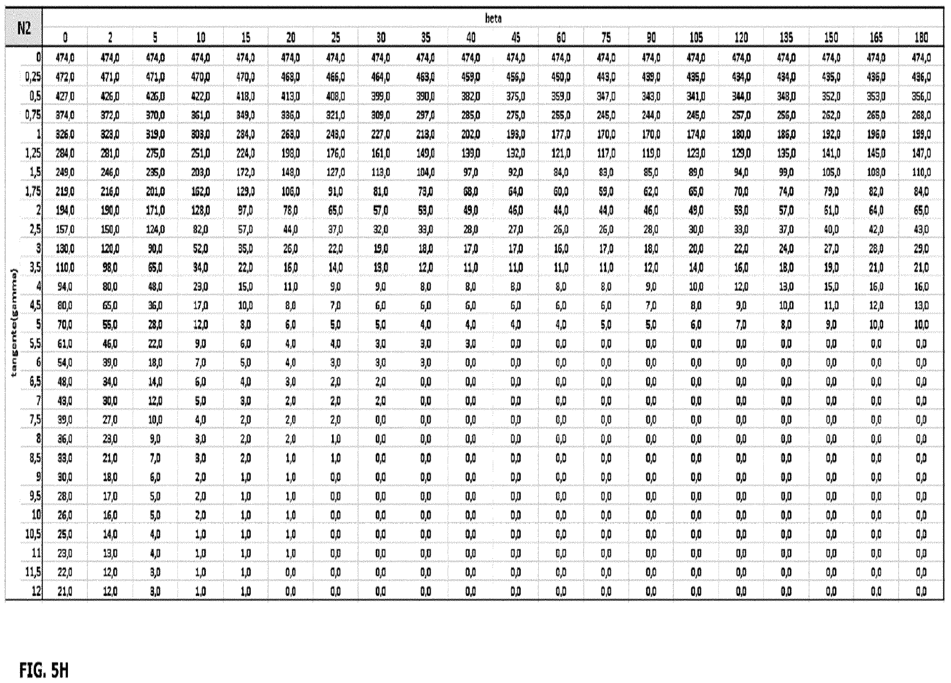

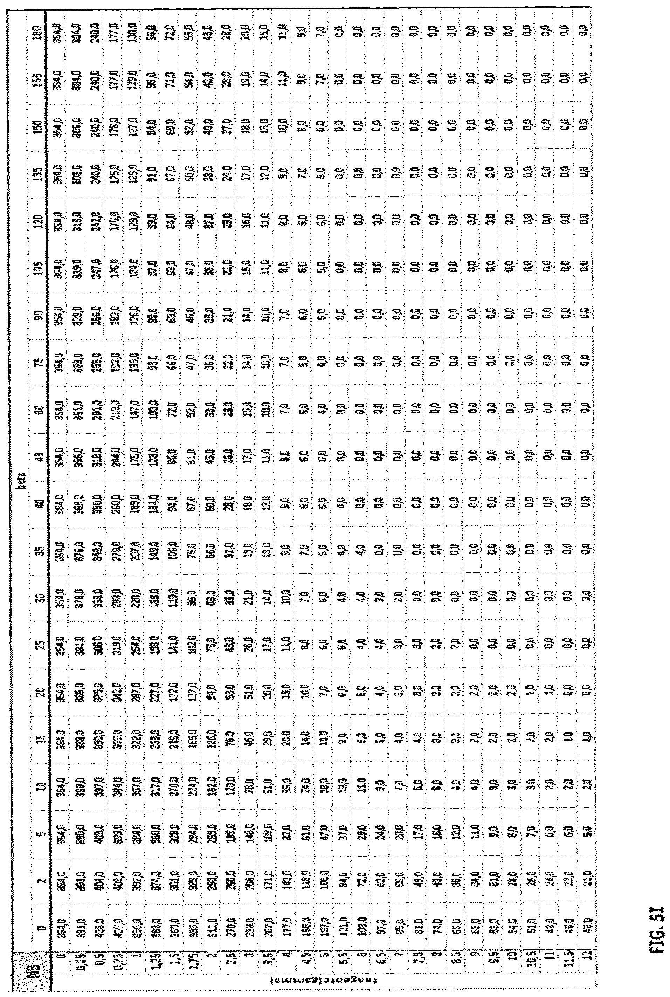

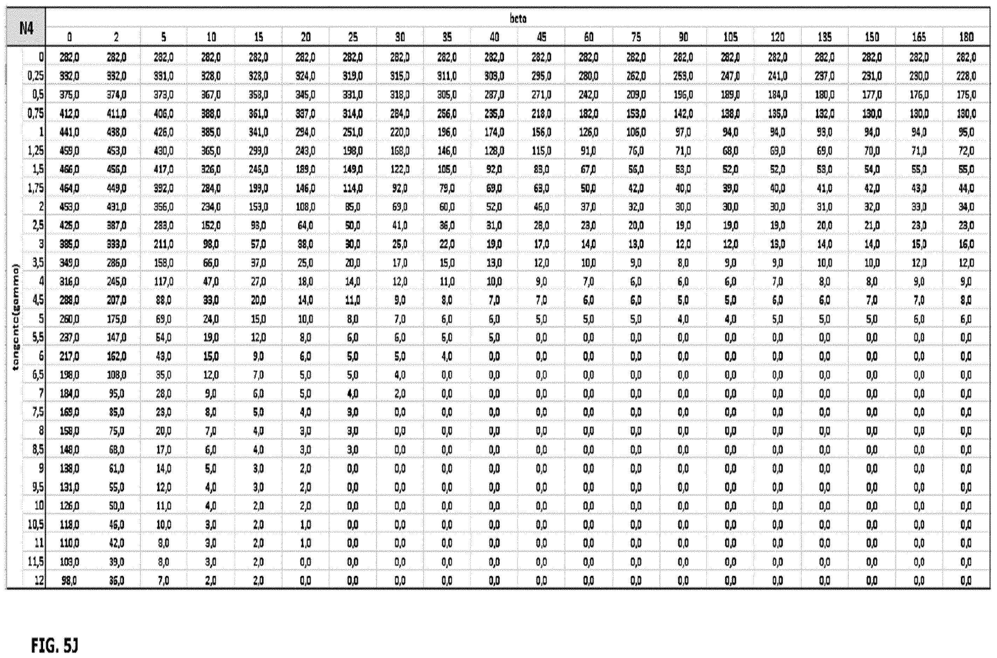

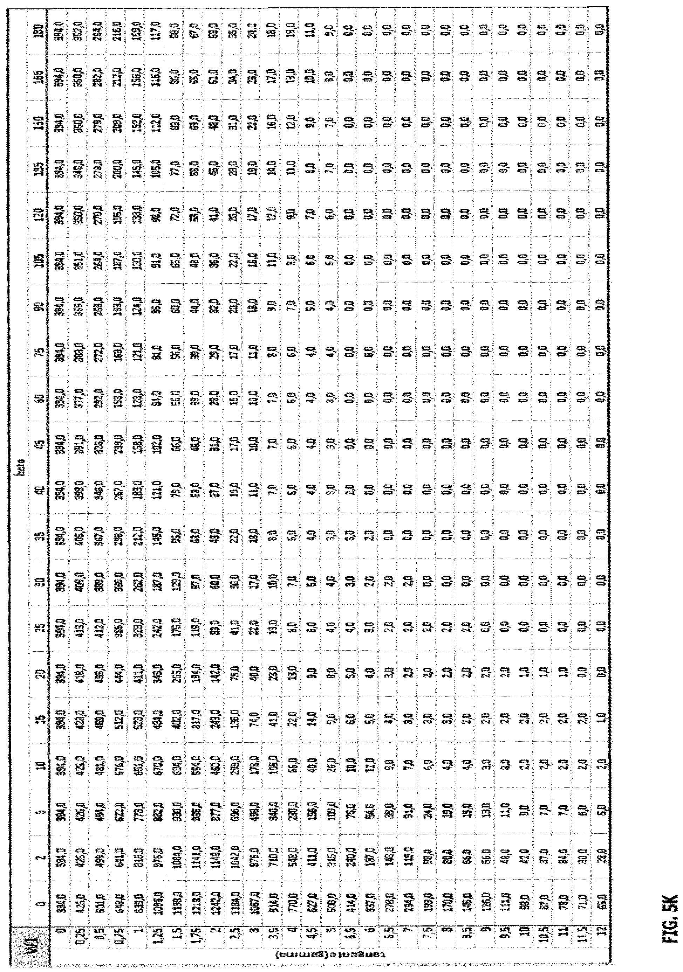

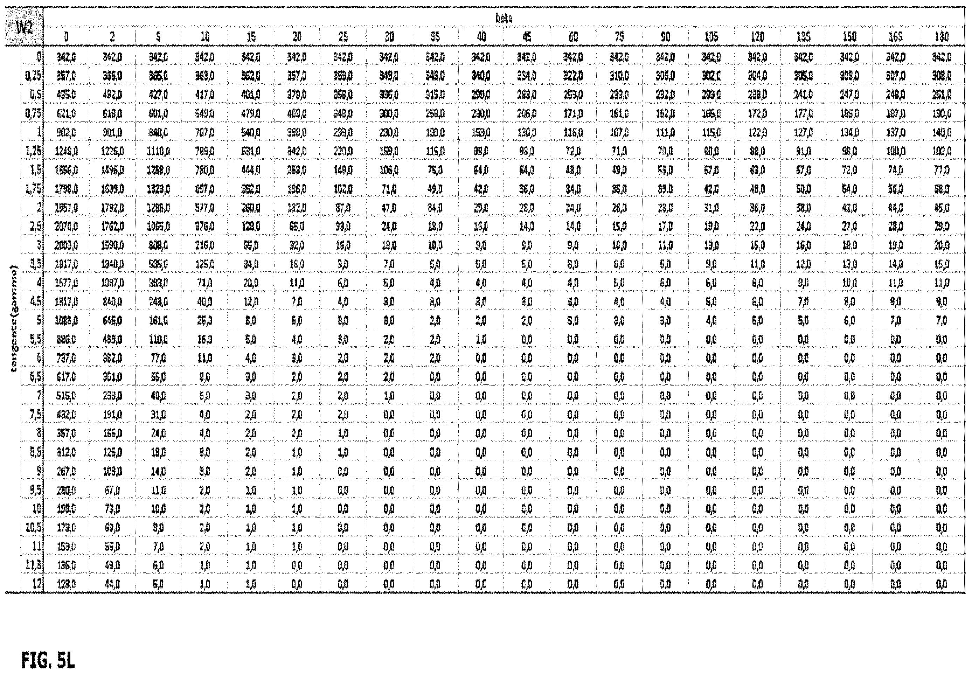

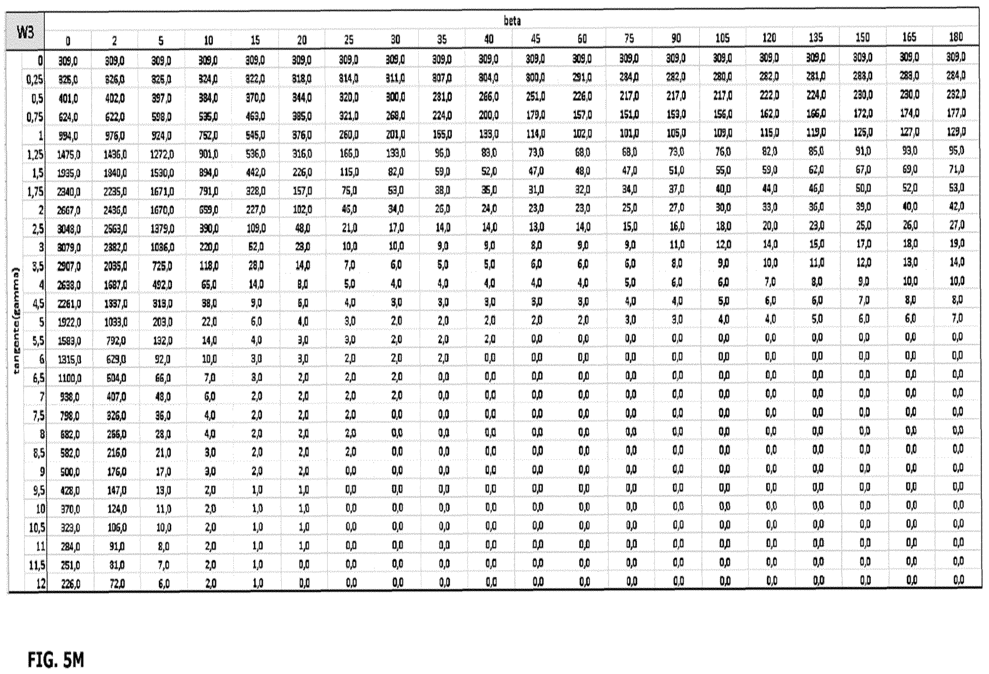

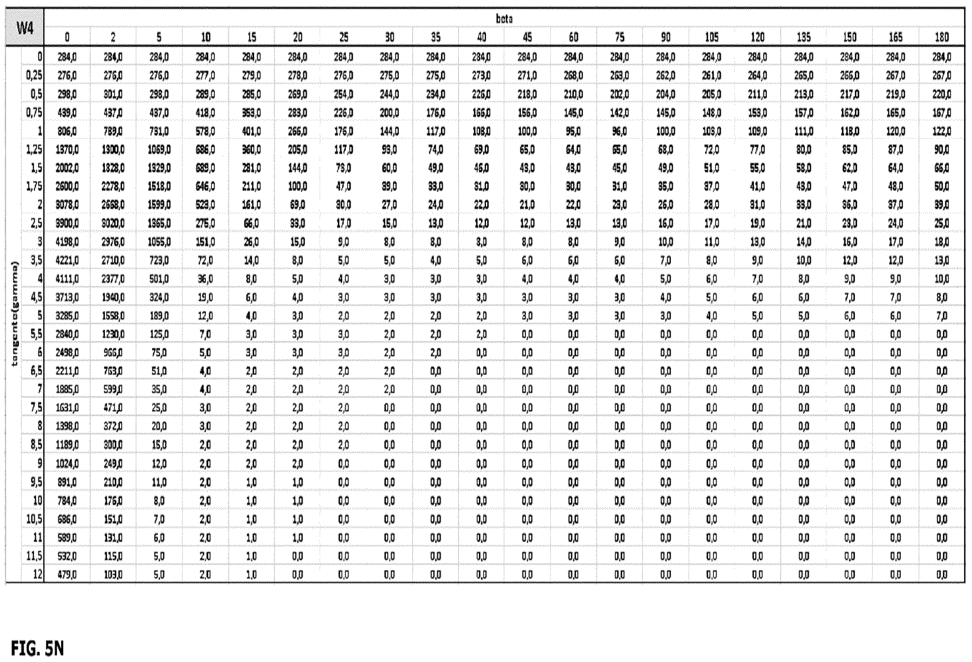

Un exemple de table-r de classe R1, de dimension 29x20, définie par la Commission Internationale de l'Eclairage (CIE) est donné en Figure 5A.

De manière générale, les caractéristiques de réflexion optique peuvent aussi être présentées sous forme de fonctions de distribution de réflexion bidirectionnelle (BRDF en anglais pour Bi-directional Reflectance Distribution Function). Une table-r est usuellement considérée comme une partie des fonctions de distribution de réflexion bidirectionnelle.

Une table-r décrit des propriétés de réflexion optique d'une surface, telle qu'une voie de circulation, sous forme d'une matrice. La table-r relie la lumière incidente, encore appelée usuellement éclairement horizontal, produit par une source d'éclairage, à la lumière réfléchie (la luminance) par la surface éclairée vers l'œil d'un observateur, par exemple un conducteur, pour un angle d'observation donné.

Connaissant la distribution de l'intensité lumineuse d'une source d'éclairage ou d'un ensemble de sources d'éclairage, c'est-à-dire l'intensité lumineuse émise selon différentes directions ou angles par la source d'éclairage ou l'ensemble de source d'éclairage pour une alimentation donnée (puissance, tension et/ou intensité), et son emplacement (position dans l'espace), ce qui correspond à une photométrie donnée comme détaillé ci-après, il est possible de calculer la luminance (intensité lumineuse réfléchie) de la zone éclairée de la voie de circulation et d'en déduire des critères de qualité d'éclairage de la voie de circulation liés à sa clarté (luminance moyenne de la route) et à son homogénéité (uniformités générale et longitudinale).

Des standards de tables-r ont été définis par la Commission Internationale de l'Eclairage (CIE).

Sur la base d'une étude statistique des caractéristiques photométriques de revêtements de chaussée, la CIE a défini différentes classes de revêtements, en fonction de la valeur du coefficient de spécularité S1, à savoir :

- les classes C, R, N qui représentent des revêtements standards pour un état de surface sec, et
- les classes W qui représentent des revêtements standards pour un état de surface mouillé.

L'Homme du Métier a ainsi accès à des exemples de table-r de référence (ou standard) dans le document "CIE 144:2001 Road surface and road marking reflection characteristics standard by Commission Internationale de L'Eclairage, 01/01/2001" ISBN(s):9783901906121, par exemple disponible à l'adresse suivante : https://www.techstreet.com/cie/standards/cie-144-2001?product_id=1210062

Les tables-r définies par la CIE et notées R1-R4, C1-C2, N1-N4 et W1-W4 sont présentées aux Figures 5A - 5N.

La Commission internationale de l'éclairage (CIE) a défini des coefficients de clarté Q0 et de spécularité S1 pour résumer le pouvoir de réflexion des surfaces routières. Les coefficients de clarté Q0 et de spécularité S1 se déduisent des mesures du coefficient de luminance.

Un revêtement réfléchit la lumière suivant un modèle où contribuent à la fois des composantes spéculaires (effet miroir) et des composantes diffuses.

Le coefficient de luminance moyenne Q0 décrit la clarté du revêtement. Le coefficient de spécularité S1 décrit le caractère spéculaire du revêtement :

$$Q0 = \frac{1}{\Omega}\int_{\Omega} q \, d\Omega \quad \text{et} \quad S1 = \frac{r(\tan\gamma=2,\beta=0)}{r(\tan\gamma=0,\beta=0)}$$

où $\Omega$ est l'angle solide contenant toutes les directions de la lumière incidente.

Les tables-r de référence peuvent se différencier les unes des autres par ces coefficients Q0 et S1.

Luminaire

Dans l'exemple illustré aux figures, l'installation d'éclairage 2 comprend plusieurs luminaires 20. La description s'applique aussi au cas où l'installation d'éclairage comprend un seul luminaire 20.

Les luminaires 20 sont agencés pour éclairer la voie de circulation 1. La voie de circulation peut encore être appelée chaussée, route, etc ... La voie de circulation peut également être composée de plusieurs voies de circulation. Usuellement, la voie de circulation peut être parcourue par des piétons, des cyclistes et/ou des conducteurs de véhicules motorisés tels que des voitures.

Chaque luminaire 20 comprend une structure support, telle qu'un mât, et des sources d'éclairage portées par le mât. Les sources d'éclairage comprennent au moins deux sources d'éclairage dont l'alimentation électrique est pilotable pour permettre de faire varier la valeur d'intensité lumineuse émise de chaque source d'éclairage (c'est-à-dire l'intensité incidente ou éclairage).

Dans l'exemple illustré aux figures, chaque source d'éclairage est une LED, mais la description s'applique aussi à d'autres sources d'éclairage dont l'alimentation électrique est pilotable, telle que des sources d'éclairage à plasma. En modifiant l'alimentation électrique de la source d'éclairage il est possible de modifier l'intensité lumineuse émise par la source d'éclairage.

Selon un aspect particulier, le luminaire inclut un dispositif tel qu'un module électronique pour le pilotage de l'alimentation des LED (encore appelé driver en anglais). Les sources d'éclairage peuvent être associées à des optiques, telles que des lentilles pour les LED. On peut prévoir que le luminaire comprend une optique par source d'éclairage ou par groupe de source d'éclairage.

Photométrie

A chaque luminaire 20 est associée une pluralité de photométries. Dans l'exemple illustré à la Figure 1, on a schématisé pour un luminaire donné 20 une première photométrie 201 et une deuxième photométrie 202.

Chaque photométrie est définie par :

- une LED ou un ensemble de LED, c'est-à-dire une ou plusieurs LED, la position de la LED ou de l'ensemble de LED étant connue par rapport à la zone de la voie de circulation éclairée dont l'image est acquise par le dispositif d'acquisition d'images ; (Chaque LED ou ensemble de LEDs correspondant est identifié)
- une valeur d'intensité lumineuse émise par la LED ou l'ensemble de LED pour différentes directions, c'est-à-dire pour différents angles d'émission (centrés sur la position de la LED ou de l'ensemble de LED correspondante). A chaque direction est associée une valeur d'intensité lumineuse.

Un ensemble de LED d'une photométrie peut être considéré comme une source ponctuelle. Dans la suite de la description, il est fait référence à des photométries définies avec un ensemble de LED, mais la description s'applique aussi au cas de photométries définies avec une seule LED.

Selon un mode de réalisation, ladite valeur d'intensité lumineuse est une valeur d'intensité lumineuse relative en candela par kilo lumen (cd/klm), c'est-à-dire l'intensité lumineuse émise par l'ensemble de LED pour 1000 lumen. L'unité de traitement 100, présentée ci-après, peut comprendre un fichier de photométrie qui donne pour différentes combinaisons de valeur d'angle noté C (de 0 à 360°), et de valeurs d'angle $\gamma$ (de 0 à 180°), l'intensité lumineuse que l'ensemble de LED peut émettre pour 1000 lumen (cd/klm) dans la direction correspondant à cette combinaison d'angles. L'angle C (non représenté) est l'angle que fait, en projection dans un plan horizontal, la direction d'émission (direction d'incidence) avec un axe de référence dans ledit plan horizontal.

Pour un angle/direction donné, l'intensité lumineuse émise par l'ensemble de LED dépend de l'alimentation (intensité) électrique qui lui est fournie. A titre d'exemple, un ensemble de LED d'une photométrie peut être configuré pour émettre 100 kilo lumen lorsque ledit ensemble de LED est alimenté avec une puissance électrique maximale de fonctionnement. Il est alors possible d'obtenir une intensité lumineuse souhaitée pour une photométrie donnée en adaptant la puissance (tension et/ou intensité) fournie à l'ensemble de LED de la photométrie qui permet d'atteindre cette intensité lumineuse souhaitée.

On peut prévoir que la position de chaque LED et la zone à éclairer soit connue dans le référentiel terrestre.

On peut prévoir qu'une partie des LED d'une photométrie soit commune à une autre photométrie de ce luminaire.

Dans la description qui suit chaque photométrie comprend un groupe de LED, mais la description s'applique aussi au cas où une photométrie comprend une seule LED ou une autre source d'éclairage commandable dont l'alimentation est pilotable.

Les LED d'une photométrie peuvent être alimentées indépendamment des LED d'une autre photométrie du luminaire. Ainsi on peut prévoir d'éteindre les LED d'une photométrie et d'allumer les LED d'une autre photométrie.

A titre d'exemple, la première photométrie 201 comprend 48 LED et la deuxième photométrie 202 comprend 48 autres LED pilotables indépendamment des 48 LED de la première photométrie.

On peut aussi prévoir d'appliquer un pourcentage donné de l'intensité lumineuse totale, par exemple 80%, d'une première photométrie 201 et d'appliquer un pourcentage différent à l'autre photométrie 202. Le pourcentage peut s'appliquer sur le nombre de LED allumées de la photométrie.

On peut aussi prévoir d'appliquer une puissance (ou intensité ou courant) d'alimentation donnée à un groupe de LED et une autre puissance (ou intensité ou courant) à un autre groupe de LED.

Différentes combinaisons de commande des LED de différentes photométries peuvent aussi être mises en œuvre. Les différentes photométries disponibles de chaque luminaire et les différentes combinaisons possibles de ces photométries au sein d'un même luminaire et/ou pour plusieurs luminaires, associées à différentes puissances, tension ou intensité électriques, qui peuvent être appliquées aux sources d'éclairages desdites photométries ou combinaison de photométries, forment autant de situations d'éclairage différentes, encore appelées scenarii.

La géométrie de positionnement des luminaires et des sources d'éclairage de l'installation par rapport à la voie de circulation est connue du système de gestion. Des données correspondantes de position peuvent ainsi être stockées dans une mémoire d'une unité de traitement 100 présentée ci-après. En particulier, le système de gestion connait la position dans l'espace par rapport à la voie de circulation 1 des ensembles de source d'éclairage des photométries des luminaires.

Selon un mode de réalisation, chaque luminaire comprend un module (ou dispositif) de pilotage des LED d'éclairage que le luminaire embarque. Le module de pilotage permet de piloter l'alimentation des LED (puissance, tension et/ou intensité). Le module de pilotage permet de commander une alimentation différente pour chaque LED ou groupe de LED pour pouvoir régler l'intensité du flux lumineux du luminaire et de préférence la répartition spatiale (et donc l'homogénéité ou uniformité) du flux lumineux du luminaire.

L'utilisation de LED comme sources d'éclairage des luminaires, permet de moduler efficacement l'éclairage, tant en quantité (flux total sortant) qu'en répartition spatiale sur la voie de circulation (uniformités). Le ou les luminaires à LED peuvent être associés à des capteurs, tels que des capteurs de détection d'usager de sorte que le système de gestion peut être configuré pour piloter la source d'éclairage du ou de chaque luminaire en fonction des données fournies par un ou des capteurs.

Dispositif d'acquisition d'image

Le système de gestion comprend un dispositif 3 d'acquisition d'image. Le dispositif 3 d'acquisition d'image permet d'acquérir une image de la zone 11 de la voie de circulation 1 et de générer une image en luminance $L_{mes}$ (cd/m2) correspondante.

A cet effet, le dispositif 3 d'acquisition d'image est préalablement étalonné en luminance sur un banc optique en laboratoire pour fournir, pour un ou différents réglages du dispositif 3 d'acquisition d'image, la correspondance entre les différentes valeurs de niveau de gris que peuvent prendre les points d'une image acquise et des valeurs en luminance.

L'étalonnage s'effectue en déterminant les paramètres d'une équation qui relie les valeurs de niveau de gris aux valeurs de luminance. L'équation peut être du type $y = Ax + B$, avec y la valeur de luminance, x la valeur de niveau de gris et A et B les paramètres à calculer.

Les points de l'image correspondent à la zone de la voie dont l'image a été acquise et l'image en luminance correspond à l'ensemble des valeurs de luminance (intensité lumineuse réfléchie) associées aux différents points.

Dans la représentation de l'image $L_{mes}$ à la Figure 1, la graduation de l'axe des abscisses et la graduation de l'axe des ordonnées correspondent à des coordonnées des points (points de mesure de luminance) de la zone imagée de la voie de circulation imagée. L'échelle de couleur à droite de l'image indique un niveau de luminance (candela/m2).

Le dispositif d'acquisition d'image peut ainsi fournir des images en luminance, encore appelées cartes de luminance mesurées. Préférentiellement, la luminance de la voie de circulation éclairée par les luminaires 20 de l'installation d'éclairage 2 est mesurée en continu.

Comme détaillé ci-après, la carte de luminance $L_{mes}$ obtenue est ensuite analysée en fonction des données photométriques et de la position de chaque luminaire 20 pour déterminer une table-r de la zone 11 de la voie de circulation 1 éclairée par l'installation d'éclairage.

Comme rappelé ci-dessus, le système de gestion comprend une unité de traitement 100. L'unité de traitement 100 comprend une mémoire dans laquelle sont mémorisées des données de photométrie de chaque luminaire.

L'unité de traitement 100 comprend aussi un module 4 de détermination de caractéristiques de réflexion optique. Dans l'exemple illustré aux figures, le module 4 de détermination de caractéristiques de réflexion optique est un module de détermination de table-r qui permet de construire (générer) une table-r représentative des propriétés optiques d'une zone 11 de la voie de circulation 1 éclairée par l'installation d'éclairage, comme expliqué ci-après.

Le module 4 de détermination de table-r est configuré pour déterminer, de préférence en temps réel, la table-r de la zone 11 de la voie de circulation, et ce en fonction des données de photométrie en cours d'utilisation des luminaires, et de l'image en luminance $L_{mes}$ mesurée.

Comme rappelé ci-dessus, l'unité de traitement 100 comprend aussi un module de commande 6 configuré pour transmettre des consignes aux luminaires de l'installation d'éclairage pour commander des ensembles de source d'éclairage associés.

L'unité de traitement 100 et en particulier le module 4 de détermination de table-r présenté ci-après a accès aux données de photométrie avec lesquelles les luminaires 20 sont en train de fonctionner.

Les données de photométries avec lesquelles chaque luminaire est en cours de fonctionnement peuvent être déterminées à partir des consignes du module de commande 6 transmises aux luminaires.

Table-r virtuelles

L'unité de traitement 100 comprend une base de tables-r, dites tables-r virtuelles, qui sont formées à partir de tables-r de référence, déjà connues, en appliquant à ces tables-r de référence une analyse par composante principale comme expliqué ci-après.

Par exemple les tables-r de référence peuvent être choisies parmi des tables-r de référence définies par la CIE. L'Homme du Métier à accès à des tables-r de référence par exemple dans la publication « CIE 144:2001 Road surface and road marking reflection characteristics standard by Commission Internationale de L'Eclairage, 01/01/2001 », telles que les tables de référence usuellement notées C1, C2, R1..R4, N1..N4, W1..W4.

Selon un mode de réalisation, on peut prévoir de prendre en tant que table de référence des tables mesurées expérimentalement.

Selon un mode de réalisation, les tables-r de référence comprennent 14 tables-r, définies par la CIE et fournies aux Figures 5A-5N.

Les tables-r de référence 1010 peuvent comprendre des tables précédemment mesurées réellement ou résultant d'une moyenne de tables mesurées. Les tables-r de référence utilisées pour former les tables-r virtuelles peuvent aussi comprendre des tables-r expérimentales par exemple mesurées avec un gonioréflectomètre.

Les tables-r de référence présentent différentes valeurs de coefficient de clarté Q0 et de coefficient de spécularité S1.

Comme illustré à la Figure 2, le module 4 de génération de table-r est configuré pour appliquer une analyse en composantes principales (ACP) à une pluralité de tables-r de référence 1010.

L'analyse en composantes principales de ces tables de référence 1010 permet d'obtenir des tables virtuelles 1020, encore appelées vecteurs propres $r_{v1}$, $r_{v2}$,..., $r_{vD}$. A titre d'exemple, on peut prévoir d'obtenir dix tables-r virtuelles.

L'ACP est une méthode de réduction de la dimensionnalité qui peut être utilisée pour réduire la dimensionnalité de grands ensembles de données, en transformant un grand ensemble de variables en un plus petit qui contient encore la majorité des informations du grand ensemble.

Préférentiellement, selon une première étape de standardisation de l'étendue des variables initiales, la moyenne de chaque variable (ou paramètre) est soustraite à ladite variable, afin que chacune des variables contribue de manière égale à l'analyse.

Ensuite, une matrice de covariance est calculée afin d'identifier les corrélations. Les vecteurs propres et les valeurs propres de la matrice de covariance sont calculés à l'aide d'un algorithme de décomposition en valeurs singulières (SVD) afin d'identifier les composantes principales.

En classant les vecteurs propres dans l'ordre de leurs valeurs propres, de la plus élevée à la plus faible, les composantes principales sont obtenues par ordre d'importance.

Organiser les informations en composantes principales de cette manière permet de réduire la dimensionnalité sans perdre beaucoup d'informations.

Dans l'exemple illustré aux figures, l'objectif est de réduire la dimensionnalité 580 (correspondant à la dimension 29x20 de chaque table-r) afin de résoudre plus aisément un système linéaire contenant un nombre d'équations correspondant au nombre de points NG de l'image en luminance.

La dimensionnalité de l'espace peut être choisie arbitrairement ou en se référant à une erreur de reconstruction de tables-r, en calculant l'erreur quadratique moyenne relative (RRMSE) par la formule :

$$RRMSE(\%) = 100.\sqrt{\frac{\sum_i\left(\frac{R_{ri}-R_{0i}}{R_{0i}}\right)^2}{N}}$$

avec $R_{ri}$ l'élément i non nul d'une table-r reconstruite à l'aide des coefficients de pondération $\lambda_1,\lambda_2...\lambda_D$ issus de l'analyse en composante principale et de la décomposition de la carte de luminance sur les cartes de luminance virtuelles selon la méthode détaillée ci-après,

$R_{0i}$ l'élément i non nul d'une des table-r de référence, notée $R_0$,

N le nombre d'éléments non nuls dans la table-r de référence $R_0$.

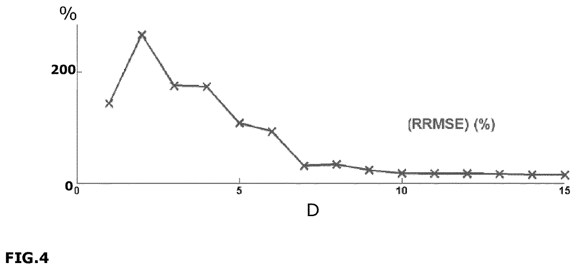

Une valeur RRMSE est obtenue pour chaque table-r de référence et pour chaque dimensionnalité de l'espace. La médiane de l'erreur RRMSE est tracée comme illustré par exemple à la Figure 4.

Pour avoir une grande précision décrivant la table-r à reconstruire, il est conservé un nombre D de vecteurs propres, par exemple D= 10, correspondant à un nombre de vecteurs pour lequel la médiane de RRMSE atteint un plateau. D est un entier supérieur à 0.

L'espace de fonctions de base peut ainsi présenter une dimensionnalité fixée à 10. Cela signifie qu'une table-r d'une zone d'une voie de circulation quelconque peut être représentées dans un espace D = 10 dimensions en conservant une grande précision.

En variante, on peut aussi choisir une valeur de dimension D par défaut.

Une table-r peut ainsi être décomposée sur une base de vecteurs propres selon l'équation:

$$R = \lambda_1 r_{v1} + \lambda_2 r_{v2} + \ldots + \lambda_D r_{vD}$$

$\lambda_1,..., \lambda_D$ étant des coefficients de pondération
$r_{v1}...r_{vD}$ étant les tables-r virtuelles (vecteur propres)

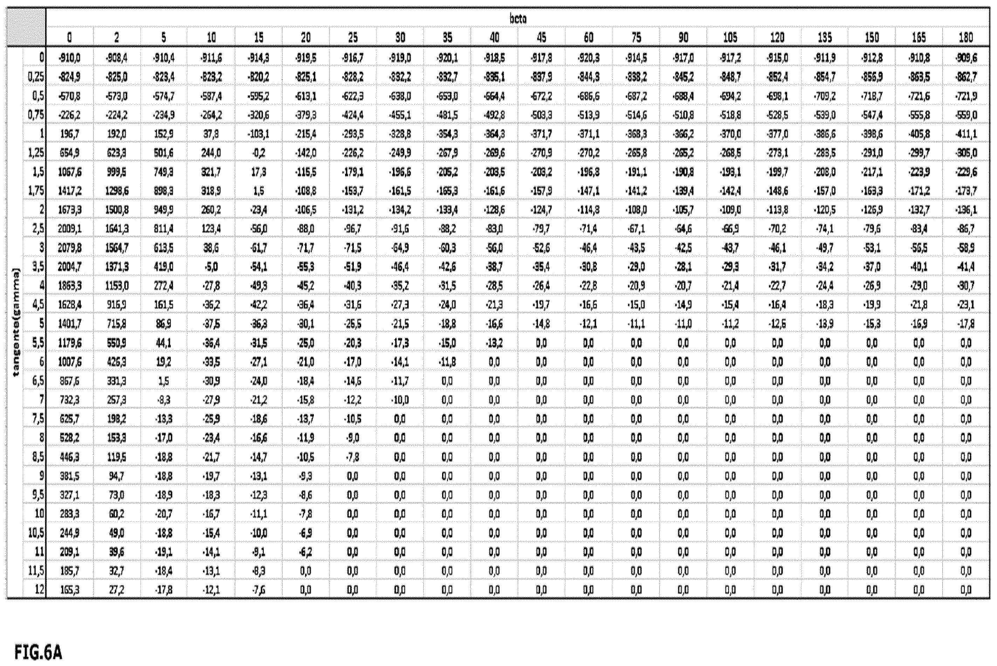

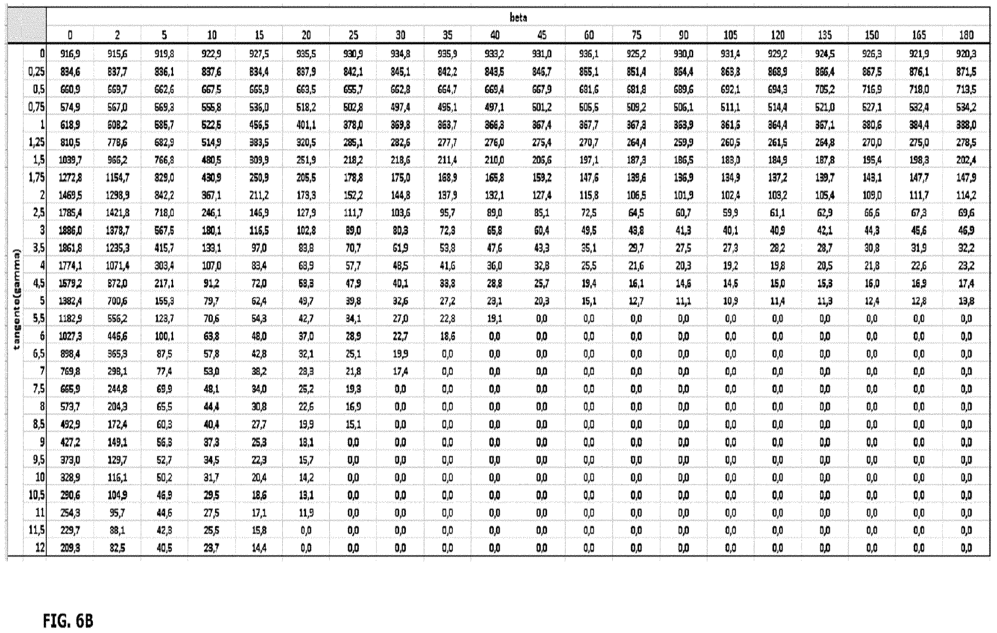

Un exemple de table-r virtuelles $r_{v1}$ et $r_{v2}$ est donné en Figure 6A et Figure 6B.

Eclairement et Luminance

Pour une intensité lumineuse de source d'éclairage I, et un point P de la voie de circulation à une position p, une carte d'éclairement horizontal peut être calculée avec l'équation suivante (III):

$$E_p = \sum_{i=1}^{N_S} E_{i,p} = \sum_{i=1}^{N_S} \frac{I_{i,p}.\cos(\gamma_{i,p})^3}{h^2}$$

où $E_p$ est l'éclairement horizontal total au point P,
$N_S$ est le nombre de sources d'éclairage considérées pour le calcul,
$E_{i,p}$ sont les éclairements élémentaires dus à chaque source d'éclairage séparément au point P,
$\gamma_{i,p}$ est l'angle d'incidence de la ième source d'éclairage au point P et h est la hauteur de montage des luminaires.

L'intensité de source d'éclairage I et l'angle $\gamma$ associé sont issus des données de photométrie avec lesquelles les luminaires de l'installation sont en cours de fonctionnement.

La table-r relie l'éclairement E de la surface de la voie de circulation à la luminance L au point P par l'équation (IV) suivante :

$$L_p = \frac{1}{k}\sum_{i=1}^{N_S} \frac{r_{i,p} \cdot E_{i,p}}{\cos(\gamma_{i,p})^3}$$

où Lp est la luminance au point P,
$r_{i,p}$ sont les coefficients de luminance réduits,
$E_{i,p}$ sont les éclairements élémentaires calculés à partir de l'équation (III),
k est une constante ($10^4$)

Base de cartes de luminance

L'équation (IV) peut ainsi être appliquée, pour chaque table-r virtuelle (à laquelle correspondent les termes $r_{i,p}$), à la configuration d'éclairage de l'installation d'éclairage en cours de fonctionnement, i.e. en utilisant, pour chaque point P de la zone de la voie de circulation dont l'image est acquise, des valeurs d'intensité de source d'éclairage I et d'angle $\gamma$ associé, pour $N_S$ sources d'éclairage, issues de la photométrie ou de la combinaison de photométrie avec laquelle l'installation d'éclairage est en cours de fonctionnement.

Pour chaque table-r virtuelle, l'obtention de la valeur $L_P$ pour chaque point P dudit ensemble de points P de la voie de circulation permet d'obtenir une carte de luminance virtuelle $L_v$. On obtient ainsi D=10 cartes de luminance virtuelles.

L'ensemble de points P, forme une carte ou grilles de $N_G$ points. $N_G$ est par exemple égal à 60. Lesdits points P sont des points de surface de la zone 11 de la voie de circulation dont l'image est acquise.

Ainsi, les D tables-r virtuelles permettent d'obtenir D cartes de luminance $L_{v1}$, $L_{v2}$, ..., $L_{vD}$, dites cartes de luminance virtuelles (ou encore appelées cartes propres), qui forment ainsi une base de cartes de luminance virtuelles comme illustré à la Figure 2. L'ensemble de cartes de luminance est noté 1030 à la Figure 2.

Une carte de luminance virtuelle se présente ainsi sous la forme d'une matrice de même taille que la carte de luminance mesurée mais dont les valeurs n'ont pas de sens physiques (et peuvent être négatives). Comme expliqué ci-après, chaque carte de luminance propre est associée à une composante principale de la base de données de table-r virtuelle et sert de base pour décomposer une carte de luminance mesurée.

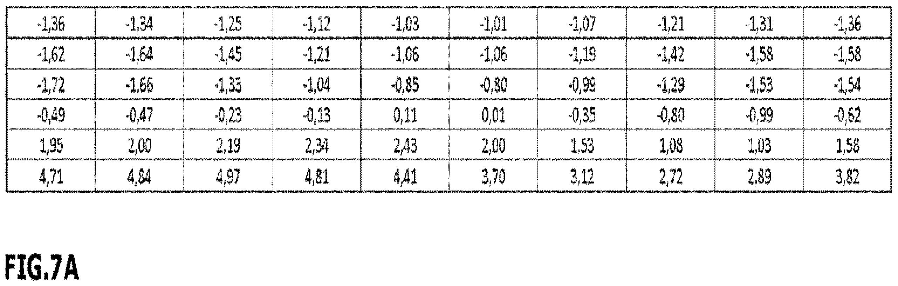

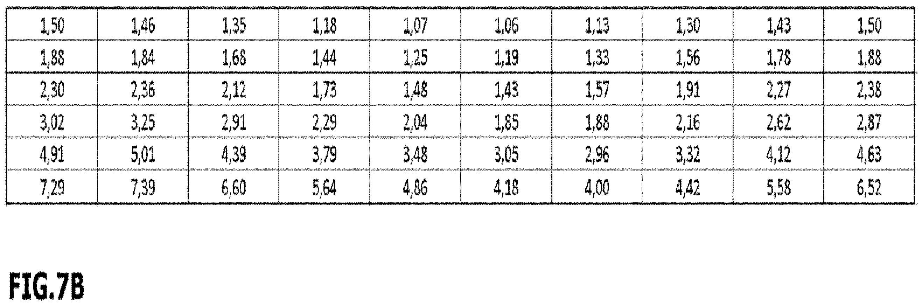

Un exemple de cartes de luminance virtuelles $L_{v1}$ et $L_{v2}$ est donné en Figure 7A et Figure 7B.

Décomposition de la carte de luminance mesurée $L_{mes}$ sur les cartes de luminance virtuelles $L_{v1}$, $L_{v2}$, ..., $L_{vD}$

Le module 4 de détermination de table-r décompose la carte de luminance $L_{mes}$ mesurée (à laquelle correspond des points P de valeur de luminance $L_{p_mes}$), sur les cartes de luminance virtuelles générées $L_{v1}$, $L_{v2}$,..., $L_{vD}$, de manière à obtenir des coefficients $\lambda_1$,$\lambda_2$ ...$\lambda_D$ associés aux cartes de luminance virtuelles générées $L_{v1}$, $L_{v2}$,..., $L_{vD}$ qui correspondent au système d'équations (V) suivantes définies pour les points P de l'image :

$$L_{p_mes} = \lambda_1, L_{p_v1} + \lambda_2 L_{p_v2} ...+ \lambda_D L_{p_vD}$$

avec $L_{p_vi}$ la luminance du point P de la carte de luminance virtuelle n° i, et i allant de 1 à D.

Ces coefficients $\lambda_1$,$\lambda_2$ ...$\lambda_D$ sont obtenus en résolvant le système d'équations (V) ci-dessus : chaque point de luminance mesuré $L_{p_mes}$ correspond à une équation. Il y a donc autant d'équations que de points de mesure.

Le système d'équations peut être résolu par la méthode des moindres carrés. Cette méthode détermine la meilleure combinaison linéaire des cartes de luminance virtuelles générées $L_{v1}$, $L_{v2}$, ..., $L_{vD}$ pour approcher au mieux la carte de luminance mesurée $L_{mes}$ et fournir les coefficients correspondant $\lambda_1$,$\lambda_2$ ...$\lambda_D$

Estimation de la table-r à partir des coefficients déterminés

Le module 4 de détermination de table-r permet de générer une table-r estimée, notée $Tr_{est}$, de la zone 11 de la voie de circulation 1 en fonction des coefficients $\lambda_1$,$\lambda_2$ ...$\lambda_D$ obtenus, selon l'équation (VI) :

$$Tr_{est} = \lambda_1 r_{v1} + \lambda_2 r_{v2} ...+ \lambda_D r_{vD}$$

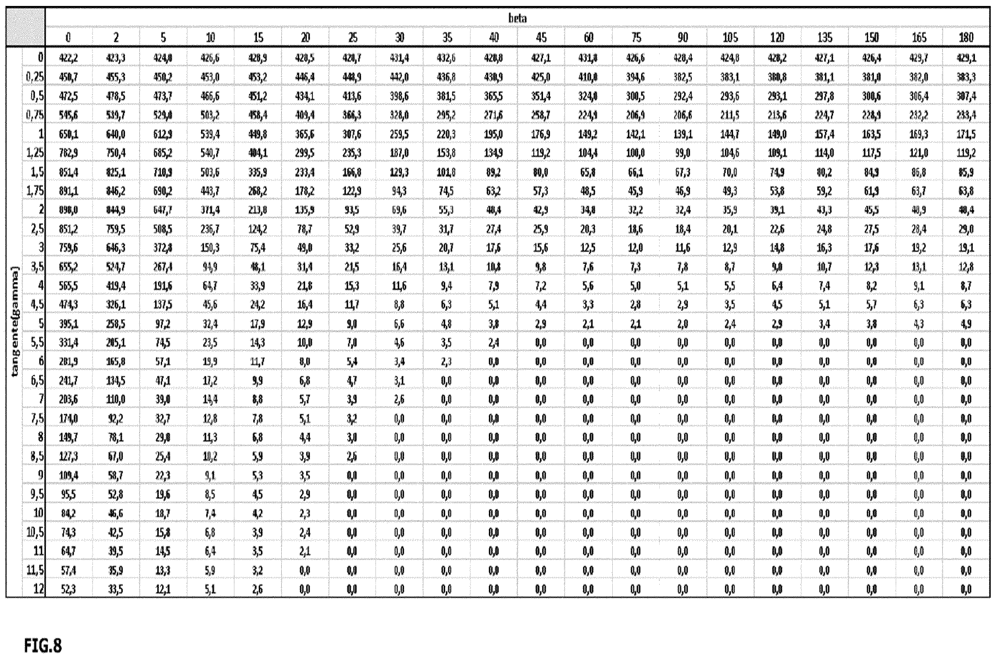

La Figure 8 donne un exemple de table-r estimée $Tr_{est}$ obtenue avec des coefficients $\lambda_1$,$\lambda_2$ ...$\lambda_D$ de valeurs :

$$\lambda_1 = -0{,}026611919$$

$$\lambda_2 = 0{,}528818935$$

$$\lambda_3 = -0{,}183384405$$

$$\lambda_4 = 0{,}036971762$$

$$\lambda_5 = -0{,}040579723$$

$$\lambda_6 = -0{,}018550646$$

$$\lambda_7 = 0{,}017182181$$

$$\lambda_8 = -0{,}016625876$$

$$\lambda_9 = -0{,}008145728$$

$$\lambda_{10} = -0{,}009002147$$

De cette façon, la méthode permet de déterminer les propriétés optiques de réflexion de la voie de circulation à l'aide des luminaires, sans qu'il soit nécessaire d'installer de luminaires supplémentaires spécifiques.

La table-r estimée $Tr_{est}$ ainsi générée est utilisée par le module de commande 6 de l'installation d'éclairage 2 pour générer des consignes C62 aux luminaires 20, en fonction de caractéristiques de luminance de référence 21 souhaitées pour la zone 11 de la voie de circulation 1, afin d'obtenir un réglage adapté des sources d'éclairage chaque luminaire.

<u>Pilotage des luminaires</u>

Le module de commande 6 permet de commander les luminaires, à l'aide des données de la table-r $Tr_{est}$ déterminée et de la carte de luminance mesurée $L_{mes}$, pour obtenir des caractéristiques de luminances, qui comprennent de préférence une valeur de luminance moyenne et des valeurs d'uniformité (longitudinale et générale), qui se rapprochent au mieux de caractéristiques de luminances de référence, qui résultent par exemple d'exigences normatives.

Les caractéristiques de luminances de référence (ou souhaitées) peuvent dépendre du type de voie (encore appelé classe).

Ainsi pour la voie de circulation illustré aux figures, il est souhaitable d'obtenir une valeur de luminance moyenne de la zone 11 au moins égale à une valeur $\overline{L}$ minimale donnée, et avec une homogénéité (homogénéité) des valeurs de luminance associées aux points P la zone 11 : il est souhaitable d'obtenir la répartition la plus homogène (uniforme) des valeurs de luminance sur les points P la zone 11.

L'homogénéité (ou uniformité) inclut un critère d'uniformité générale $U_0$ et un critère d'uniformité longitudinale $U_l$. L'uniformité générale est donnée comme le rapport de la luminance minimale parmi les valeurs de luminance aux points P sur la luminance moyenne des valeurs de luminance aux points P. L'uniformité longitudinale est donnée comme le rapport de la luminance minimale sur la luminance maximale parmi les valeurs de luminance des points P situés au milieu de la voie de circulation.

Un exemple de caractéristiques de luminance de référence est donné ci-dessous pour différentes classes (ou types) de voies de circulation. Ces caractéristiques de luminance de référence correspondent aux valeurs minimales de luminance moyenne $\overline{L}$, d'uniformité générale $U_0$ et d'uniformité longitudinale $U_l$ à atteindre pour différentes classes M1 - M6 correspondant à différents types de voie.

| **Classe** | $\overline{L}$ [minimale maintenue] cd·m$^2$ | $U_0$ [minimale] | $U_l$ [minimale] |
|---|---|---|---|
| M1 | 2,00 | 0,40 | 0,70 |
| M2 | 1,50 | 0,40 | 0,70 |
| M3 | 1,00 | 0,40 | 0,60 |

(suite)

| Classe | $\overline{L}$ [minimale maintenue] cd·m2 | $U_0$ [minimale] | $U_l$ [minimale] |
|---|---|---|---|
| M4 | 1,75 | 0,40 | 0,60 |
| M5 | 0,50 | 0,35 | 0,40 |
| M6 | 0,30 | 0,35 | 0,40 |

Une voie de circulation de type M1 est une voie qui nécessite une plus grande valeur de luminance minimale qu'une voie de type M2... ou M6. Une voie de type M1 peut ainsi être une autoroute, et à l'opposé une voie de type M6 peut être une voie piétonne.

Ainsi selon un mode de réalisation, l'unité de traitement 100 comprend en mémoire des caractéristiques de référence correspondant au type de voie de la voie de circulation dont l'image est acquise. On peut prévoir que l'unité de traitement comprend plusieurs ensembles de caractéristiques de référence pour différents types de voie, et qu'une interface permet à un opérateur d'entrer le type de voie dont l'image acquise pour permettre à l'unité de traitement de sélectionner les caractéristiques de référence associées au type de voie indiqué par l'opérateur. En variante, les caractéristiques de référence peuvent être prédéfinies dans l'unité de traitement en tenant compte du type de voie pour laquelle l'unité de traitement est destinée à être utilisée.

Le module de commande simule, à partir de l'ensemble des photométries disponibles et de combinaisons de celles-ci, et pour différentes valeurs d'alimentation des LED des photométries, différentes configurations d'éclairage donnant différentes valeurs d'éclairage $E_p$ pour chaque point P de la zone 11 de la voie de circulation.

Pour chaque configuration d'éclairage simulée, le module de commande 6 calcule, à partir des valeurs $E_p$ calculées, et de la table-r estimée générée précédemment par le module de détermination 4 de table-r, une carte de luminance estimée $L_{est}$.

Le module de commande 6 calcule, pour chaque carte de luminance estimée $L_{est}$, la valeur de luminance moyenne et une ou des uniformités des valeurs de luminance sur les points P de la zone 11, et identifie la carte de luminance estimée $L_{est}$, pour laquelle la valeur de luminance moyenne et les uniformités des valeurs de luminance sur les points P de la zone 11 se rapprochent le plus de la valeur de luminance de référence et de la ou des uniformités de référence pour la voie de circulation 1. Le type de voie (M1, M2,... ou M6) est mémorisé dans l'unité de traitement de sorte que le module de commande connait les caractéristiques de référence à utiliser pour effectuer l'opération de comparaison.

Le module de commande 6 identifie à partir de ladite carte de luminance estimée Lest identifiée, la photométrie ou la combinaison de photométries, avec l'alimentation associée des LED, qui a permis d'obtenir ladite carte de luminance estimée Lest identifiée. Le module de commande 6 transmet alors aux luminaires des consignes pour l'activation de ladite photométrie, ou combinaison de photométries, identifiée, avec l'alimentation associée des LED.

On peut prévoir que les instructions du module de commande 6 soient transmises aux modules de pilotage (encore appelés "driver" en anglais) des sources d'éclairage des luminaires pour activer la photométrie ou combinaison de photométrie identifiée avec l'alimentation associée.

A partir des instructions émises par le module de commande 6, l'unité de traitement peut déterminer la photométrie ou la combinaison de photométrie du ou des luminaires qui est en cours d'utilisation comme étant celle résultant des instructions émises par le module de commande 6.

L'éclairage de chaque luminaire peut ainsi être piloté pour tendre vers un réglage optimal compte tenu des caractéristiques de la table-r estimée. L'éclairage fourni par chaque luminaire peut ainsi être adapté à l'état de surface de la voie de circulation, par exemple sec ou humide.

Comme rappelé ci-dessus, on peut prévoir que le module 4 de détermination de table-r génère la table-r de la zone 11 de la voie de circulation 1 pour différents angles d'observation de ladite zone 11. L'éclairage de chaque luminaire peut alors être piloté aussi en fonction du type d'usager, notamment piéton, cycliste ou automobiliste qui circule sur la voie de circulation en sélectionnant une table-r estimée qui a été calculée pour un angle donné correspondant au type d'usager détecté. Différentes tables-r peuvent ainsi être estimées selon le type d'usagers considéré, c'est-à-dire pour des angles d'observation différents.

Le module de commande 6 peut ainsi recevoir en tant que paramètre d'entrée, par exemple fourni par un capteur de présence, le type d'utilisateur circulant sur la voie, auquel est associé un angle d'observation donné, par exemple 1° pour une voiture, et 10° pour un piéton, et commander les luminaires 20 en fonction de la table-r générée dont l'angle d'observation associé correspond au type d'utilisateur identifié.

Le dispositif 3 d'acquisition d'image est positionné par rapport à la voie de circulation 1 de manière à offrir un angle d'observation donné correspondant à l'angle d'observation d'un type d'usager de la voie de circulation, par exemple une voiture. On peut prévoir que le dispositif 3 d'acquisition d'image soit déplaçable pour acquérir l'image selon un autre angle d'observation correspondant à un autre type d'usager. Une table-r étant calculée pour un angle de vision donné, on peut prévoir que le dispositif d'acquisition d'image soit déplaçable selon différentes orientations pour obtenir des images en luminance suivant différents angles et ainsi obtenir des table-r pour différents angles. On peut également prévoir que les caractéristiques optiques du dispositif d'acquisition d'images permettent d'acquérir des images pour plusieurs angles d'observation différents en même temps, par exemple pour un angle d'observation de 10° pour une zone 11 qui serait située en bas de l'image et simultanément pour un angle d'observation de 1° pour une zone 11 qui serait située au milieu de l'image.

L'unité de traitement 100 permet d'adapter le scénario d'éclairage mis en œuvre (i.e. les consignes) en fonction des propriétés de réflexion optiques de la surface de la voie de circulation (qui peuvent varier avec les années et selon les conditions météorologiques) du fait de la présence dans les luminaires de plusieurs photométries distinctes, par exemple une dédiée à un revêtement sec, l'autre à un revêtement mouillé. Ainsi, selon l'état de surface de la voie de circulation, le module de commande 6 de l'unité de traitement 100 permet de mettre en œuvre un scénario d'éclairage (c'est-à-dire un jeu d'instructions) mobilisant l'une ou l'autre des photométries ainsi qu'un ensemble de combinaisons linéaires entre elles.

Autres aspects

Le système peut comprendre une armoire de commande de l'installation d'éclairage logeant l'unité de traitement 100. En variante, l'unité de traitement peut être logée au niveau d'un système superviseur ou directement dans le système d'imagerie, c'est-à-dire le dispositif d'acquisition d'image, qui peut alors former une caméra intelligente.

L'unité de traitement se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par l'unité de traitement peuvent être réalisées par des jeux d'instructions ou modules informatiques implémentés dans un processeur ou contrôleur ou être réalisées par des composants électroniques dédiés ou des composants de type circuit logique programmable (ou FPGA qui est l'acronyme de l'anglais field-programmable gate array, ce qui correspond littéralement à réseau de portes programmable in-situ) ou de type circuit intégré propre à une application (ou ASIC qui est l'acronyme de l'anglais application-specific integrated circuit, ce qui correspond littéralement à circuit intégré spécifique à une application ). Il est aussi possible de combiner des parties informatiques et des parties électroniques.

L'unité de traitement est ainsi une unité électronique et/ou informatique. Lorsqu'il est précisé que ladite unité est configurée pour réaliser une opération donnée, cela signifie que l'unité comprend des instructions informatiques et les moyens d'exécution correspondants qui permettent de réaliser ladite opération et/ou que l'unité comprend des composants électroniques correspondants.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

**1.** Système de gestion d'une installation d'éclairage (2) agencée pour éclairer une voie de circulation (1), l'installation d'éclairage comprenant une pluralité de sources d'éclairage dont l'alimentation électrique est pilotable, le système de gestion comprenant :

- un dispositif (3) d'acquisition d'image permettant de générer une image ($L_{mes}$) en luminance, appelée carte de luminance, d'une zone (11) de la voie de circulation (1); et
- une unité de traitement (100) de données, comprenant:
    - plusieurs photométries (201, 202) de l'installation d'éclairage (2), chaque photométrie étant définie par une source d'éclairage ou un ensemble de sources d'éclairage faisant partie de ladite pluralité de sources d'éclairage de l'installation d'éclairage (2), et des valeurs d'intensité lumineuse que la source d'éclairage ou l'ensemble de sources d'éclairage est apte à émettre selon différentes directions;
    - un module (4) de détermination d'un ensemble de caractéristiques de réflexion optique configuré pour déterminer un ensemble de caractéristiques de réflexion optique de la voie de circulation, en fonction de l'image ($L_{mes}$ ) en luminance acquise, d'au moins une partie des photométries de l'installation d'éclairage (2), et de données de positionnement, telles que la hauteur, de la ou des sources d'éclairage desdites photométries par rapport à la zone (11) de la voie de circulation (1); et

- un module (6) de commande configuré pour commander au moins une partie des sources d'éclairage de l'installation d'éclairage (2), en fonction des caractéristiques de réflexion optique déterminées, d'au moins une partie des photométries de l'installation d'éclairage (2), et de caractéristiques de luminance de référence ;

le système étant **caractérisé en ce que** le module (4) de détermination d'un ensemble de caractéristiques de réflexion optique est configuré pour déterminer un ensemble de caractéristiques de réflexion optique de la voie de circulation (1) en exécutant au moins les étapes suivantes :

- analyse en composantes principales d'ensembles de caractéristiques de réflexion optique de référence (1010) pour générer des ensembles de caractéristiques de réflexion optique virtuelles, encore appelées vecteurs propres $r_{v1}$, $r_{v2}$,..., $r_{vD}$ (1020);
- génération de plusieurs cartes de luminance virtuelles $L_{v1}$, $L_{v2}$,..., $L_{vD}$ (1030), en fonction : des vecteurs propres $r_{v1}$, $r_{v2}$,..., $r_{vD}$, des données de positionnement des sources d'éclairage de l'installation d'éclairage (2), par rapport à la zone (11) de la voie de circulation (1), et des données de photométries en cours d'utilisation de l'installation d'éclairage (2) ;
- décomposition de la carte de luminance ($L_{mes}$) fournie par le dispositif d'acquisition d'image, sur les cartes de luminance virtuelles $L_{v1}$, $L_{v2}$,..., $L_{vD}$, de manière à obtenir des coefficients $\lambda_1$,$\lambda_2$ ...$\lambda_D$ associés aux cartes de luminance virtuelles; et
- détermination de l'ensemble de caractéristiques de réflexion optique de la voie de circulation (1) par combinaison linéaire des vecteurs propres $r_{v1}$, $r_{v2}$,..., $r_{vD}$ avec les coefficients $\lambda_1$,$\lambda_2$...$\lambda_D$ obtenus.

**2.** Système selon la revendication 1, dans lequel le module (6) de commande est configuré pour :

- définir une pluralité de scénarii d'éclairage, chaque scénario comprenant les paramètres de définition suivants: une photométrie ou une combinaison de photométries choisie parmi les photométries de l'installation d'éclairage (2), et une ou des données relatives à l'alimentation électrique de la ou des sources d'éclairage de la photométrie ou de la combinaison de photométries choisie;
- déterminer pour chaque scénario, à partir des caractéristiques de réflexion optiques déterminées de la voie de circulation, des caractéristiques de luminance de la voie de circulation lorsque ladite voie de circulation est éclairée selon les paramètres de définition dudit scénario, et
- comparer pour chaque scénario les caractéristiques de luminance déterminées de la voie de circulation avec les caractéristiques de luminance de référence ;
- identifier le scénario pour lequel les caractéristiques de luminance déterminées sont les plus proches des caractéristiques de luminance de référence ;
- commander les sources d'éclairage de l'installation d'éclairage (2) qui correspondent au scénario identifié, selon la ou les données d'alimentation électriques utilisées dans le scénario identifié.

**3.** Système selon la revendication 1 ou 2, dans lequel les ensembles de caractéristiques de réflexion optique sont des tables-r, chaque table-r comprenant des valeurs d'un coefficient de luminance réduit, noté r, défini selon l'équation :

$$r = k . q . cos(\gamma)^3$$

avec k une constante, et q un coefficient de luminance défini par :

$$q = \frac{L}{E}$$

avec E l'éclairement horizontal généré par une source d'éclairage, et L la luminance,
q étant fonction de:

- l'angle d'observation $\alpha$,
- l'angle $\beta$ entre le plan d'incidence de la lumière de la source d'éclairage et le plan d'observation, et
- l'angle d'incidence $\gamma$ de la lumière,

la table-r comprenant des valeurs de r pour différentes valeurs d'angle $\beta$ et différentes valeurs de tan $\gamma$.

**4.** Système selon la revendication 3, dans lequel les ensembles de caractéristiques de réflexion optique de référence étant des tables-r de référence, lesdites tables-r de référence comprennent des tables-r qui présentent des valeurs de couple {Q0 ; S1} différentes les unes des autres, avec :

$$Q0 = \frac{1}{\Omega}\int_{\Omega} q \, d\Omega \quad \text{et} \quad S1 = \frac{r(\tan\gamma=2,\beta=0)}{r(\tan\gamma=0,\beta=0)}$$

où Ω est l'angle solide contenant toutes les directions de la lumière incidente.

**5.** Système selon l'une quelconque des revendications 3 à 4, dans lequel les ensembles de caractéristiques de réflexion optique de référence comprenant :

- des tables-r de référence de classe R1, R2, R3, R4, C1, C2, N1, N2, N2, N4, W1, W2, W3, et/ou W4, et/ou
- des tables-r mesurées expérimentalement.

**6.** Système selon l'une quelconque des revendications 3 à 5, dans lequel les ensembles de caractéristiques de réflexion optique virtuelles sont des tables-r virtuelles,

et dans lequel, pour la génération de plusieurs cartes de luminance virtuelles $L_{v1}$, $L_{v2}$,..., $L_{vD}$ (1030), encore appelées cartes propres, le module (4) de détermination est configuré pour appliquer, pour chaque table-r virtuelle, et pour chaque point P de la zone de la voie de circulation dont l'image est acquise, l'équation :

$$L_p = \frac{1}{k}\sum_{i=1}^{N_S}\frac{r_{i,p}\cdot E_{i,p}}{\cos(\gamma_{i,p})^3}$$

à la configuration d'éclairage de l'installation d'éclairage en cours de fonctionnement,
où $N_S$ est le nombre de sources d'éclairage considérées pour le calcul, $\gamma_{i,p}$ est l'angle d'incidence de la ième source d'éclairage au point P,
k est une constante,
Lp est la luminance au point P,
$r_{i,p}$ sont les coefficients de luminance réduits d'une table virtuelle, $E_{i,p}$ sont les éclairements élémentaires dus à chaque source d'éclairage séparément au point P, calculés à partir de l'équation :

$$E_{i,p} = \sum_{i=1}^{N_S}\frac{I_{i,p}\,.\cos(\gamma_{i,p})^3}{h^2}$$

où h est la hauteur de la source d'éclairage,
I est l'intensité émise par la ième source d'éclairage de l'installation d'éclairage en direction du point P.

**7.** Système selon l'une quelconque des revendications précédentes, dans lequel la ou chaque source d'éclairage comprend une ou plusieurs LED.

**8.** Système selon l'une quelconque des revendications précédentes, dans lequel l'installation d'éclairage (2) comprend plusieurs luminaires, chaque luminaire comprenant une partie desdites sources d'éclairage de l'installation d'éclairage (2), chaque luminaire comprenant un dispositif de pilotage de l'alimentation des sources d'éclairage du luminaire.

**9.** Système selon l'une quelconque des revendications précédentes, dans lequel les caractéristiques de luminance de référence comprennent au moins l'une des caractéristiques suivantes :

- la luminance moyenne minimale de la voie de circulation ;
- l'uniformité générale en luminance minimale de la voie de circulation ; et
- l'uniformité longitudinale en luminance minimale de la voie de circulation.

**10.** Système selon l'une quelconque des revendications précédentes, prise en combinaison de la revendication 3, dans lequel le module (4) de détermination d'un ensemble de caractéristiques de réflexion optique est configuré pour déterminer plusieurs tables-r de la voie de circulation en fonction de plusieurs types d'usager aptes à circuler sur ladite voie de circulation à laquelle sont associés différents angles d'observation de la voie de circulation,
le module de commande (6) étant configuré pour, pour un type d'usager déterminé qui circule sur la voie de circulation :

- sélectionner la table-r déterminée dont l'angle d'observation associé correspond au type d'usager déterminé, et
- commander au moins une partie des sources d'éclairage de l'installation d'éclairage (2), en utilisant la table-r déterminée sélectionnée.

**11.** Procédé de gestion d'au moins une installation d'éclairage (2) agencée pour éclairer une voie de circulation (1), l'installation d'éclairage présentant plusieurs photométries (201, 202), chaque photométrie étant définie par :

- une source d'éclairage ou un ensemble de sources d'éclairage de l'installation d'éclairage (2), et
- des valeurs d'intensité lumineuse que la source d'éclairage ou ledit ensemble de sources d'éclairage est apte à émettre selon différentes directions;

le procédé comprenant les étapes suivantes:

- l'acquisition d'une image ($L_{mes}$) d'une zone (11) de la voie de circulation (1) pour générer une image en luminance de cette zone (11);
- détermination d'un ensemble de caractéristiques de réflexion optique de la zone (11) de la voie de circulation (1) en fonction :

  de l'image ($L_{mes}$) en luminance acquise;
  d'au moins une partie des photométries (201, 202) de l'installation d'éclairage (2);
  de données de positionnement, telles que la hauteur, de la ou des sources d'éclairage desdites photométries par rapport à la zone (11) de la voie de circulation (1); et

- commande d'au moins une partie des sources d'éclairage de l'installation d'éclairage (2), en fonction :des caractéristiques de réflexion optiques déterminées, d'au moins une partie des photométries de l'installation d'éclairage (2); de caractéristiques de luminance de référence, le procédé étant **caractérisé en ce que** l'étape de détermination d'un ensemble de caractéristiques de réflexion optique de la voie de circulation (1) comprenant au moins les étapes suivantes :

  - analyse en composantes principales d'ensembles de caractéristiques de réflexion optique de référence (1010) pour générer des ensembles de caractéristiques de réflexion optique virtuelles, encore appelées vecteurs propres $r_{v1}, r_{v2},..., r_{vD}$ (1020);
  - génération de plusieurs cartes de luminance virtuelles $L_{v1}, L_{v2},..., L_{vD}$ (1030), en fonction : des vecteurs propres $r_{v1}, r_{v2},..., r_{vD}$, des données de positionnement des sources d'éclairage de l'installation d'éclairage (2), par rapport à la zone (11) de la voie de circulation (1), et des données de photométries en cours d'utilisation de l'installation d'éclairage (2) ;
  - décomposition de la carte de luminance ($L_{mes}$) fournie par le dispositif d'acquisition d'image, sur les cartes de luminance virtuelles $L_{v1}, L_{v2},..., L_{vD}$, de manière à obtenir des coefficients $\lambda_1,\lambda_2...\lambda_D$ associés aux cartes de luminance virtuelles; et
  - détermination de l'ensemble de caractéristiques de réflexion optique de la voie de circulation (1) par combinaison linéaire des vecteurs propres $r_{v1}, r_{v2},..., r_{vD}$ avec les coefficients $\lambda_1,\lambda_2...\lambda_D$ obtenus.

**12.** Procédé selon la revendication 11, dans lequel l'étape de commande des sources d'éclairage est réalisée en fonction aussi d'un type d'usager qui circule sur la voie de circulation.

## Patentansprüche

**1.** System zur Steuerung einer Beleuchtungsanlage (2), die dazu eingerichtet ist, einen Verkehrsweg (1) zu beleuchten, wobei die Beleuchtungsanlage eine Mehrzahl von Lichtquellen umfasst, deren Stromversorgung ansteuerbar ist, das System zur Steuerung umfassend:

- eine Bilderfassungsvorrichtung (3), die es ermöglicht, ein Leuchtdichtebild ($L_{mes}$), Leuchtdichtekarte genannt, eines Bereichs (11) des Verkehrswegs (1) zu erzeugen; und
- eine Datenverarbeitungseinheit (100), umfassend:

  - mehrere Fotometrien (201, 202) der Beleuchtungsanlage (2), wobei jede Fotometrie definiert ist durch eine zu der Mehrzahl von Beleuchtungsquellen der Beleuchtungsanlage (2) gehörende Beleuchtungsquelle oder Menge von Beleuchtungsquellen und Lichtintensitätswerte, welche die Beleuchtungsquelle oder Menge von Beleuchtungsquellen entlang verschiedener Richtungen zu emittieren in der Lage ist;
  - ein Modul (4) zur Ermittlung einer Menge von Reflexionsmerkmalen, das dazu ausgestaltet ist, eine Menge von Reflexionsmerkmalen des Verkehrswegs in Abhängigkeit von dem erfassten Leuchtdichtebild ($L_{mes}$), von mindestens einem Teil der Fotometrien der Beleuchtungsanlage (2) und von Positionierungsdaten wie der Höhe der Beleuchtungsquelle der -quellen der Fotometrien in Bezug auf den Bereich (11) des Verkehrswegs (1) zu ermitteln; und
  - ein Steuerungsmodul (6), das dazu ausgestaltet ist, mindestens einen Teil der Beleuchtungsquellen der Beleuchtungsanlage (2) in Abhängigkeit von den ermittelten Reflexionsmerkmalen, von mindestens einem Teil der Fotometrien der Beleuchtungsanlage (2) und von Referenz-Leuchtdichtemerkmalen zu steuern;

wobei das System **dadurch gekennzeichnet ist, dass** das Modul (4) zur Ermittlung einer Menge von Reflexionsmerkmalen dazu ausgestaltet ist, eine Menge von Reflexionsmerkmalen des Verkehrswegs (1) zu ermitteln, indem es mindestens die folgenden Schritte ausführt:

- Analysieren nach Hauptkomponenten von Mengen von Referenz-Reflexionsmerkmalen (1010), um Mengen von virtuellen Reflexionsmerkmalen, auch Eigenvektoren $r_{v1}$, $r_{v2}$,..., $r_{vD}$ (1020) genannt, zu erzeugen;
- Erzeugen von mehreren virtuellen Leuchtdichtekarten $L_{v1}$, $L_{v2}$,..., $L_{vD}$ (1030) in Abhängigkeit von: den Eigenvektoren $r_{v1}$, $r_{v2}$,..., $r_{vD}$, den Positionierungsdaten der Beleuchtungsquellen der Beleuchtungsanlage (2) in Bezug auf den Bereich (11) des Verkehrswegs (1) und den Daten von in Verwendung befindlichen Fotometrien der Beleuchtungsanlage (2);
- Zerlegen der von der Bilderfassungsvorrichtung bereitgestellten Leuchtdichtekarte ($L_{mes}$) auf den virtuellen Leuchtdichtekarten $L_{v1}$, $L_{v2}$,..., $L_{vD}$, so dass den virtuellen Leuchtdichtekarten zugeordnete Koeffizienten $\lambda_1, \lambda_2 ... \lambda_D$ erhalten werden; und
- Ermitteln einer Menge von Reflexionsmerkmalen des Verkehrswegs (1) durch lineare Kombination der Eigenvektoren $r_{v1}$, $r_{v2}$, ... , $r_{vD}$ mit den erhaltenen Koeffizienten $\lambda_1, \lambda_2 ... \lambda_D$.

**2.** System nach Anspruch 1, wobei das Steuerungsmodul (6) dazu ausgestaltet ist:

- eine Mehrzahl von Beleuchtungsszenarien zu definieren, wobei jedes Szenario die folgenden Definitionsparameter umfasst: eine Fotometrie oder eine Kombination von Fotometrien, die aus den Fotometrien der Beleuchtungsanlage (2) gewählt ist, und ein oder mehrere Datenelemente bezüglich der Stromversorgung der Beleuchtungsquelle oder -quellen der Fotometrie oder gewählten Kombination von Fotometrien;
- für jedes Szenario, ausgehend von den ermittelten Reflexionsmerkmalen des Verkehrswegs, Leuchtdichtemerkmale des Verkehrswegs zu ermitteln, wenn der Verkehrsweg gemäß den Definitionsparametern des Szenarios beleuchtet wird, und
- für jedes Szenario die ermittelten Leuchtdichtemerkmale des Verkehrswegs mit den Referenz-Leuchtdichtemerkmalen zu vergleichen;
- das Szenario zu identifizieren, bei dem die ermittelten Leuchtdichtemerkmale den Referenz-Leuchtdichtemerkmalen am nächsten kommen;
- die Beleuchtungsquellen der Beleuchtungsanlage (2), die dem identifizierten Szenario entsprechen, gemäß dem oder den in dem identifizierten Szenario verwendeten Stromversorgungsdatenelementen zu steuern.

**3.** System nach Anspruch 1 oder 2, wobei die Mengen von Reflexionsmerkmalen r-Tabellen sind, wobei jede r-Tabelle Werte eines reduzierten Leuchtdichtekoeffizienten, als r bezeichnet, umfasst, der gemäß der folgenden Gleichung definiert ist:

$$r = k.q.\cos(y)^3$$

wobei k eine Konstante ist und q ein Leuchtdichtekoeffizient ist, der definiert ist durch:

$$q = \frac{L}{E}$$

wobei E die von einer Beleuchtungsquelle erzeugte horizontale Beleuchtung ist und L die Leuchtdichte ist, wobei q eine Funktion ist:

- des Betrachtungswinkels $\alpha$,
- des Winkels $\beta$ zwischen der Einfallsebene des Lichts der Beleuchtungsquelle und der Betrachtungsebene, und
- des Einfallswinkels $\gamma$ des Lichts,

wobei die r-Tabelle Werte von r für verschiedene Werte des Winkels $\beta$ und verschiedene Werte von tan $\gamma$ umfasst.

**4.** System nach Anspruch 3, wobei die Mengen von Referenz-Reflexionsmerkmalen Referenz-r-Tabellen sind, wobei die Referenz-r-Tabellen r-Tabellen umfassen, die voneinander verschiedene Paarwerte {Q0; S1} aufweisen, mit:

$$Q0 = \frac{1}{\Omega}\int_{\Omega} q\, \mathrm{d}_{\Omega} \quad \text{und} \quad S1 = \frac{r(tany=2,\beta=0)}{r(tany=0,\beta=0)}$$

worin $\Omega$ der Raumwinkel ist, der alle Richtungen des einfallenden Lichts enthält.

**5.** System nach einem der Ansprüche 3 bis 4, wobei die Mengen von Referenz-Reflexionsmerkmalen umfassen:

- Referenz-r-Tabellen der Klasse R1, R2, R3, R4, C1, C2, N1, N2, N2, N4, W1, W2, W3, und/oder W4, und/oder
- experimentell gemessene r-Tabellen.

**6.** System nach einem der Ansprüche 3 bis 5, wobei die Mengen von virtuellen Reflexionsmerkmalen virtuelle r-Tabellen sind,

und wobei, zur Erzeugung von mehreren virtuellen Leuchtdichtekarten $L_{v1}$, $L_{v2}$,..., $L_{vD}$ (1030), auch Eigenkarten genannt, das Modul (4) zur Ermittlung dazu ausgestaltet ist, für jede virtuelle r-Tabelle und für jeden Punkt P des Bereichs des Verkehrswegs, dessen Bild erfasst wird, die Gleichung:

$$L_p = \frac{1}{k}\sum_{i=1}^{N_s} \frac{r_{i,p} \cdot E_{i,p}}{\cos(\gamma_{i,p})^3}$$

auf die Beleuchtungskonfiguration der in Betrieb befindlichen Beleuchtungsanlage anzuwenden,
worin Ns die Anzahl von Beleuchtungsquellen ist, die bei der Berechnung betrachtet werden,
$\gamma_{i,p}$ der Einfallswinkel der i-ten Beleuchtungsquelle im Punkt P ist,
k eine Konstante ist,
Lp die Leuchtdichte im Punkt P ist,
$r_{i,p}$ die reduzierten Leuchtdichtekoeffizienten einer virtuellen Tabelle sind,
$E_{i,p}$ die elementaren Beleuchtungsstärken sind, die durch jede Beleuchtungsquelle separat im Punkt P bedingt sind und die anhand der folgenden Gleichung berechnet werden:

$$E_{i,p} = \sum_{i=1}^{N_s} \frac{I_{i,p} \cdot \cos(\gamma_{i,p})^3}{h^2}$$

worin h die Höhe der Beleuchtungsquelle ist,
I die von der i-ten Beleuchtungsquelle der Beleuchtungsanlage in Richtung des Punkts P emittierte Intensität ist.

**7.** System nach einem der vorhergehenden Ansprüche, wobei die oder jede Beleuchtungsquelle eine oder mehrere LEDs umfasst.

8. System nach einem der vorhergehenden Ansprüche, wobei die Beleuchtungsanlage (2) mehrere Leuchten umfasst, wobei jede Leuchte einen Teil der Beleuchtungsquellen der Beleuchtungsanlage (2) umfasst, wobei jede Leuchte eine Vorrichtung zur Ansteuerung der Versorgung der Beleuchtungsquellen der Leuchte umfasst.

9. System nach einem der vorhergehenden Ansprüche, wobei die Referenz-Leuchtdichtemerkmale mindestens eines der folgenden Merkmale umfassen:

- die minimale mittlere Leuchtdichte des Verkehrswegs;
- die allgemeine Gleichmäßigkeit hinsichtlich der minimalen Leuchtdichte des Verkehrswegs; und
- die Längsgleichmäßigkeit hinsichtlich der minimalen Leuchtdichte des Verkehrswegs.

10. System nach einem der vorhergehenden Ansprüche in Kombination mit Anspruch 3, wobei das Modul (4) zur Ermittlung einer Menge von Reflexionsmerkmalen dazu ausgestaltet ist, mehrere r-Tabellen des Verkehrswegs in Abhängigkeit von mehreren Nutzertypen zu ermitteln, die in der Lage sind, auf dem Verkehrsweg zu verkehren, dem verschiedene Betrachtungswinkel des Verkehrswegs zugeordnet sind,
wobei das Steuerungsmodul (6) dazu ausgestaltet ist, für einen bestimmten Nutzertyp, der auf dem Verkehrsweg verkehrt:

- die ermittelte r-Tabelle auszuwählen, deren zugeordneter Betrachtungswinkel dem ermittelten bestimmten Nutzertyp entspricht, und
- mindestens einen Teil der Beleuchtungsquellen der Beleuchtungsanlage (2) unter Verwendung der ausgewählten bestimmten r-Tabelle zu steuern.

11. Verfahren zur Steuerung mindestens einer Beleuchtungsanlage (2), die dazu eingerichtet ist, einen Verkehrsweg (1) zu beleuchten, wobei die Beleuchtungsanlage mehrere Fotometrien (201, 202) aufweist, wobei jede Fotometrie definiert ist durch:

- eine Beleuchtungsquelle oder eine Menge von Beleuchtungsquellen der Beleuchtungsanlage (2), und
- Lichtintensitätswerte, welche die Beleuchtungsquelle oder die Menge von Beleuchtungsquellen gemäß verschiedenen Richtungen zu emittieren in der Lage ist;

wobei das Verfahren die folgenden Schritte umfasst:

- Erfassen eines Bildes ($L_{mes}$) eines Bereichs (11) des Fahrwegs (1), um ein Leuchtdichtebild dieses Bereichs (11) zu erzeugen;
- Ermitteln einer Menge von Reflexionsmerkmalen des Bereichs (11) des Verkehrswegs (1) in Abhängigkeit von:

  dem erfassten Leuchtdichtebild ($L_{mes}$);
  mindestens einem Teil der Fotometrien (201, 202) der Beleuchtungsanlage (2);
  Positionierungsdaten wie der Höhe der Beleuchtungsquelle oder -quellen der Fotometrien in Bezug auf den Bereich (11) des Verkehrswegs (1); und

- Steuern mindestens eines Teils der Beleuchtungsquellen der Beleuchtungsanlage (2) in Abhängigkeit: von den ermittelten Reflexionsmerkmalen, von mindestens einem Teil der Photometrien der Beleuchtungsanlage (2); von Referenz-Leuchtdichtemerkmalen, wobei das Verfahren **dadurch gekennzeichnet ist, dass** der Schritt des Ermittelns einer Menge von Reflexionsmerkmalen des Verkehrswegs (1) mindestens die folgenden Schritte umfasst:
- Analysieren nach Hauptkomponenten von Mengen von Referenz-Reflexionsmerkmalen (1010), um Mengen von virtuellen Reflexionsmerkmalen, auch Eigenvektoren $r_{v1}$, $r_{v2}$,..., $r_{vD}$ (1020) genannt, zu erzeugen;
- Erzeugen von mehreren virtuellen Leuchtdichtekarten $L_{v1}$, $L_{v2}$,..., $L_{vD}$ (1030) in Abhängigkeit von: den Eigenvektoren $r_{v1}$, $r_{v2}$,..., $r_{vD}$, den Positionierungsdaten der Beleuchtungsquellen der Beleuchtungsanlage (2) in Bezug auf den Bereich (11) des Verkehrswegs (1) und den Daten von in Verwendung befindlichen Fotometrien der Beleuchtungsanlage (2);
- Zerlegen der von der Bilderfassungsvorrichtung bereitgestellten Leuchtdichtekarte ($L_{mes}$) auf den virtuellen Leuchtdichtekarten $L_{v1}$, $L_{v2}$,..., $L_{vD}$, so dass den virtuellen Leuchtdichtekarten zugeordnete Koeffizienten $\lambda_1$,$\lambda_2$...$\lambda_D$ erhalten werden; und
- Ermitteln einer Menge von Reflexionsmerkmalen des Verkehrswegs (1) durch lineare Kombination der Eigenvektoren $r_{v1}$, $r_{v2}$, ... , $r_{vD}$ mit den erhaltenen Koeffizienten $\lambda_1$,$\lambda_2$...$\lambda_D$.

12. Verfahren nach Anspruch 11, wobei der Schritt des Steuerns der Beleuchtungsquellen auch in Abhängigkeit von einem Nutzertyp ausgeführt wird, der auf dem Verkehrsweg verkehrt.

## Claims

1. System for managing a lighting installation (2) arranged to light a traffic lane (1), the lighting installation comprising a plurality of lighting sources whose power supply is controllable, the management system comprising:

   - an image acquisition device (3) that is used to generate a luminance image ($L_{mes}$), called a luminance map, of an area (11) of the traffic lane (1); and
   - a data processing unit (100) comprising:

     - multiple photometries (201, 202) of the lighting installation (2), each photometry being defined by a lighting source or a set of lighting sources belonging to said plurality of lighting sources of the lighting installation (2), and values of luminous intensity that the lighting source or the set of lighting sources is capable of emitting in different directions;
     - a module (4) for determining a set of optical reflection characteristics that is configured to determine a set of optical reflection characteristics of the traffic lane according to the acquired luminance image ($L_{mes}$), at least some of the photometries of the lighting installation (2), and positioning data, such as the height, of the lighting source or sources of said photometries in relation to the area (11) of the traffic lane (1); and
     - a control module (6) configured to control at least some of the lighting sources of the lighting installation (2) according to the determined optical reflection characteristics, at least some of the photometries of the lighting installation (2), and reference luminance characteristics;

   the system being **characterized in that** the module (4) for determining a set of optical reflection characteristics is configured to determine a set of optical reflection characteristics of the traffic lane (1) by performing at least the following steps:

   - principal component analysis of sets of reference optical reflection characteristics (1010) to generate sets of virtual optical reflection characteristics, also called eigenvectors $r_{v1}$, $r_{v2}$,..., $r_{vD}$ (1020);
   - generating multiple virtual luminance maps $L_{v1}$, $L_{v2}$,..., $L_{vD}$ (1030) according to: eigenvectors $r_{v1}$, $r_{v2}$,..., $r_{vD}$, positioning data of the lighting sources of the lighting installation (2) in relation to the area (11) of the traffic lane (1), and photometry data during use of the lighting installation (2);
   - breaking down the luminance map ($L_{mes}$) provided by the image acquisition device over the virtual luminance maps $L_{v1}$, $L_{v2}$,..., $L_{vD}$ so as to obtain coefficients $\lambda_1$, $\lambda_2$...$\lambda_D$ associated with the virtual luminance maps; and
   - determining the set of optical reflection characteristics of the traffic lane (1) by linear combination of the eigenvectors $r_{v1}$, $r_{v2}$,..., $r_{vD}$ with the coefficients $\lambda_1$, $\lambda_2$...$\lambda_D$ obtained.

2. System according to Claim 1, wherein the control module (6) is configured to:

   - define a plurality of lighting scenarios, each scenario comprising the following definition parameters: a photometry or a combination of photometries chosen from among the photometries of the lighting installation (2), and one or more data relating to the power supply for the lighting source or sources of the chosen photometry or combination of photometries;
   - determine, for each scenario, from the determined optical reflection characteristics of the traffic lane, luminance characteristics of the traffic lane when said traffic lane is lit in accordance with the definition parameters for that scenario, and
   - compare, for each scenario, the determined luminance characteristics of the traffic lane with the reference luminance characteristics;
   - identify the scenario for which the determined luminance characteristics are closest to the reference luminance characteristics;
   - control the lighting sources of the lighting installation (2) that correspond to the identified scenario in accordance with the power supply datum or data used in the identified scenario.

3. System according to Claim 1 or 2, wherein the sets of optical reflection characteristics are r-tables, each r-table comprising values of a reduced luminance coefficient, denoted r, defined in accordance with the equation:

$$r = k.q.\cos(y)^3$$

where k is a constant, and q is a luminance coefficient defined by:

$$q = \frac{L}{E}$$

where E is the horizontal lighting generated by a lighting source, and L is the luminance, q being dependent on:

- the viewing angle $\alpha$,
- the angle $\beta$ between the plane of incidence of the light from the lighting source and the viewing plane, and
- the angle of incidence $\gamma$ of the light,

the r-table comprising values of r for different angle values $\beta$ and different tan values $\gamma$.

**4.** System according to Claim 3, wherein, the sets of reference optical reflection characteristics being reference r-tables, said reference r-tables comprise r-tables that have torque values {Q0; S1} that are different from one another, with:

$$Q0 = \frac{1}{\Omega}\int_{\Omega} q \, \mathrm{d}_{\Omega} \quad \text{and} \quad S1 = \frac{r(tany=2,\beta=0)}{r(tany=0,\beta=0)}$$

where $\Omega$ is the solid angle containing all directions of the incident light.

**5.** System according to either one of Claims 3 and 4, wherein the sets of reference optical reflection characteristics comprise:

- reference r-tables in class R1, R2, R3, R4, C1, C2, N1, N2, N2, N4, W1, W2, W3, and/or W4, and/or
- experimentally measured r-tables.

**6.** System according to any one of Claims 3 to 5, wherein the sets of virtual optical reflection characteristics are virtual r-tables,

and wherein, to generate multiple virtual luminance maps $L_{v1}$, $L_{v2}$,..., $L_{vD}$ (1030), also called eigenmaps, the determination module (4) is configured to apply, for each virtual r-table, and for each point P in the area of the traffic lane whose image is acquired, the equation:

$$L_p = \frac{1}{k}\sum_{i=1}^{N_s} \frac{r_{i,p} \cdot E_{i,p}}{\cos(\gamma_{i,p})^3}$$

to the lighting configuration of the lighting installation during operation,
where Ns is the number of lighting sources considered for the calculation,
$\gamma_{i,p}$ is the angle of incidence of the i-th lighting source at the point P,
k is a constant,
Lp is the luminance at the point P,
$r_{i,p}$ are the reduced luminance coefficients of a virtual table,
$E_{i,p}$ are the elementary lightings due to each lighting source separately at the point P, calculated from the equation:

$$E_{i,p} = \sum_{i=1}^{N_s} \frac{I_{i,p} \cdot \cos(\gamma_{i,p})^3}{h^2}$$

where h is the height of the lighting source,
I is the intensity emitted by the i-th lighting source of the lighting installation in the direction of the point P.

**7.** System according to any one of the preceding claims, wherein the or each lighting source comprises one or more LEDs.

**8.** System according to any one of the preceding claims, wherein the lighting installation (2) comprises multiple luminaires, each luminaire comprising some of said lighting sources of the lighting installation (2), each luminaire comprising a device for controlling the supply of power to the lighting sources of the luminaire.

**9.** System according to any one of the preceding claims, wherein the reference luminance characteristics comprise at least one of the following characteristics:

- the minimum average luminance of the traffic lane;
- the general uniformity in minimum luminance of the traffic lane; and
- the longitudinal uniformity in minimum luminance of the traffic lane.

**10.** System according to any one of the preceding claims, when taken in combination with Claim 3, wherein the module (4) for determining a set of optical reflection characteristics is configured to determine multiple r-tables for the traffic lane according to multiple types of user that are capable of travelling in said traffic lane with which different viewing angles of the traffic lane are associated,
the control module (6) being configured so as, for a determined type of user travelling in the traffic lane, to:

- select the determined r-table whose associated viewing angle corresponds to the determined type of user, and

  - control at least some of the lighting sources of the lighting installation (2) using the selected determined r-table.

**11.** Method for managing at least one lighting installation (2) arranged to light a traffic lane (1), the lighting installation having multiple photometries (201, 202), each photometry being defined by:

- a lighting source or a set of lighting sources of the lighting installation (2), and
- values of luminous intensity that the lighting source or said set of lighting sources is capable of emitting in different directions;

the method comprising the steps of:

- acquiring an image ($L_{mes}$) of an area (11) of the traffic lane (1) to generate a luminance image of this area (11);
- determining a set of optical reflection characteristics of the area (11) of the traffic lane (1) according to:

  the acquired luminance image ($L_{mes}$);
  at least some of the photometries (201, 202) of the lighting installation (2);
  positioning data, such as the height, of the lighting source or sources of said photometries in relation to the area (11) of the traffic lane (1); and

- controlling at least some of the lighting sources of the lighting installation (2) according to: the determined optical reflection characteristics, at least some of the photometries of the lighting installation (2); reference luminance characteristics, the method being **characterized in that** the step of determining a set of optical reflection characteristics of the traffic lane (1) comprises at least the following steps:
- principal component analysis of sets of reference optical reflection characteristics (1010) to generate sets of virtual optical reflection characteristics, also called eigenvectors $r_{v1}, r_{v2},..., r_{vD}$ (1020);
- generating multiple virtual luminance maps $L_{v1}, L_{v2},..., L_{vD}$ (1030) according to: eigenvectors $r_{v1}, r_{v2}, ... , r_{vD}$, positioning data of the lighting sources of the lighting installation (2) in relation to the area (11) of the traffic lane (1), and photometry data during use of the lighting installation (2);
- breaking down the luminance map ($L_{mes}$) provided by the image acquisition device over the virtual luminance maps $L_{v1}, L_{v2},..., L_{vD}$ so as to obtain coefficients $\lambda_1, \lambda_2...\lambda_D$ associated with the virtual luminance maps; and
- determining the set of optical reflection characteristics of the traffic lane (1) by linear combination of the eigenvectors $r_{v1}, r_{v2},..., r_{vD}$ with the coefficients $\lambda_1, \lambda_2...\lambda_D$ obtained.

**12.** Method according to Claim 11, wherein the step of controlling the lighting sources is also carried out according to a type of user travelling in the traffic lane.

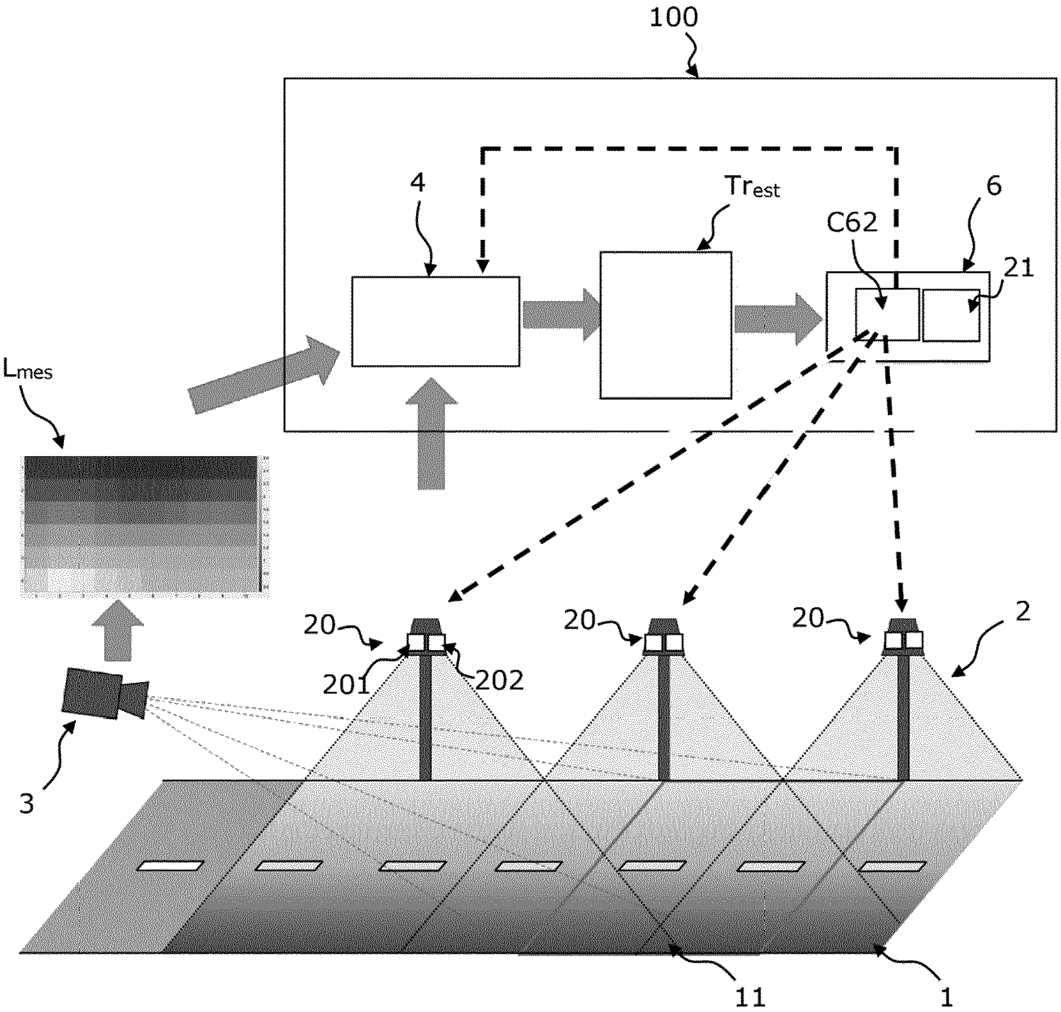


FIG.1

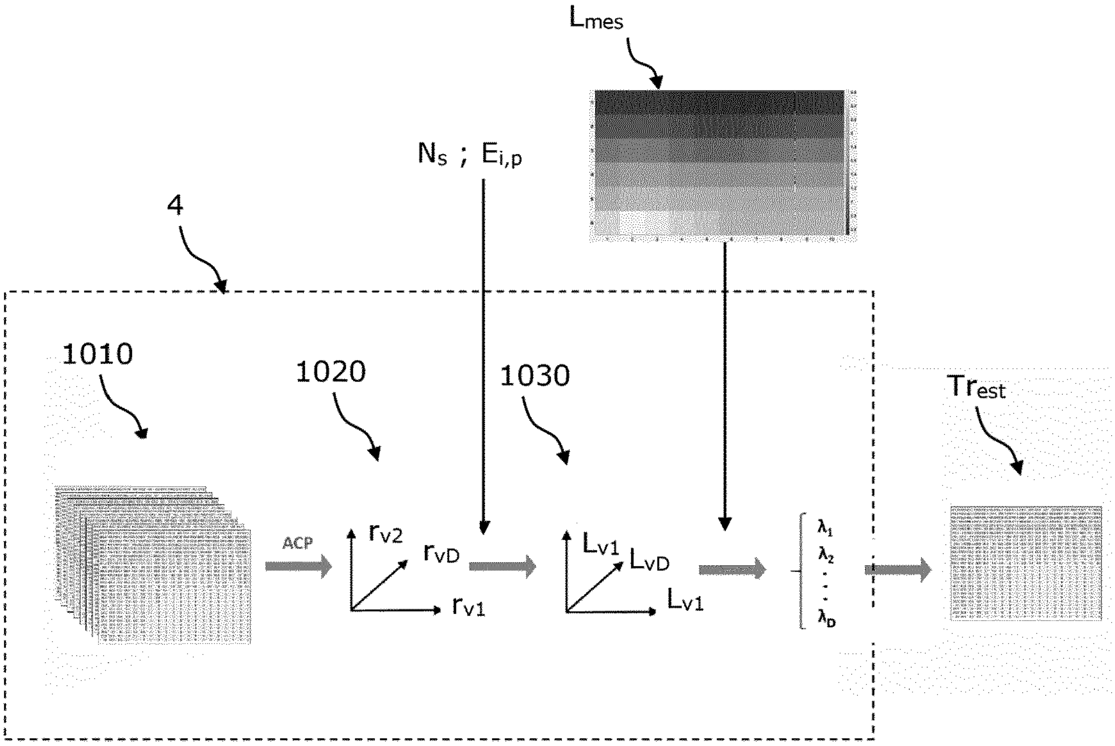

Lmes
Ns ; Ei,p
4
1010
1020
1030
Trest
ACP
rv2
rvD
rv1
Lv1
LvD
Lv1
λ1
λ2
λD


FIG.2

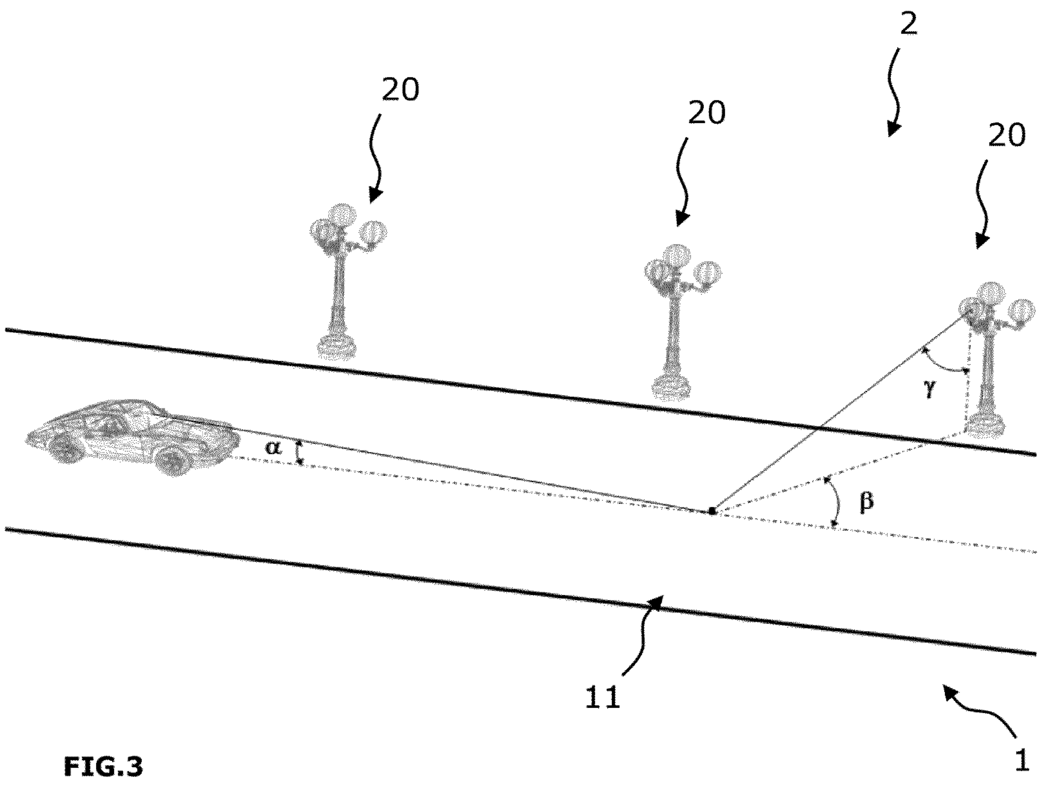


FIG.3

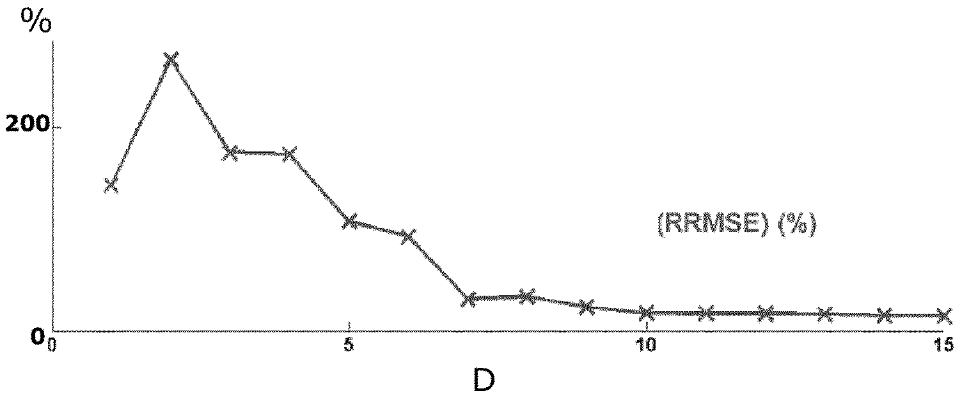


FIG.4

| R1 | | beta | | | | | | | | | | | | | | | | | | | |
|---|---|---|---|---|---|---|---|---|---|---|---|---|---|---|---|---|---|---|---|---|---|
| | | 0 | 2 | 5 | 10 | 15 | 20 | 25 | 30 | 35 | 40 | 45 | 60 | 75 | 90 | 105 | 120 | 135 | 150 | 165 | 180 |
| tangente(gamma) | 0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 | 655,0 |
| | 0,25 | 619,0 | 619,0 | 619,0 | 619,0 | 610,0 | 610,0 | 610,0 | 610,0 | 610,0 | 610,0 | 610,0 | 610,0 | 610,0 | 601,0 | 601,0 | 601,0 | 601,0 | 601,0 | 601,0 | 601,0 |
| | 0,5 | 539,0 | 539,0 | 539,0 | 539,0 | 539,0 | 539,0 | 521,0 | 521,0 | 521,0 | 521,0 | 521,0 | 503,0 | 503,0 | 503,0 | 503,0 | 503,0 | 503,0 | 503,0 | 503,0 | 503,0 |
| | 0,75 | 431,0 | 431,0 | 431,0 | 431,0 | 431,0 | 431,0 | 431,0 | 431,0 | 431,0 | 431,0 | 395,0 | 368,0 | 371,0 | 371,0 | 371,0 | 371,0 | 371,0 | 386,0 | 395,0 | 395,0 |
| | 1 | 341,0 | 341,0 | 341,0 | 341,0 | 323,0 | 323,0 | 305,0 | 296,0 | 287,0 | 287,0 | 287,0 | 269,0 | 269,0 | 269,0 | 269,0 | 269,0 | 269,0 | 278,0 | 278,0 | 278,0 |
| | 1,25 | 269,0 | 269,0 | 269,0 | 260,0 | 251,0 | 242,0 | 224,0 | 207,0 | 198,0 | 189,0 | 189,0 | 180,0 | 180,0 | 180,0 | 180,0 | 180,0 | 189,0 | 198,0 | 207,0 | 224,0 |
| | 1,5 | 224,0 | 224,0 | 224,0 | 215,0 | 198,0 | 180,0 | 171,0 | 162,0 | 153,0 | 148,0 | 144,0 | 144,0 | 139,0 | 139,0 | 139,0 | 144,0 | 148,0 | 153,0 | 162,0 | 180,0 |
| | 1,75 | 189,0 | 189,0 | 189,0 | 171,0 | 153,0 | 139,0 | 130,0 | 121,0 | 117,0 | 112,0 | 108,0 | 103,0 | 99,0 | 99,0 | 103,0 | 108,0 | 112,0 | 121,0 | 130,0 | 139,0 |
| | 2 | 162,0 | 162,0 | 157,0 | 135,0 | 117,0 | 108,0 | 99,0 | 94,0 | 90,0 | 85,0 | 85,0 | 83,0 | 84,0 | 84,0 | 86,0 | 90,0 | 94,0 | 99,0 | 103,0 | 111,0 |
| | 2,5 | 121,0 | 121,0 | 117,0 | 95,0 | 79,0 | 66,0 | 60,0 | 57,0 | 54,0 | 52,0 | 51,0 | 50,0 | 51,0 | 52,0 | 54,0 | 58,0 | 61,0 | 65,0 | 69,0 | 75,0 |
| | 3 | 94,0 | 94,0 | 86,0 | 66,0 | 49,0 | 41,0 | 38,0 | 36,0 | 34,0 | 33,0 | 32,0 | 31,0 | 31,0 | 33,0 | 35,0 | 38,0 | 40,0 | 43,0 | 47,0 | 51,0 |
| | 3,5 | 81,0 | 80,0 | 66,0 | 46,0 | 33,0 | 28,0 | 25,0 | 23,0 | 22,0 | 22,0 | 21,0 | 21,0 | 22,0 | 22,0 | 24,0 | 27,0 | 29,0 | 31,0 | 34,0 | 38,0 |
| | 4 | 71,0 | 69,0 | 55,0 | 32,0 | 23,0 | 20,0 | 18,0 | 16,0 | 15,0 | 14,0 | 14,0 | 14,0 | 15,0 | 17,0 | 19,0 | 20,0 | 22,0 | 23,0 | 25,0 | 27,0 |
| | 4,5 | 63,0 | 59,0 | 43,0 | 24,0 | 17,0 | 14,0 | 13,0 | 12,0 | 12,0 | 11,0 | 11,0 | 11,0 | 12,0 | 13,0 | 14,0 | 14,0 | 16,0 | 17,0 | 19,0 | 21,0 |
| | 5 | 57,0 | 52,0 | 36,0 | 19,0 | 14,0 | 12,0 | 10,0 | 9,0 | 9,0 | 8,8 | 8,7 | 8,7 | 9,0 | 10,0 | 11,0 | 13,0 | 14,0 | 15,0 | 16,0 | 16,0 |
| | 5,5 | 51,0 | 47,0 | 31,0 | 15,0 | 11,0 | 9,0 | 8,1 | 7,8 | 7,7 | 7,7 | 0,0 | 0,0 | 0,0 | 0,0 | 0,0 | 0,0 | 0,0 | 0,0 | 0,0 | 0,0 |
| | 6 | 47,0 | 42,0 | 25,0 | 12,0 | 8,5 | 7,2 | 6,5 | 6,3 | 6,2 | 0,0 | 0,0 | 0,0 | 0,0 | 0,0 | 0,0 | 0,0 | 0,0 | 0,0 | 0,0 | 0,0 |
| | 6,5 | 43,0 | 38,0 | 22,0 | 10,0 | 6,7 | 5,8 | 5,2 | 5,0 | 0,0 | 0,0 | 0,0 | 0,0 | 0,0 | 0,0 | 0,0 | 0,0 | 0,0 | 0,0 | 0,0 | 0,0 |
| | 7 | 40,0 | 34,0 | 18,0 | 8,1 | 5,6 | 4,8 | 4,4 | 4,2 | 0,0 | 0,0 | 0,0 | 0,0 | 0,0 | 0,0 | 0,0 | 0,0 | 0,0 | 0,0 | 0,0 | 0,0 |
| | 7,5 | 37,0 | 31,0 | 15,0 | 6,9 | 4,7 | 4,0 | 3,8 | 0,0 | 0,0 | 0,0 | 0,0 | 0,0 | 0,0 | 0,0 | 0,0 | 0,0 | 0,0 | 0,0 | 0,0 | 0,0 |
| | 8 | 35,0 | 28,0 | 14,0 | 5,7 | 4,0 | 3,6 | 3,2 | 0,0 | 0,0 | 0,0 | 0,0 | 0,0 | 0,0 | 0,0 | 0,0 | 0,0 | 0,0 | 0,0 | 0,0 | 0,0 |
| | 8,5 | 33,0 | 25,0 | 12,0 | 4,8 | 3,6 | 3,1 | 2,9 | 0,0 | 0,0 | 0,0 | 0,0 | 0,0 | 0,0 | 0,0 | 0,0 | 0,0 | 0,0 | 0,0 | 0,0 | 0,0 |
| | 9 | 31,0 | 23,0 | 10,0 | 4,1 | 3,2 | 2,8 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 9,5 | 30,0 | 22,0 | 9,0 | 3,7 | 2,8 | 2,5 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10 | 29,0 | 20,0 | 8,2 | 3,2 | 2,4 | 2,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10,5 | 28,0 | 18,0 | 7,3 | 3,0 | 2,2 | 1,9 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11 | 27,0 | 16,0 | 6,6 | 2,7 | 1,9 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11,5 | 26,0 | 15,0 | 6,1 | 2,4 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 12 | 25,0 | 14,0 | 5,6 | 2,2 | 1,6 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5A

| R2 | | beta | | | | | | | | | | | | | | | | | | | |
|---|---|---|---|---|---|---|---|---|---|---|---|---|---|---|---|---|---|---|---|---|---|
| | | 0 | 2 | 5 | 10 | 15 | 20 | 25 | 30 | 35 | 40 | 45 | 60 | 75 | 90 | 105 | 120 | 135 | 150 | 165 | 180 |
| tangente(gamma) | 0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 | 390,0 |
| | 0,25 | 411,0 | 411,0 | 411,0 | 411,0 | 411,0 | 411,0 | 411,0 | 411,0 | 411,0 | 411,0 | 379,0 | 368,0 | 357,0 | 357,0 | 346,0 | 346,0 | 346,0 | 335,0 | 335,0 | 335,0 |
| | 0,5 | 411,0 | 411,0 | 411,0 | 411,0 | 403,0 | 403,0 | 384,0 | 379,0 | 370,0 | 346,0 | 325,0 | 303,0 | 281,0 | 281,0 | 271,0 | 271,0 | 271,0 | 260,0 | 260,0 | 260,0 |
| | 0,75 | 379,0 | 379,0 | 379,0 | 368,0 | 357,0 | 346,0 | 325,0 | 303,0 | 281,0 | 260,0 | 238,0 | 216,0 | 206,0 | 206,0 | 206,0 | 206,0 | 206,0 | 206,0 | 206,0 | 206,0 |
| | 1 | 335,0 | 335,0 | 335,0 | 325,0 | 292,0 | 291,0 | 260,0 | 238,0 | 216,0 | 195,0 | 173,0 | 152,0 | 152,0 | 152,0 | 152,0 | 152,0 | 141,0 | 141,0 | 141,0 | 141,0 |
| | 1,25 | 303,0 | 303,0 | 292,0 | 271,0 | 238,0 | 206,0 | 184,0 | 152,0 | 130,0 | 119,0 | 108,0 | 100,0 | 103,0 | 106,0 | 108,0 | 108,0 | 114,0 | 114,0 | 119,0 | 119,0 |
| | 1,5 | 271,0 | 271,0 | 260,0 | 227,0 | 179,0 | 152,0 | 141,0 | 119,0 | 108,0 | 93,0 | 80,0 | 76,0 | 76,0 | 80,0 | 84,0 | 87,0 | 89,0 | 91,0 | 93,0 | 95,0 |
| | 1,75 | 249,0 | 238,0 | 227,0 | 195,0 | 152,0 | 124,0 | 106,0 | 91,0 | 78,0 | 67,0 | 61,0 | 52,0 | 54,0 | 58,0 | 63,0 | 67,0 | 69,0 | 71,0 | 73,0 | 74,0 |
| | 2 | 227,0 | 216,0 | 195,0 | 152,0 | 117,0 | 95,0 | 80,0 | 67,0 | 61,0 | 52,0 | 45,0 | 40,0 | 41,0 | 45,0 | 49,0 | 52,0 | 54,0 | 56,0 | 57,0 | 58,0 |
| | 2,5 | 195,0 | 190,0 | 146,0 | 110,0 | 74,0 | 58,0 | 48,0 | 40,0 | 35,0 | 30,0 | 27,0 | 24,0 | 26,0 | 28,0 | 30,0 | 33,0 | 35,0 | 38,0 | 40,0 | 41,0 |
| | 3 | 160,0 | 155,0 | 115,0 | 67,0 | 43,0 | 33,0 | 26,0 | 21,0 | 18,0 | 17,0 | 16,0 | 16,0 | 17,0 | 17,0 | 18,0 | 21,0 | 22,0 | 24,0 | 26,0 | 27,0 |
| | 3,5 | 146,0 | 131,0 | 87,0 | 41,0 | 25,0 | 18,0 | 15,0 | 13,0 | 12,0 | 11,0 | 11,0 | 11,0 | 11,0 | 11,0 | 12,0 | 14,0 | 15,0 | 17,0 | 18,0 | 21,0 |
| | 4 | 132,0 | 113,0 | 67,0 | 27,0 | 15,0 | 12,0 | 10,0 | 9,4 | 8,7 | 8,2 | 7,9 | 7,6 | 7,9 | 8,7 | 9,6 | 11,0 | 12,0 | 13,0 | 15,0 | 17,0 |
| | 4,5 | 118,0 | 95,0 | 50,0 | 20,0 | 12,0 | 8,9 | 7,4 | 6,6 | 6,3 | 6,1 | 5,7 | 5,6 | 5,8 | 6,3 | 7,1 | 8,4 | 10,0 | 12,0 | 13,0 | 14,0 |
| | 5 | 106,0 | 81,0 | 38,0 | 14,0 | 8,2 | 6,3 | 5,4 | 5,0 | 4,8 | 4,7 | 4,5 | 4,4 | 4,8 | 5,2 | 6,2 | 7,4 | 8,5 | 9,5 | 10,0 | 11,0 |
| | 5,5 | 96,0 | 69,0 | 29,0 | 11,0 | 6,3 | 5,1 | 4,4 | 4,1 | 3,9 | 3,8 | 0,0 | 0,0 | 0,0 | 0,0 | 0,0 | 0,0 | 0,0 | 0,0 | 0,0 | 0,0 |
| | 6 | 87,0 | 58,0 | 22,0 | 8,0 | 5,0 | 3,9 | 3,5 | 3,4 | 3,2 | 0,0 | 0,0 | 0,0 | 0,0 | 0,0 | 0,0 | 0,0 | 0,0 | 0,0 | 0,0 | 0,0 |
| | 6,5 | 78,0 | 50,0 | 17,0 | 6,1 | 3,8 | 3,1 | 2,8 | 2,7 | 0,0 | 0,0 | 0,0 | 0,0 | 0,0 | 0,0 | 0,0 | 0,0 | 0,0 | 0,0 | 0,0 | 0,0 |
| | 7 | 71,0 | 43,0 | 14,0 | 4,9 | 3,1 | 2,5 | 2,3 | 2,2 | 0,0 | 0,0 | 0,0 | 0,0 | 0,0 | 0,0 | 0,0 | 0,0 | 0,0 | 0,0 | 0,0 | 0,0 |
| | 7,5 | 67,0 | 38,0 | 12,0 | 4,1 | 2,6 | 2,1 | 1,9 | 0,0 | 0,0 | 0,0 | 0,0 | 0,0 | 0,0 | 0,0 | 0,0 | 0,0 | 0,0 | 0,0 | 0,0 | 0,0 |
| | 8 | 63,0 | 33,0 | 10,0 | 3,4 | 2,2 | 1,8 | 1,7 | 0,0 | 0,0 | 0,0 | 0,0 | 0,0 | 0,0 | 0,0 | 0,0 | 0,0 | 0,0 | 0,0 | 0,0 | 0,0 |
| | 8,5 | 58,0 | 28,0 | 8,7 | 2,9 | 1,9 | 1,6 | 1,5 | 0,0 | 0,0 | 0,0 | 0,0 | 0,0 | 0,0 | 0,0 | 0,0 | 0,0 | 0,0 | 0,0 | 0,0 | 0,0 |
| | 9 | 55,0 | 25,0 | 7,4 | 2,5 | 1,7 | 1,4 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 9,5 | 52,0 | 23,0 | 6,5 | 2,2 | 1,5 | 1,3 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10 | 49,0 | 21,0 | 5,6 | 1,9 | 1,4 | 1,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10,5 | 47,0 | 18,0 | 5,0 | 1,7 | 1,3 | 1,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11 | 44,0 | 16,0 | 4,4 | 1,6 | 1,2 | 1,1 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11,5 | 42,0 | 14,0 | 4,0 | 1,5 | 1,1 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 12 | 41,0 | 13,0 | 3,6 | 1,4 | 1,1 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5B

| R3 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 | 294,0 |
| 0,25 | 326,0 | 326,0 | 321,0 | 321,0 | 317,0 | 312,0 | 308,0 | 308,0 | 303,0 | 298,0 | 294,0 | 280,0 | 271,0 | 262,0 | 258,0 | 253,0 | 249,0 | 244,0 | 240,0 | 240,0 |
| 0,5 | 344,0 | 344,0 | 339,0 | 339,0 | 326,0 | 317,0 | 308,0 | 298,0 | 289,0 | 276,0 | 262,0 | 235,0 | 217,0 | 204,0 | 199,0 | 199,0 | 199,0 | 199,0 | 194,0 | 194,0 |
| 0,75 | 357,0 | 353,0 | 353,0 | 339,0 | 321,0 | 303,0 | 285,0 | 267,0 | 244,0 | 222,0 | 204,0 | 176,0 | 158,0 | 149,0 | 149,0 | 149,0 | 145,0 | 136,0 | 136,0 | 140,0 |
| 1 | 362,0 | 362,0 | 352,0 | 326,0 | 300,0 | 249,0 | 226,0 | 204,0 | 181,0 | 158,0 | 140,0 | 118,0 | 104,0 | 100,0 | 100,0 | 100,0 | 100,0 | 100,0 | 100,0 | 100,0 |
| 1,25 | 357,0 | 357,0 | 348,0 | 298,0 | 244,0 | 208,0 | 176,0 | 154,0 | 136,0 | 118,0 | 104,0 | 83,0 | 73,0 | 70,0 | 71,0 | 74,0 | 77,0 | 77,0 | 77,0 | 78,0 |
| 1,5 | 353,0 | 348,0 | 326,0 | 267,0 | 217,0 | 176,0 | 145,0 | 117,0 | 100,0 | 86,0 | 78,0 | 72,0 | 60,0 | 57,0 | 58,0 | 60,0 | 60,0 | 60,0 | 61,0 | 62,0 |
| 1,75 | 339,0 | 335,0 | 303,0 | 231,0 | 172,0 | 127,0 | 104,0 | 89,0 | 79,0 | 78,0 | 62,0 | 51,0 | 45,0 | 44,0 | 45,0 | 46,0 | 45,0 | 45,0 | 46,0 | 47,0 |
| 2 | 326,0 | 321,0 | 280,0 | 190,0 | 136,0 | 100,0 | 82,0 | 71,0 | 62,0 | 54,0 | 48,0 | 39,0 | 34,0 | 34,0 | 34,0 | 35,0 | 36,0 | 36,0 | 37,0 | 38,0 |
| 2,5 | 289,0 | 280,0 | 222,0 | 127,0 | 86,0 | 65,0 | 54,0 | 44,0 | 38,0 | 34,0 | 25,0 | 23,0 | 22,0 | 23,0 | 24,0 | 24,0 | 24,0 | 24,0 | 24,0 | 25,0 |
| 3 | 253,0 | 235,0 | 163,0 | 85,0 | 53,0 | 38,0 | 31,0 | 25,0 | 23,0 | 20,0 | 18,0 | 15,0 | 15,0 | 14,0 | 15,0 | 15,0 | 16,0 | 16,0 | 17,0 | 17,0 |
| 3,5 | 217,0 | 194,0 | 122,0 | 60,0 | 35,0 | 25,0 | 22,0 | 19,0 | 16,0 | 15,0 | 13,0 | 9,9 | 9,0 | 9,0 | 9,9 | 11,0 | 11,0 | 12,0 | 12,0 | 13,0 |
| 4 | 190,0 | 163,0 | 90,0 | 43,0 | 26,0 | 20,0 | 16,0 | 14,0 | 12,0 | 9,9 | 9,0 | 7,4 | 7,0 | 7,1 | 7,5 | 8,3 | 8,7 | 9,0 | 9,0 | 9,9 |
| 4,5 | 163,0 | 136,0 | 73,0 | 31,0 | 20,0 | 15,0 | 12,0 | 9,9 | 9,0 | 8,3 | 7,7 | 5,4 | 4,8 | 4,9 | 5,4 | 6,1 | 7,0 | 7,7 | 8,3 | 8,5 |
| 5 | 145,0 | 109,0 | 60,0 | 24,0 | 16,0 | 12,0 | 9,0 | 8,2 | 7,7 | 6,8 | 6,1 | 4,3 | 3,2 | 3,3 | 3,7 | 4,3 | 5,2 | 6,5 | 6,9 | 7,1 |
| 5,5 | 127,0 | 94,0 | 47,0 | 18,0 | 14,0 | 9,9 | 7,7 | 6,9 | 6,1 | 5,7 | 0,0 | 0,0 | 0,0 | 0,0 | 0,0 | 0,0 | 0,0 | 0,0 | 0,0 | 0,0 |
| 6 | 113,0 | 77,0 | 36,0 | 15,0 | 11,0 | 9,0 | 8,0 | 6,5 | 5,1 | 0,0 | 0,0 | 0,0 | 0,0 | 0,0 | 0,0 | 0,0 | 0,0 | 0,0 | 0,0 | 0,0 |
| 6,5 | 104,0 | 68,0 | 30,0 | 11,0 | 8,3 | 6,4 | 5,1 | 4,3 | 0,0 | 0,0 | 0,0 | 0,0 | 0,0 | 0,0 | 0,0 | 0,0 | 0,0 | 0,0 | 0,0 | 0,0 |
| 7 | 95,0 | 60,0 | 24,0 | 8,5 | 6,5 | 5,2 | 4,3 | 3,4 | 0,0 | 0,0 | 0,0 | 0,0 | 0,0 | 0,0 | 0,0 | 0,0 | 0,0 | 0,0 | 0,0 | 0,0 |
| 7,5 | 87,0 | 53,0 | 21,0 | 7,1 | 5,3 | 4,4 | 3,6 | 0,0 | 0,0 | 0,0 | 0,0 | 0,0 | 0,0 | 0,0 | 0,0 | 0,0 | 0,0 | 0,0 | 0,0 | 0,0 |
| 8 | 83,0 | 47,0 | 17,0 | 6,1 | 4,4 | 3,6 | 3,1 | 0,0 | 0,0 | 0,0 | 0,0 | 0,0 | 0,0 | 0,0 | 0,0 | 0,0 | 0,0 | 0,0 | 0,0 | 0,0 |
| 8,5 | 70,0 | 42,0 | 15,0 | 5,2 | 3,7 | 3,1 | 2,6 | 0,0 | 0,0 | 0,0 | 0,0 | 0,0 | 0,0 | 0,0 | 0,0 | 0,0 | 0,0 | 0,0 | 0,0 | 0,0 |
| 9 | 73,0 | 38,0 | 12,0 | 4,3 | 3,2 | 2,4 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 69,0 | 34,0 | 9,9 | 3,8 | 3,5 | 2,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 65,0 | 32,0 | 9,0 | 3,3 | 2,4 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 62,0 | 29,0 | 8,0 | 3,0 | 2,1 | 1,9 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 59,0 | 26,0 | 7,4 | 2,6 | 1,9 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 56,0 | 24,0 | 6,3 | 2,4 | 1,8 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 53,0 | 22,0 | 5,6 | 2,1 | 1,8 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5C

| R4 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 | 264,0 |
| 0,25 | 297,0 | 317,0 | 317,0 | 317,0 | 317,0 | 310,0 | 304,0 | 290,0 | 284,0 | 277,0 | 271,0 | 244,0 | 231,0 | 224,0 | 224,0 | 218,0 | 218,0 | 211,0 | 211,0 | 211,0 |
| 0,5 | 330,0 | 343,0 | 343,0 | 343,0 | 330,0 | 310,0 | 297,0 | 284,0 | 277,0 | 264,0 | 251,0 | 218,0 | 198,0 | 185,0 | 178,0 | 172,0 | 172,0 | 165,0 | 165,0 | 165,0 |
| 0,75 | 376,0 | 383,0 | 370,0 | 350,0 | 330,0 | 304,0 | 277,0 | 251,0 | 231,0 | 211,0 | 198,0 | 165,0 | 139,0 | 132,0 | 132,0 | 125,0 | 125,0 | 125,0 | 119,0 | 119,0 |
| 1 | 396,0 | 396,0 | 396,0 | 330,0 | 290,0 | 251,0 | 218,0 | 198,0 | 185,0 | 165,0 | 145,0 | 112,0 | 86,0 | 86,0 | 86,0 | 86,0 | 86,0 | 87,0 | 87,0 | 87,0 |
| 1,25 | 403,0 | 409,0 | 370,0 | 310,0 | 251,0 | 211,0 | 178,0 | 152,0 | 132,0 | 115,0 | 103,0 | 77,0 | 66,0 | 65,0 | 65,0 | 63,0 | 65,0 | 66,0 | 67,0 | 68,0 |
| 1,5 | 409,0 | 396,0 | 356,0 | 284,0 | 218,0 | 172,0 | 139,0 | 115,0 | 100,0 | 88,0 | 79,0 | 61,0 | 50,0 | 50,0 | 50,0 | 50,0 | 52,0 | 55,0 | 55,0 | 55,0 |
| 1,75 | 409,0 | 396,0 | 343,0 | 251,0 | 178,0 | 139,0 | 108,0 | 88,0 | 75,0 | 66,0 | 59,0 | 44,0 | 37,0 | 37,0 | 37,0 | 38,0 | 40,0 | 41,0 | 42,0 | 45,0 |
| 2 | 409,0 | 383,0 | 317,0 | 224,0 | 145,0 | 106,0 | 86,0 | 71,0 | 59,0 | 53,0 | 45,0 | 33,0 | 29,0 | 29,0 | 29,0 | 30,0 | 32,0 | 33,0 | 34,0 | 37,0 |
| 2,5 | 396,0 | 356,0 | 264,0 | 152,0 | 100,0 | 73,0 | 55,0 | 45,0 | 37,0 | 32,0 | 28,0 | 21,0 | 20,0 | 20,0 | 20,0 | 21,0 | 22,0 | 24,0 | 25,0 | 26,0 |
| 3 | 370,0 | 304,0 | 211,0 | 95,0 | 63,0 | 44,0 | 30,0 | 25,0 | 21,0 | 17,0 | 16,0 | 13,0 | 12,0 | 12,0 | 13,0 | 13,0 | 15,0 | 16,0 | 17,0 | 19,0 |
| 3,5 | 343,0 | 271,0 | 165,0 | 63,0 | 40,0 | 26,0 | 19,0 | 15,0 | 13,0 | 12,0 | 11,0 | 9,8 | 9,1 | 8,8 | 8,8 | 9,4 | 11,0 | 12,0 | 13,0 | 15,0 |
| 4 | 317,0 | 238,0 | 132,0 | 45,0 | 24,0 | 16,0 | 13,0 | 11,0 | 9,6 | 9,0 | 8,4 | 7,5 | 7,4 | 7,4 | 7,5 | 7,9 | 8,6 | 9,4 | 11,0 | 12,0 |
| 4,5 | 297,0 | 211,0 | 106,0 | 33,0 | 17,0 | 11,0 | 9,2 | 7,9 | 7,3 | 6,6 | 6,3 | 6,1 | 6,1 | 6,4 | 6,5 | 6,7 | 7,1 | 7,7 | 8,7 | 9,6 |
| 5 | 277,0 | 185,0 | 79,0 | 24,0 | 13,0 | 8,3 | 7,0 | 6,3 | 5,7 | 5,1 | 5,0 | 5,0 | 5,1 | 5,4 | 5,5 | 5,8 | 6,1 | 6,3 | 6,9 | 7,7 |
| 5,5 | 257,0 | 161,0 | 59,0 | 19,0 | 9,9 | 7,1 | 5,7 | 5,0 | 4,6 | 4,2 | 0,0 | 0,0 | 0,0 | 0,0 | 0,0 | 0,0 | 0,0 | 0,0 | 0,0 | 0,0 |
| 6 | 244,0 | 140,0 | 46,0 | 13,0 | 7,7 | 5,7 | 4,8 | 4,1 | 3,8 | 0,0 | 0,0 | 0,0 | 0,0 | 0,0 | 0,0 | 0,0 | 0,0 | 0,0 | 0,0 | 0,0 |
| 6,5 | 231,0 | 122,0 | 37,0 | 11,0 | 5,9 | 4,6 | 3,7 | 3,2 | 0,0 | 0,0 | 0,0 | 0,0 | 0,0 | 0,0 | 0,0 | 0,0 | 0,0 | 0,0 | 0,0 | 0,0 |
| 7 | 218,0 | 106,0 | 32,0 | 9,0 | 5,0 | 3,8 | 3,2 | 2,6 | 0,0 | 0,0 | 0,0 | 0,0 | 0,0 | 0,0 | 0,0 | 0,0 | 0,0 | 0,0 | 0,0 | 0,0 |
| 7,5 | 205,0 | 94,0 | 26,0 | 7,5 | 4,4 | 3,3 | 2,8 | 0,0 | 0,0 | 0,0 | 0,0 | 0,0 | 0,0 | 0,0 | 0,0 | 0,0 | 0,0 | 0,0 | 0,0 | 0,0 |
| 8 | 193,0 | 82,0 | 22,0 | 6,3 | 3,7 | 2,9 | 2,4 | 0,0 | 0,0 | 0,0 | 0,0 | 0,0 | 0,0 | 0,0 | 0,0 | 0,0 | 0,0 | 0,0 | 0,0 | 0,0 |
| 8,5 | 184,0 | 74,0 | 19,0 | 5,3 | 3,2 | 2,5 | 2,1 | 0,0 | 0,0 | 0,0 | 0,0 | 0,0 | 0,0 | 0,0 | 0,0 | 0,0 | 0,0 | 0,0 | 0,0 | 0,0 |
| 9 | 174,0 | 66,0 | 16,0 | 4,6 | 2,8 | 2,1 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 169,0 | 59,0 | 13,0 | 4,1 | 2,5 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 164,0 | 53,0 | 12,0 | 3,7 | 2,2 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 158,0 | 49,0 | 11,0 | 3,3 | 2,1 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 153,0 | 45,0 | 9,5 | 3,0 | 2,0 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 149,0 | 41,0 | 8,4 | 2,6 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 145,0 | 37,0 | 7,7 | 2,5 | 1,7 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5D

| C1 | | beta | | | | | | | | | | | | | | | | | | | |
|---|---|---|---|---|---|---|---|---|---|---|---|---|---|---|---|---|---|---|---|---|---|
| | | 0 | 2 | 5 | 10 | 15 | 20 | 25 | 30 | 35 | 40 | 45 | 60 | 75 | 90 | 105 | 120 | 135 | 150 | 165 | 180 |
| tangente(gamma) | 0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 | 770,0 |
| | 0,25 | 710,0 | 708,0 | 703,0 | 710,0 | 712,0 | 710,0 | 708,0 | 708,0 | 707,0 | 704,0 | 702,0 | 708,0 | 698,0 | 702,0 | 704,0 | 714,0 | 708,0 | 724,0 | 719,0 | 723,0 |
| | 0,5 | 586,0 | 582,0 | 587,0 | 581,0 | 581,0 | 576,0 | 570,0 | 567,0 | 564,0 | 556,0 | 548,0 | 541,0 | 531,0 | 544,0 | 546,0 | 562,0 | 566,0 | 587,0 | 581,0 | 589,0 |
| | 0,75 | 468,0 | 467,0 | 466,0 | 455,0 | 467,0 | 446,0 | 430,0 | 420,0 | 410,0 | 399,0 | 390,0 | 383,0 | 373,0 | 384,0 | 391,0 | 412,0 | 419,0 | 437,0 | 438,0 | 445,0 |
| | 1 | 378,0 | 372,0 | 373,0 | 363,0 | 347,0 | 331,0 | 314,0 | 299,0 | 285,0 | 273,0 | 263,0 | 260,0 | 250,0 | 265,0 | 278,0 | 295,0 | 305,0 | 318,0 | 323,0 | 329,0 |
| | 1,25 | 308,0 | 304,0 | 305,0 | 285,0 | 270,0 | 244,0 | 218,0 | 203,0 | 193,0 | 185,0 | 179,0 | 173,0 | 173,0 | 183,0 | 194,0 | 207,0 | 224,0 | 237,0 | 238,0 | 245,0 |
| | 1,5 | 258,0 | 254,0 | 251,0 | 229,0 | 203,0 | 178,0 | 154,0 | 143,0 | 134,0 | 128,0 | 124,0 | 120,0 | 120,0 | 132,0 | 140,0 | 155,0 | 163,0 | 177,0 | 179,0 | 184,0 |
| | 1,75 | 217,0 | 214,0 | 205,0 | 182,0 | 153,0 | 129,0 | 110,0 | 100,0 | 95,0 | 90,0 | 87,0 | 84,0 | 88,0 | 98,0 | 103,0 | 116,0 | 123,0 | 134,0 | 137,0 | 138,0 |
| | 2 | 188,0 | 181,0 | 174,0 | 142,0 | 116,0 | 95,0 | 80,0 | 73,0 | 69,0 | 64,0 | 62,0 | 64,0 | 64,0 | 72,0 | 78,0 | 88,0 | 95,0 | 105,0 | 108,0 | 109,0 |
| | 2,5 | 145,0 | 136,0 | 121,0 | 90,0 | 66,0 | 53,0 | 46,0 | 41,0 | 39,0 | 37,0 | 36,0 | 36,0 | 39,0 | 44,0 | 50,0 | 55,0 | 60,0 | 66,0 | 69,0 | 71,0 |
| | 3 | 118,0 | 108,0 | 87,0 | 57,0 | 41,0 | 32,0 | 28,0 | 26,0 | 25,0 | 23,0 | 22,0 | 23,0 | 25,0 | 28,0 | 31,0 | 37,0 | 41,0 | 45,0 | 47,0 | 51,0 |
| | 3,5 | 97,0 | 87,0 | 64,0 | 39,0 | 26,0 | 20,0 | 18,0 | 17,0 | 16,0 | 15,0 | 15,0 | 16,0 | 17,0 | 19,0 | 23,0 | 27,0 | 30,0 | 33,0 | 35,0 | 37,0 |
| | 4 | 80,0 | 69,0 | 50,0 | 29,0 | 17,0 | 14,0 | 13,0 | 12,0 | 11,0 | 11,0 | 11,0 | 11,0 | 13,0 | 15,0 | 17,0 | 19,0 | 22,0 | 26,0 | 27,0 | 29,0 |
| | 4,5 | 70,0 | 58,0 | 37,0 | 21,0 | 13,0 | 10,0 | 9,0 | 8,0 | 8,0 | 8,0 | 8,0 | 9,0 | 10,0 | 12,0 | 14,0 | 16,0 | 17,0 | 20,0 | 21,0 | 22,0 |
| | 5 | 60,0 | 51,0 | 29,0 | 15,0 | 9,0 | 7,0 | 7,0 | 6,0 | 6,0 | 6,0 | 6,0 | 7,0 | 7,0 | 9,0 | 10,0 | 12,0 | 14,0 | 17,0 | 17,0 | 18,0 |
| | 5,5 | 52,0 | 41,0 | 23,0 | 12,0 | 7,0 | 6,0 | 6,0 | 6,0 | 5,0 | 4,0 | 0,0 | 0,0 | 0,0 | 0,0 | 0,0 | 0,0 | 0,0 | 0,0 | 0,0 | 0,0 |
| | 6 | 48,0 | 36,0 | 19,0 | 8,0 | 6,0 | 5,0 | 5,0 | 5,0 | 5,0 | 0,0 | 0,0 | 0,0 | 0,0 | 0,0 | 0,0 | 0,0 | 0,0 | 0,0 | 0,0 | 0,0 |
| | 6,5 | 44,0 | 32,0 | 17,0 | 7,0 | 6,0 | 5,0 | 5,0 | 5,0 | 0,0 | 0,0 | 0,0 | 0,0 | 0,0 | 0,0 | 0,0 | 0,0 | 0,0 | 0,0 | 0,0 | 0,0 |
| | 7 | 41,0 | 28,0 | 14,0 | 6,0 | 5,0 | 4,0 | 4,0 | 4,0 | 0,0 | 0,0 | 0,0 | 0,0 | 0,0 | 0,0 | 0,0 | 0,0 | 0,0 | 0,0 | 0,0 | 0,0 |
| | 7,5 | 37,0 | 26,0 | 12,0 | 6,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| | 8 | 34,0 | 23,0 | 11,0 | 5,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| | 8,5 | 32,0 | 21,0 | 9,0 | 5,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| | 9 | 29,0 | 19,0 | 8,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 9,5 | 27,0 | 17,0 | 7,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10 | 26,0 | 16,0 | 6,0 | 3,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10,5 | 25,0 | 16,0 | 6,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11 | 23,0 | 15,0 | 6,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11,5 | 22,0 | 14,0 | 6,0 | 3,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 12 | 21,0 | 14,0 | 5,0 | 3,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5E

| C2 | beta | | | | | | | | | | | | | | | | | | |
|---|---|---|---|---|---|---|---|---|---|---|---|---|---|---|---|---|---|---|---|
| tangente (gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 | 329,0 |
| 0,25 | 362,0 | 356,0 | 371,0 | 364,0 | 371,0 | 369,0 | 362,0 | 357,0 | 351,0 | 349,0 | 348,0 | 340,0 | 338,0 | 312,0 | 299,0 | 294,0 | 298,0 | 288,0 | 292,0 | 281,0 |
| 0,5 | 379,0 | 368,0 | 375,0 | 373,0 | 367,0 | 359,0 | 350,0 | 340,0 | 328,0 | 317,0 | 306,0 | 280,0 | 266,0 | 249,0 | 237,0 | 237,0 | 231,0 | 231,0 | 227,0 | 235,0 |
| 0,75 | 380,0 | 375,0 | 378,0 | 365,0 | 351,0 | 334,0 | 315,0 | 295,0 | 275,0 | 256,0 | 239,0 | 218,0 | 198,0 | 178,0 | 175,0 | 176,0 | 176,0 | 169,0 | 175,0 | 176,0 |
| 1 | 372,0 | 375,0 | 372,0 | 354,0 | 315,0 | 277,0 | 243,0 | 221,0 | 206,0 | 192,0 | 181,0 | 152,0 | 134,0 | 130,0 | 125,0 | 124,0 | 125,0 | 129,0 | 128,0 | 128,0 |
| 1,25 | 375,0 | 373,0 | 352,0 | 318,0 | 265,0 | 221,0 | 189,0 | 166,0 | 150,0 | 136,0 | 125,0 | 107,0 | 91,0 | 93,0 | 91,0 | 91,0 | 88,0 | 94,0 | 97,0 | 97,0 |
| 1,5 | 354,0 | 352,0 | 336,0 | 271,0 | 213,0 | 170,0 | 140,0 | 121,0 | 109,0 | 97,0 | 87,0 | 76,0 | 67,0 | 65,0 | 66,0 | 66,0 | 67,0 | 68,0 | 71,0 | 71,0 |
| 1,75 | 333,0 | 327,0 | 302,0 | 222,0 | 166,0 | 129,0 | 104,0 | 90,0 | 75,0 | 68,0 | 63,0 | 53,0 | 51,0 | 49,0 | 49,0 | 47,0 | 52,0 | 51,0 | 53,0 | 54,0 |
| 2 | 318,0 | 310,0 | 266,0 | 180,0 | 121,0 | 90,0 | 75,0 | 62,0 | 54,0 | 50,0 | 48,0 | 40,0 | 40,0 | 38,0 | 38,0 | 38,0 | 41,0 | 41,0 | 43,0 | 45,0 |
| 2,5 | 268,0 | 262,0 | 205,0 | 119,0 | 72,0 | 50,0 | 41,0 | 36,0 | 33,0 | 29,0 | 26,0 | 25,0 | 23,0 | 24,0 | 25,0 | 24,0 | 26,0 | 27,0 | 29,0 | 28,0 |
| 3 | 227,0 | 217,0 | 147,0 | 74,0 | 42,0 | 29,0 | 25,0 | 23,0 | 21,0 | 19,0 | 18,0 | 16,0 | 16,0 | 17,0 | 18,0 | 17,0 | 19,0 | 21,0 | 21,0 | 23,0 |
| 3,5 | 194,0 | 168,0 | 106,0 | 47,0 | 30,0 | 22,0 | 17,0 | 14,0 | 13,0 | 12,0 | 12,0 | 11,0 | 10,0 | 11,0 | 12,0 | 13,0 | 15,0 | 14,0 | 15,0 | 14,0 |
| 4 | 168,0 | 136,0 | 76,0 | 34,0 | 19,0 | 14,0 | 13,0 | 11,0 | 10,0 | 10,0 | 10,0 | 8,0 | 8,0 | 9,0 | 10,0 | 9,0 | 11,0 | 12,0 | 11,0 | 13,0 |
| 4,5 | 141,0 | 111,0 | 54,0 | 21,0 | 14,0 | 11,0 | 9,0 | 8,0 | 8,0 | 8,0 | 8,0 | 7,0 | 7,0 | 8,0 | 8,0 | 8,0 | 8,0 | 10,0 | 10,0 | 11,0 |
| 5 | 126,0 | 90,0 | 43,0 | 17,0 | 10,0 | 8,0 | 8,0 | 7,0 | 6,0 | 6,0 | 7,0 | 6,0 | 7,0 | 6,0 | 6,0 | 7,0 | 8,0 | 8,0 | 8,0 | 9,0 |
| 5,5 | 107,0 | 79,0 | 32,0 | 12,0 | 8,0 | 7,0 | 7,0 | 7,0 | 6,0 | 5,0 | 0,0 | 0,0 | 0,0 | 0,0 | 0,0 | 0,0 | 0,0 | 0,0 | 0,0 | 0,0 |
| 6 | 94,0 | 65,0 | 26,0 | 10,0 | 7,0 | 6,0 | 6,0 | 6,0 | 5,0 | 0,0 | 0,0 | 0,0 | 0,0 | 0,0 | 0,0 | 0,0 | 0,0 | 0,0 | 0,0 | 0,0 |
| 6,5 | 86,0 | 56,0 | 21,0 | 8,0 | 7,0 | 6,0 | 5,0 | 5,0 | 0,0 | 0,0 | 0,0 | 0,0 | 0,0 | 0,0 | 0,0 | 0,0 | 0,0 | 0,0 | 0,0 | 0,0 |
| 7 | 78,0 | 50,0 | 17,0 | 7,0 | 5,0 | 5,0 | 5,0 | 5,0 | 0,0 | 0,0 | 0,0 | 0,0 | 0,0 | 0,0 | 0,0 | 0,0 | 0,0 | 0,0 | 0,0 | 0,0 |
| 7,5 | 70,0 | 41,0 | 14,0 | 7,0 | 4,0 | 3,0 | 4,0 | 0,0 | 0,0 | 0,0 | 0,0 | 0,0 | 0,0 | 0,0 | 0,0 | 0,0 | 0,0 | 0,0 | 0,0 | 0,0 |
| 8 | 63,0 | 37,0 | 11,0 | 5,0 | 4,0 | 4,0 | 4,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 60,0 | 37,0 | 10,0 | 5,0 | 4,0 | 4,0 | 4,0 | 0,0 | 0,0 | 0,0 | 0,0 | 0,0 | 0,0 | 0,0 | 0,0 | 0,0 | 0,0 | 0,0 | 0,0 | 0,0 |
| 9 | 56,0 | 32,0 | 9,0 | 5,0 | 4,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 53,0 | 28,0 | 9,0 | 4,0 | 4,0 | 4,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 52,0 | 27,0 | 7,0 | 5,0 | 4,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 45,0 | 23,0 | 7,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 43,0 | 22,0 | 7,0 | 3,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 53,0 | 22,0 | 7,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 42,0 | 20,0 | 7,0 | 4,0 | 3,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5F

| N1 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 | 768,0 |
| 0,25 | 694,0 | 694,0 | 694,0 | 694,0 | 694,0 | 693,0 | 693,0 | 693,0 | 693,0 | 693,0 | 695,0 | 699,0 | 702,0 | 714,0 | 720,0 | 734,0 | 741,0 | 751,0 | 753,0 | 757,0 |
| 0,5 | 557,0 | 557,0 | 557,0 | 555,0 | 554,0 | 550,0 | 546,0 | 544,0 | 544,0 | 543,0 | 543,0 | 542,0 | 547,0 | 564,0 | 577,0 | 600,0 | 615,0 | 633,0 | 640,0 | 646,0 |
| 0,75 | 424,0 | 424,0 | 424,0 | 417,0 | 415,0 | 406,0 | 397,0 | 392,0 | 388,0 | 382,0 | 378,0 | 381,0 | 388,0 | 407,0 | 425,0 | 450,0 | 469,0 | 489,0 | 497,0 | 505,0 |
| 1 | 323,0 | 322,0 | 321,0 | 310,0 | 302,0 | 289,0 | 278,0 | 271,0 | 266,0 | 261,0 | 257,0 | 259,0 | 266,0 | 284,0 | 303,0 | 328,0 | 346,0 | 366,0 | 375,0 | 381,0 |
| 1,25 | 252,0 | 250,0 | 247,0 | 234,0 | 220,0 | 206,0 | 193,0 | 186,0 | 180,0 | 176,0 | 173,0 | 175,0 | 183,0 | 200,0 | 216,0 | 237,0 | 254,0 | 271,0 | 279,0 | 285,0 |
| 1,5 | 202,0 | 198,0 | 193,0 | 177,0 | 160,0 | 147,0 | 135,0 | 128,0 | 124,0 | 121,0 | 119,0 | 122,0 | 129,0 | 142,0 | 157,0 | 175,0 | 189,0 | 204,0 | 212,0 | 216,0 |
| 1,75 | 164,0 | 162,0 | 154,0 | 134,0 | 117,0 | 104,0 | 94,0 | 89,0 | 87,0 | 84,0 | 84,0 | 86,0 | 93,0 | 104,0 | 116,0 | 131,0 | 144,0 | 155,0 | 162,0 | 166,0 |
| 2 | 138,0 | 136,0 | 126,0 | 104,0 | 88,0 | 76,0 | 69,0 | 65,0 | 63,0 | 61,0 | 61,0 | 63,0 | 69,0 | 78,0 | 88,0 | 101,0 | 111,0 | 121,0 | 127,0 | 131,0 |
| 2,5 | 103,0 | 100,0 | 86,0 | 64,0 | 51,0 | 43,0 | 38,0 | 36,0 | 35,0 | 35,0 | 35,0 | 37,0 | 41,0 | 48,0 | 55,0 | 64,0 | 71,0 | 79,0 | 84,0 | 86,0 |
| 3 | 80,0 | 75,0 | 61,0 | 41,0 | 31,0 | 26,0 | 24,0 | 22,0 | 21,0 | 21,0 | 21,0 | 23,0 | 26,0 | 31,0 | 36,0 | 42,0 | 48,0 | 55,0 | 58,0 | 60,0 |
| 3,5 | 65,0 | 60,0 | 45,0 | 28,0 | 21,0 | 17,0 | 15,0 | 15,0 | 15,0 | 15,0 | 15,0 | 16,0 | 18,0 | 21,0 | 25,0 | 31,0 | 35,0 | 39,0 | 42,0 | 44,0 |
| 4 | 55,0 | 48,0 | 34,0 | 20,0 | 14,0 | 12,0 | 11,0 | 10,0 | 10,0 | 10,0 | 10,0 | 12,0 | 13,0 | 16,0 | 19,0 | 23,0 | 26,0 | 30,0 | 32,0 | 34,0 |
| 4,5 | 47,0 | 40,0 | 26,0 | 14,0 | 11,0 | 8,0 | 8,0 | 8,0 | 8,0 | 8,0 | 8,0 | 8,0 | 10,0 | 12,0 | 15,0 | 18,0 | 20,0 | 23,0 | 25,0 | 27,0 |
| 5 | 40,0 | 34,0 | 20,0 | 11,0 | 8,0 | 6,0 | 6,0 | 5,0 | 5,0 | 5,0 | 6,0 | 6,0 | 8,0 | 10,0 | 12,0 | 14,0 | 16,0 | 18,0 | 21,0 | 21,0 |
| 5,5 | 36,0 | 28,0 | 16,0 | 8,0 | 6,0 | 5,0 | 5,0 | 5,0 | 5,0 | 5,0 | 0,0 | 0,0 | 0,0 | 0,0 | 0,0 | 0,0 | 0,0 | 0,0 | 0,0 | 0,0 |
| 6 | 31,0 | 25,0 | 13,0 | 7,0 | 5,0 | 4,0 | 4,0 | 4,0 | 4,0 | 0,0 | 0,0 | 0,0 | 0,0 | 0,0 | 0,0 | 0,0 | 0,0 | 0,0 | 0,0 | 0,0 |
| 6,5 | 28,0 | 21,0 | 11,0 | 5,0 | 4,0 | 3,0 | 3,0 | 3,0 | 0,0 | 0,0 | 0,0 | 0,0 | 0,0 | 0,0 | 0,0 | 0,0 | 0,0 | 0,0 | 0,0 | 0,0 |
| 7 | 25,0 | 19,0 | 9,0 | 5,0 | 3,0 | 3,0 | 3,0 | 3,0 | 0,0 | 0,0 | 0,0 | 0,0 | 0,0 | 0,0 | 0,0 | 0,0 | 0,0 | 0,0 | 0,0 | 0,0 |
| 7,5 | 23,0 | 17,0 | 8,0 | 4,0 | 3,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| 8 | 21,0 | 15,0 | 7,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 19,0 | 14,0 | 6,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 9 | 18,0 | 13,0 | 5,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 17,0 | 12,0 | 5,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 16,0 | 11,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 16,0 | 10,0 | 4,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 15,0 | 9,0 | 4,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 14,0 | 9,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 14,0 | 8,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5G

| N2 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 | 474,0 |
| 0,25 | 472,0 | 471,0 | 471,0 | 470,0 | 470,0 | 468,0 | 466,0 | 464,0 | 463,0 | 459,0 | 456,0 | 450,0 | 443,0 | 439,0 | 435,0 | 434,0 | 434,0 | 435,0 | 436,0 | 436,0 |
| 0,5 | 427,0 | 426,0 | 426,0 | 422,0 | 418,0 | 413,0 | 408,0 | 399,0 | 390,0 | 382,0 | 375,0 | 359,0 | 347,0 | 343,0 | 341,0 | 344,0 | 348,0 | 352,0 | 353,0 | 356,0 |
| 0,75 | 374,0 | 372,0 | 370,0 | 361,0 | 349,0 | 336,0 | 321,0 | 309,0 | 297,0 | 285,0 | 275,0 | 255,0 | 245,0 | 244,0 | 245,0 | 257,0 | 256,0 | 262,0 | 265,0 | 268,0 |
| 1 | 326,0 | 323,0 | 319,0 | 303,0 | 284,0 | 268,0 | 248,0 | 227,0 | 213,0 | 202,0 | 193,0 | 177,0 | 170,0 | 170,0 | 174,0 | 180,0 | 186,0 | 192,0 | 196,0 | 199,0 |
| 1,25 | 284,0 | 281,0 | 275,0 | 251,0 | 224,0 | 198,0 | 176,0 | 161,0 | 149,0 | 139,0 | 132,0 | 121,0 | 117,0 | 119,0 | 123,0 | 129,0 | 135,0 | 141,0 | 145,0 | 147,0 |
| 1,5 | 249,0 | 246,0 | 235,0 | 203,0 | 172,0 | 148,0 | 127,0 | 113,0 | 104,0 | 97,0 | 92,0 | 84,0 | 83,0 | 85,0 | 89,0 | 94,0 | 99,0 | 105,0 | 108,0 | 110,0 |
| 1,75 | 219,0 | 216,0 | 201,0 | 162,0 | 129,0 | 106,0 | 91,0 | 81,0 | 73,0 | 68,0 | 64,0 | 60,0 | 59,0 | 62,0 | 65,0 | 70,0 | 74,0 | 79,0 | 82,0 | 84,0 |
| 2 | 194,0 | 190,0 | 171,0 | 128,0 | 97,0 | 78,0 | 65,0 | 57,0 | 53,0 | 49,0 | 46,0 | 44,0 | 44,0 | 46,0 | 49,0 | 53,0 | 57,0 | 61,0 | 64,0 | 65,0 |
| 2,5 | 157,0 | 150,0 | 124,0 | 82,0 | 57,0 | 44,0 | 37,0 | 32,0 | 33,0 | 28,0 | 27,0 | 26,0 | 26,0 | 28,0 | 30,0 | 33,0 | 37,0 | 40,0 | 42,0 | 43,0 |
| 3 | 130,0 | 120,0 | 90,0 | 52,0 | 35,0 | 26,0 | 22,0 | 19,0 | 18,0 | 17,0 | 17,0 | 16,0 | 17,0 | 18,0 | 20,0 | 22,0 | 24,0 | 27,0 | 28,0 | 29,0 |
| 3,5 | 110,0 | 98,0 | 65,0 | 34,0 | 22,0 | 16,0 | 14,0 | 13,0 | 12,0 | 11,0 | 11,0 | 11,0 | 11,0 | 12,0 | 14,0 | 16,0 | 18,0 | 19,0 | 21,0 | 21,0 |
| 4 | 94,0 | 80,0 | 48,0 | 23,0 | 15,0 | 11,0 | 9,0 | 9,0 | 8,0 | 8,0 | 8,0 | 8,0 | 8,0 | 9,0 | 10,0 | 12,0 | 13,0 | 15,0 | 16,0 | 16,0 |
| 4,5 | 80,0 | 65,0 | 36,0 | 17,0 | 10,0 | 8,0 | 7,0 | 6,0 | 6,0 | 6,0 | 6,0 | 6,0 | 6,0 | 7,0 | 8,0 | 9,0 | 10,0 | 11,0 | 12,0 | 13,0 |
| 5 | 70,0 | 55,0 | 28,0 | 12,0 | 8,0 | 6,0 | 5,0 | 5,0 | 4,0 | 4,0 | 4,0 | 4,0 | 5,0 | 5,0 | 6,0 | 7,0 | 8,0 | 9,0 | 10,0 | 10,0 |
| 5,5 | 61,0 | 46,0 | 22,0 | 9,0 | 6,0 | 4,0 | 4,0 | 3,0 | 3,0 | 3,0 | 0,0 | 0,0 | 0,0 | 0,0 | 0,0 | 0,0 | 0,0 | 0,0 | 0,0 | 0,0 |
| 6 | 54,0 | 39,0 | 18,0 | 7,0 | 5,0 | 4,0 | 3,0 | 3,0 | 3,0 | 0,0 | 0,0 | 0,0 | 0,0 | 0,0 | 0,0 | 0,0 | 0,0 | 0,0 | 0,0 | 0,0 |
| 6,5 | 48,0 | 34,0 | 14,0 | 6,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7 | 43,0 | 30,0 | 12,0 | 5,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7,5 | 39,0 | 27,0 | 10,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8 | 36,0 | 23,0 | 9,0 | 3,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 33,0 | 21,0 | 7,0 | 3,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 |
| 9 | 30,0 | 18,0 | 6,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 28,0 | 17,0 | 5,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 26,0 | 16,0 | 5,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 25,0 | 14,0 | 4,0 | 1,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 23,0 | 13,0 | 4,0 | 1,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 22,0 | 12,0 | 3,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 21,0 | 12,0 | 3,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5H

| N3 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 354,0 | 354,0 | 354,0 | 354,0 | 354,0 | 354,0 | 354,0 | 354,0 | 354,0 | 354,0 | 354,0 | 354,0 | 354,0 | 354,0 | 364,0 | 354,0 | 354,0 | 354,0 | 354,0 | 354,0 |
| 0,25 | 391,0 | 391,0 | 390,0 | 389,0 | 388,0 | 385,0 | 381,0 | 378,0 | 373,0 | 369,0 | 365,0 | 351,0 | 338,0 | 328,0 | 319,0 | 313,0 | 308,0 | 306,0 | 304,0 | 304,0 |
| 0,5 | 406,0 | 404,0 | 403,0 | 397,0 | 390,0 | 379,0 | 366,0 | 355,0 | 343,0 | 330,0 | 318,0 | 291,0 | 268,0 | 256,0 | 247,0 | 242,0 | 240,0 | 240,0 | 240,0 | 240,0 |
| 0,75 | 405,0 | 403,0 | 399,0 | 384,0 | 365,0 | 342,0 | 319,0 | 298,0 | 278,0 | 260,0 | 244,0 | 213,0 | 192,0 | 182,0 | 176,0 | 175,0 | 175,0 | 178,0 | 177,0 | 177,0 |
| 1 | 396,0 | 392,0 | 384,0 | 357,0 | 322,0 | 287,0 | 254,0 | 228,0 | 207,0 | 189,0 | 175,0 | 147,0 | 133,0 | 126,0 | 124,0 | 123,0 | 125,0 | 127,0 | 129,0 | 130,0 |
| 1,25 | 383,0 | 374,0 | 360,0 | 317,0 | 269,0 | 227,0 | 193,0 | 168,0 | 149,0 | 134,0 | 123,0 | 103,0 | 93,0 | 89,0 | 87,0 | 89,0 | 91,0 | 94,0 | 95,0 | 96,0 |
| 1,5 | 360,0 | 351,0 | 328,0 | 270,0 | 215,0 | 172,0 | 141,0 | 119,0 | 105,0 | 94,0 | 86,0 | 72,0 | 66,0 | 63,0 | 63,0 | 64,0 | 67,0 | 69,0 | 71,0 | 72,0 |
| 1,75 | 335,0 | 325,0 | 294,0 | 224,0 | 165,0 | 127,0 | 102,0 | 86,0 | 75,0 | 67,0 | 61,0 | 52,0 | 47,0 | 46,0 | 47,0 | 48,0 | 50,0 | 52,0 | 54,0 | 55,0 |
| 2 | 312,0 | 298,0 | 259,0 | 182,0 | 126,0 | 94,0 | 75,0 | 63,0 | 56,0 | 50,0 | 45,0 | 38,0 | 35,0 | 35,0 | 35,0 | 37,0 | 38,0 | 40,0 | 42,0 | 43,0 |
| 2,5 | 270,0 | 250,0 | 199,0 | 120,0 | 76,0 | 53,0 | 43,0 | 35,0 | 32,0 | 28,0 | 26,0 | 23,0 | 22,0 | 21,0 | 22,0 | 23,0 | 24,0 | 27,0 | 28,0 | 28,0 |
| 3 | 233,0 | 206,0 | 148,0 | 78,0 | 46,0 | 31,0 | 26,0 | 21,0 | 19,0 | 18,0 | 17,0 | 15,0 | 14,0 | 14,0 | 15,0 | 16,0 | 17,0 | 18,0 | 19,0 | 20,0 |
| 3,5 | 202,0 | 171,0 | 109,0 | 51,0 | 29,0 | 20,0 | 17,0 | 14,0 | 13,0 | 12,0 | 11,0 | 10,0 | 10,0 | 10,0 | 11,0 | 11,0 | 12,0 | 13,0 | 14,0 | 15,0 |
| 4 | 177,0 | 142,0 | 82,0 | 35,0 | 20,0 | 13,0 | 11,0 | 10,0 | 9,0 | 9,0 | 8,0 | 7,0 | 7,0 | 7,0 | 8,0 | 8,0 | 9,0 | 10,0 | 11,0 | 11,0 |
| 4,5 | 155,0 | 118,0 | 61,0 | 24,0 | 14,0 | 10,0 | 8,0 | 7,0 | 7,0 | 6,0 | 6,0 | 5,0 | 5,0 | 6,0 | 6,0 | 6,0 | 7,0 | 8,0 | 9,0 | 9,0 |
| 5 | 137,0 | 100,0 | 47,0 | 18,0 | 10,0 | 7,0 | 6,0 | 6,0 | 5,0 | 5,0 | 5,0 | 4,0 | 4,0 | 5,0 | 5,0 | 5,0 | 6,0 | 6,0 | 7,0 | 7,0 |
| 5,5 | 121,0 | 84,0 | 37,0 | 13,0 | 8,0 | 6,0 | 5,0 | 4,0 | 4,0 | 4,0 | 0,0 | 0,0 | 0,0 | 0,0 | 0,0 | 0,0 | 0,0 | 0,0 | 0,0 | 0,0 |
| 6 | 108,0 | 72,0 | 29,0 | 11,0 | 6,0 | 5,0 | 4,0 | 4,0 | 4,0 | 0,0 | 0,0 | 0,0 | 0,0 | 0,0 | 0,0 | 0,0 | 0,0 | 0,0 | 0,0 | 0,0 |
| 6,5 | 97,0 | 62,0 | 24,0 | 9,0 | 5,0 | 4,0 | 4,0 | 3,0 | 0,0 | 0,0 | 0,0 | 0,0 | 0,0 | 0,0 | 0,0 | 0,0 | 0,0 | 0,0 | 0,0 | 0,0 |
| 7 | 89,0 | 55,0 | 20,0 | 7,0 | 4,0 | 3,0 | 3,0 | 2,0 | 0,0 | 0,0 | 0,0 | 0,0 | 0,0 | 0,0 | 0,0 | 0,0 | 0,0 | 0,0 | 0,0 | 0,0 |
| 7,5 | 81,0 | 49,0 | 17,0 | 6,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| 8 | 74,0 | 43,0 | 15,0 | 5,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 68,0 | 38,0 | 12,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 9 | 63,0 | 34,0 | 11,0 | 4,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 58,0 | 31,0 | 9,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 54,0 | 28,0 | 8,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 51,0 | 26,0 | 7,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 48,0 | 24,0 | 6,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 45,0 | 22,0 | 6,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 43,0 | 21,0 | 5,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5I

| N4 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 | 282,0 |
| 0,25 | 332,0 | 332,0 | 331,0 | 328,0 | 328,0 | 324,0 | 319,0 | 315,0 | 311,0 | 303,0 | 295,0 | 280,0 | 262,0 | 253,0 | 247,0 | 241,0 | 237,0 | 231,0 | 230,0 | 228,0 |
| 0,5 | 375,0 | 374,0 | 373,0 | 367,0 | 358,0 | 345,0 | 331,0 | 318,0 | 305,0 | 287,0 | 271,0 | 242,0 | 209,0 | 196,0 | 189,0 | 184,0 | 180,0 | 177,0 | 176,0 | 175,0 |
| 0,75 | 412,0 | 411,0 | 406,0 | 388,0 | 361,0 | 337,0 | 314,0 | 284,0 | 256,0 | 235,0 | 218,0 | 182,0 | 153,0 | 142,0 | 138,0 | 135,0 | 132,0 | 130,0 | 130,0 | 130,0 |
| 1 | 441,0 | 438,0 | 426,0 | 385,0 | 341,0 | 294,0 | 251,0 | 220,0 | 196,0 | 174,0 | 156,0 | 126,0 | 106,0 | 97,0 | 94,0 | 94,0 | 93,0 | 94,0 | 94,0 | 95,0 |
| 1,25 | 459,0 | 453,0 | 430,0 | 365,0 | 299,0 | 243,0 | 198,0 | 168,0 | 146,0 | 128,0 | 115,0 | 91,0 | 76,0 | 71,0 | 68,0 | 69,0 | 69,0 | 70,0 | 71,0 | 72,0 |
| 1,5 | 466,0 | 456,0 | 417,0 | 326,0 | 246,0 | 189,0 | 149,0 | 122,0 | 105,0 | 92,0 | 83,0 | 67,0 | 56,0 | 53,0 | 52,0 | 52,0 | 53,0 | 54,0 | 55,0 | 55,0 |
| 1,75 | 464,0 | 449,0 | 392,0 | 284,0 | 199,0 | 146,0 | 114,0 | 92,0 | 79,0 | 69,0 | 63,0 | 50,0 | 42,0 | 40,0 | 39,0 | 40,0 | 41,0 | 42,0 | 43,0 | 44,0 |
| 2 | 453,0 | 431,0 | 356,0 | 234,0 | 153,0 | 108,0 | 85,0 | 69,0 | 60,0 | 52,0 | 46,0 | 37,0 | 32,0 | 30,0 | 30,0 | 30,0 | 31,0 | 32,0 | 33,0 | 34,0 |
| 2,5 | 425,0 | 387,0 | 283,0 | 152,0 | 93,0 | 64,0 | 50,0 | 41,0 | 36,0 | 31,0 | 28,0 | 23,0 | 20,0 | 19,0 | 19,0 | 19,0 | 20,0 | 21,0 | 23,0 | 23,0 |
| 3 | 385,0 | 333,0 | 211,0 | 98,0 | 57,0 | 38,0 | 30,0 | 25,0 | 22,0 | 19,0 | 17,0 | 14,0 | 13,0 | 12,0 | 12,0 | 13,0 | 14,0 | 14,0 | 15,0 | 16,0 |
| 3,5 | 349,0 | 286,0 | 158,0 | 66,0 | 37,0 | 25,0 | 20,0 | 17,0 | 15,0 | 13,0 | 12,0 | 10,0 | 9,0 | 8,0 | 9,0 | 9,0 | 10,0 | 10,0 | 12,0 | 12,0 |
| 4 | 316,0 | 245,0 | 117,0 | 47,0 | 27,0 | 18,0 | 14,0 | 12,0 | 11,0 | 10,0 | 9,0 | 7,0 | 6,0 | 6,0 | 6,0 | 7,0 | 8,0 | 8,0 | 9,0 | 9,0 |
| 4,5 | 288,0 | 207,0 | 88,0 | 33,0 | 20,0 | 14,0 | 11,0 | 9,0 | 8,0 | 7,0 | 7,0 | 6,0 | 6,0 | 5,0 | 5,0 | 6,0 | 6,0 | 7,0 | 7,0 | 8,0 |
| 5 | 260,0 | 175,0 | 69,0 | 24,0 | 15,0 | 10,0 | 8,0 | 7,0 | 6,0 | 6,0 | 5,0 | 5,0 | 5,0 | 4,0 | 4,0 | 5,0 | 5,0 | 5,0 | 6,0 | 6,0 |
| 5,5 | 237,0 | 147,0 | 54,0 | 19,0 | 12,0 | 8,0 | 6,0 | 6,0 | 5,0 | 5,0 | 0,0 | 0,0 | 0,0 | 0,0 | 0,0 | 0,0 | 0,0 | 0,0 | 0,0 | 0,0 |
| 6 | 217,0 | 162,0 | 43,0 | 15,0 | 9,0 | 6,0 | 5,0 | 5,0 | 4,0 | 0,0 | 0,0 | 0,0 | 0,0 | 0,0 | 0,0 | 0,0 | 0,0 | 0,0 | 0,0 | 0,0 |
| 6,5 | 198,0 | 108,0 | 35,0 | 12,0 | 7,0 | 5,0 | 5,0 | 4,0 | 0,0 | 0,0 | 0,0 | 0,0 | 0,0 | 0,0 | 0,0 | 0,0 | 0,0 | 0,0 | 0,0 | 0,0 |
| 7 | 184,0 | 95,0 | 28,0 | 9,0 | 6,0 | 5,0 | 4,0 | 2,0 | 0,0 | 0,0 | 0,0 | 0,0 | 0,0 | 0,0 | 0,0 | 0,0 | 0,0 | 0,0 | 0,0 | 0,0 |
| 7,5 | 169,0 | 85,0 | 23,0 | 8,0 | 5,0 | 4,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| 8 | 158,0 | 75,0 | 20,0 | 7,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 148,0 | 68,0 | 17,0 | 6,0 | 4,0 | 3,0 | 3,0 | 0,0 | 0,0 | 0,0 | 0,0 | 0,0 | 0,0 | 0,0 | 0,0 | 0,0 | 0,0 | 0,0 | 0,0 | 0,0 |
| 9 | 138,0 | 61,0 | 14,0 | 5,0 | 3,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 131,0 | 55,0 | 12,0 | 4,0 | 3,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 126,0 | 50,0 | 11,0 | 4,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 118,0 | 46,0 | 10,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 110,0 | 42,0 | 8,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 103,0 | 39,0 | 8,0 | 3,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 98,0 | 36,0 | 7,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5J

| W1 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 | 394,0 |
| 0,25 | 426,0 | 426,0 | 426,0 | 425,0 | 423,0 | 418,0 | 413,0 | 409,0 | 405,0 | 398,0 | 391,0 | 377,0 | 383,0 | 355,0 | 351,0 | 350,0 | 348,0 | 350,0 | 350,0 | 352,0 |
| 0,5 | 501,0 | 499,0 | 494,0 | 481,0 | 459,0 | 435,0 | 412,0 | 389,0 | 367,0 | 346,0 | 326,0 | 292,0 | 272,0 | 266,0 | 264,0 | 270,0 | 273,0 | 279,0 | 282,0 | 284,0 |
| 0,75 | 648,0 | 641,0 | 622,0 | 576,0 | 512,0 | 444,0 | 385,0 | 339,0 | 298,0 | 267,0 | 239,0 | 198,0 | 163,0 | 183,0 | 187,0 | 195,0 | 200,0 | 209,0 | 212,0 | 216,0 |
| 1 | 833,0 | 816,0 | 773,0 | 651,0 | 523,0 | 411,0 | 323,0 | 262,0 | 212,0 | 183,0 | 158,0 | 128,0 | 121,0 | 124,0 | 130,0 | 138,0 | 145,0 | 152,0 | 156,0 | 159,0 |
| 1,25 | 1096,0 | 976,0 | 882,0 | 670,0 | 484,0 | 343,0 | 242,0 | 187,0 | 145,0 | 121,0 | 102,0 | 84,0 | 81,0 | 85,0 | 91,0 | 98,0 | 105,0 | 112,0 | 115,0 | 117,0 |
| 1,5 | 1138,0 | 1084,0 | 930,0 | 634,0 | 402,0 | 265,0 | 175,0 | 129,0 | 95,0 | 79,0 | 66,0 | 56,0 | 56,0 | 60,0 | 65,0 | 72,0 | 77,0 | 83,0 | 86,0 | 88,0 |
| 1,75 | 1218,0 | 1141,0 | 935,0 | 554,0 | 317,0 | 194,0 | 119,0 | 87,0 | 63,0 | 53,0 | 45,0 | 39,0 | 39,0 | 44,0 | 48,0 | 53,0 | 58,0 | 63,0 | 65,0 | 67,0 |
| 2 | 1242,0 | 1149,0 | 877,0 | 460,0 | 249,0 | 142,0 | 89,0 | 60,0 | 43,0 | 37,0 | 31,0 | 28,0 | 29,0 | 32,0 | 36,0 | 41,0 | 45,0 | 48,0 | 51,0 | 53,0 |
| 2,5 | 1184,0 | 1042,0 | 696,0 | 293,0 | 138,0 | 75,0 | 41,0 | 30,0 | 22,0 | 19,0 | 17,0 | 16,0 | 17,0 | 20,0 | 22,0 | 26,0 | 28,0 | 31,0 | 34,0 | 35,0 |
| 3 | 1057,0 | 876,0 | 493,0 | 178,0 | 74,0 | 40,0 | 22,0 | 17,0 | 13,0 | 11,0 | 10,0 | 10,0 | 11,0 | 13,0 | 16,0 | 17,0 | 19,0 | 22,0 | 23,0 | 24,0 |
| 3,5 | 914,0 | 710,0 | 340,0 | 105,0 | 41,0 | 23,0 | 13,0 | 10,0 | 8,0 | 7,0 | 7,0 | 7,0 | 8,0 | 9,0 | 11,0 | 12,0 | 14,0 | 16,0 | 17,0 | 18,0 |
| 4 | 770,0 | 548,0 | 230,0 | 65,0 | 22,0 | 13,0 | 8,0 | 7,0 | 6,0 | 5,0 | 5,0 | 5,0 | 6,0 | 7,0 | 8,0 | 9,0 | 11,0 | 12,0 | 13,0 | 13,0 |
| 4,5 | 627,0 | 411,0 | 156,0 | 40,0 | 14,0 | 9,0 | 6,0 | 5,0 | 4,0 | 4,0 | 4,0 | 4,0 | 4,0 | 5,0 | 6,0 | 7,0 | 8,0 | 9,0 | 10,0 | 11,0 |
| 5 | 508,0 | 315,0 | 109,0 | 26,0 | 9,0 | 8,0 | 4,0 | 4,0 | 3,0 | 3,0 | 3,0 | 3,0 | 4,0 | 4,0 | 5,0 | 6,0 | 7,0 | 7,0 | 8,0 | 9,0 |
| 5,5 | 414,0 | 240,0 | 75,0 | 10,0 | 6,0 | 5,0 | 4,0 | 3,0 | 3,0 | 2,0 | 0,0 | 0,0 | 0,0 | 0,0 | 0,0 | 0,0 | 0,0 | 0,0 | 0,0 | 0,0 |
| 6 | 337,0 | 187,0 | 54,0 | 12,0 | 5,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 |
| 6,5 | 278,0 | 148,0 | 39,0 | 9,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7 | 234,0 | 119,0 | 31,0 | 7,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7,5 | 199,0 | 98,0 | 24,0 | 6,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8 | 170,0 | 80,0 | 19,0 | 4,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 145,0 | 66,0 | 15,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 9 | 126,0 | 56,0 | 13,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 111,0 | 48,0 | 11,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 98,0 | 42,0 | 9,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 87,0 | 37,0 | 7,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 78,0 | 34,0 | 7,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 71,0 | 30,0 | 6,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 65,0 | 28,0 | 5,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5K

| W2 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 | 342,0 |
| 0,25 | 357,0 | 366,0 | 365,0 | 363,0 | 362,0 | 357,0 | 353,0 | 349,0 | 345,0 | 340,0 | 334,0 | 322,0 | 310,0 | 306,0 | 302,0 | 304,0 | 305,0 | 308,0 | 307,0 | 308,0 |
| 0,5 | 435,0 | 432,0 | 427,0 | 417,0 | 401,0 | 379,0 | 358,0 | 336,0 | 315,0 | 299,0 | 283,0 | 253,0 | 233,0 | 232,0 | 233,0 | 238,0 | 241,0 | 247,0 | 248,0 | 251,0 |
| 0,75 | 621,0 | 618,0 | 601,0 | 549,0 | 479,0 | 409,0 | 348,0 | 300,0 | 258,0 | 230,0 | 206,0 | 171,0 | 161,0 | 162,0 | 165,0 | 172,0 | 177,0 | 185,0 | 187,0 | 190,0 |
| 1 | 902,0 | 901,0 | 848,0 | 707,0 | 540,0 | 398,0 | 293,0 | 230,0 | 180,0 | 153,0 | 130,0 | 116,0 | 107,0 | 111,0 | 115,0 | 122,0 | 127,0 | 134,0 | 137,0 | 140,0 |
| 1,25 | 1248,0 | 1226,0 | 1110,0 | 789,0 | 531,0 | 342,0 | 220,0 | 159,0 | 115,0 | 98,0 | 93,0 | 72,0 | 71,0 | 70,0 | 80,0 | 88,0 | 91,0 | 98,0 | 100,0 | 102,0 |
| 1,5 | 1556,0 | 1496,0 | 1258,0 | 780,0 | 444,0 | 268,0 | 149,0 | 106,0 | 76,0 | 64,0 | 54,0 | 48,0 | 49,0 | 53,0 | 57,0 | 63,0 | 67,0 | 72,0 | 74,0 | 77,0 |
| 1,75 | 1798,0 | 1689,0 | 1323,0 | 697,0 | 352,0 | 196,0 | 102,0 | 71,0 | 49,0 | 42,0 | 36,0 | 34,0 | 35,0 | 39,0 | 42,0 | 48,0 | 50,0 | 54,0 | 56,0 | 58,0 |
| 2 | 1957,0 | 1792,0 | 1286,0 | 577,0 | 260,0 | 132,0 | 87,0 | 47,0 | 34,0 | 29,0 | 28,0 | 24,0 | 26,0 | 28,0 | 31,0 | 36,0 | 38,0 | 42,0 | 44,0 | 45,0 |
| 2,5 | 2070,0 | 1762,0 | 1065,0 | 376,0 | 128,0 | 65,0 | 33,0 | 24,0 | 18,0 | 16,0 | 14,0 | 14,0 | 15,0 | 17,0 | 19,0 | 22,0 | 24,0 | 27,0 | 28,0 | 29,0 |
| 3 | 2003,0 | 1590,0 | 808,0 | 216,0 | 65,0 | 32,0 | 16,0 | 13,0 | 10,0 | 9,0 | 9,0 | 9,0 | 10,0 | 11,0 | 13,0 | 15,0 | 16,0 | 18,0 | 19,0 | 20,0 |
| 3,5 | 1817,0 | 1340,0 | 585,0 | 125,0 | 34,0 | 18,0 | 9,0 | 7,0 | 6,0 | 5,0 | 5,0 | 8,0 | 6,0 | 6,0 | 9,0 | 11,0 | 12,0 | 13,0 | 14,0 | 15,0 |
| 4 | 1577,0 | 1087,0 | 383,0 | 71,0 | 20,0 | 11,0 | 6,0 | 5,0 | 4,0 | 4,0 | 4,0 | 4,0 | 5,0 | 6,0 | 6,0 | 8,0 | 9,0 | 10,0 | 11,0 | 11,0 |
| 4,5 | 1317,0 | 840,0 | 243,0 | 40,0 | 12,0 | 7,0 | 4,0 | 3,0 | 3,0 | 3,0 | 3,0 | 3,0 | 4,0 | 4,0 | 5,0 | 6,0 | 7,0 | 8,0 | 9,0 | 9,0 |
| 5 | 1088,0 | 645,0 | 161,0 | 26,0 | 8,0 | 6,0 | 3,0 | 3,0 | 2,0 | 2,0 | 2,0 | 3,0 | 3,0 | 3,0 | 4,0 | 5,0 | 5,0 | 6,0 | 7,0 | 7,0 |
| 5,5 | 886,0 | 489,0 | 110,0 | 16,0 | 5,0 | 4,0 | 3,0 | 2,0 | 2,0 | 1,0 | 0,0 | 0,0 | 0,0 | 0,0 | 0,0 | 0,0 | 0,0 | 0,0 | 0,0 | 0,0 |
| 6 | 737,0 | 382,0 | 77,0 | 11,0 | 4,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 |
| 6,5 | 617,0 | 301,0 | 55,0 | 8,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7 | 515,0 | 239,0 | 40,0 | 6,0 | 3,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 |
| 7,5 | 432,0 | 191,0 | 31,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8 | 357,0 | 155,0 | 24,0 | 4,0 | 2,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 312,0 | 125,0 | 18,0 | 3,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 |
| 9 | 267,0 | 103,0 | 14,0 | 3,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 230,0 | 67,0 | 11,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 198,0 | 73,0 | 10,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 173,0 | 63,0 | 8,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 153,0 | 55,0 | 7,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 136,0 | 49,0 | 6,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 128,0 | 44,0 | 5,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5L

| W3 | | beta | | | | | | | | | | | | | | | | | | | |
|---|---|---|---|---|---|---|---|---|---|---|---|---|---|---|---|---|---|---|---|---|---|
| | | 0 | 2 | 5 | 10 | 15 | 20 | 25 | 30 | 35 | 40 | 45 | 60 | 75 | 90 | 105 | 120 | 135 | 150 | 165 | 180 |
| tangente(gamma) | 0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 | 309,0 |
| | 0,25 | 325,0 | 326,0 | 325,0 | 324,0 | 322,0 | 318,0 | 314,0 | 311,0 | 307,0 | 304,0 | 300,0 | 291,0 | 284,0 | 282,0 | 280,0 | 282,0 | 281,0 | 283,0 | 288,0 | 284,0 |
| | 0,5 | 401,0 | 402,0 | 397,0 | 384,0 | 370,0 | 344,0 | 320,0 | 300,0 | 281,0 | 266,0 | 251,0 | 226,0 | 217,0 | 217,0 | 217,0 | 222,0 | 224,0 | 230,0 | 230,0 | 232,0 |
| | 0,75 | 624,0 | 622,0 | 598,0 | 535,0 | 463,0 | 385,0 | 321,0 | 268,0 | 224,0 | 200,0 | 179,0 | 157,0 | 151,0 | 153,0 | 156,0 | 162,0 | 166,0 | 172,0 | 174,0 | 177,0 |
| | 1 | 994,0 | 976,0 | 924,0 | 752,0 | 545,0 | 376,0 | 260,0 | 201,0 | 155,0 | 133,0 | 114,0 | 102,0 | 101,0 | 105,0 | 109,0 | 115,0 | 119,0 | 125,0 | 127,0 | 129,0 |
| | 1,25 | 1475,0 | 1436,0 | 1272,0 | 901,0 | 536,0 | 316,0 | 166,0 | 133,0 | 96,0 | 83,0 | 73,0 | 68,0 | 68,0 | 73,0 | 76,0 | 82,0 | 85,0 | 91,0 | 93,0 | 95,0 |
| | 1,5 | 1935,0 | 1840,0 | 1530,0 | 894,0 | 442,0 | 226,0 | 115,0 | 82,0 | 59,0 | 52,0 | 47,0 | 48,0 | 47,0 | 51,0 | 55,0 | 59,0 | 62,0 | 67,0 | 69,0 | 71,0 |
| | 1,75 | 2340,0 | 2235,0 | 1671,0 | 791,0 | 328,0 | 157,0 | 75,0 | 53,0 | 38,0 | 35,0 | 31,0 | 32,0 | 34,0 | 37,0 | 40,0 | 44,0 | 46,0 | 50,0 | 52,0 | 53,0 |
| | 2 | 2667,0 | 2436,0 | 1670,0 | 659,0 | 227,0 | 102,0 | 46,0 | 34,0 | 26,0 | 24,0 | 23,0 | 23,0 | 25,0 | 27,0 | 30,0 | 33,0 | 36,0 | 39,0 | 40,0 | 42,0 |
| | 2,5 | 3048,0 | 2563,0 | 1379,0 | 390,0 | 109,0 | 48,0 | 21,0 | 17,0 | 14,0 | 14,0 | 13,0 | 14,0 | 15,0 | 16,0 | 18,0 | 20,0 | 23,0 | 25,0 | 26,0 | 27,0 |
| | 3 | 3079,0 | 2382,0 | 1036,0 | 220,0 | 62,0 | 23,0 | 10,0 | 10,0 | 9,0 | 9,0 | 8,0 | 9,0 | 9,0 | 11,0 | 12,0 | 14,0 | 15,0 | 17,0 | 18,0 | 19,0 |
| | 3,5 | 2907,0 | 2035,0 | 725,0 | 118,0 | 28,0 | 14,0 | 7,0 | 6,0 | 5,0 | 5,0 | 6,0 | 6,0 | 6,0 | 8,0 | 9,0 | 10,0 | 11,0 | 12,0 | 13,0 | 14,0 |
| | 4 | 2638,0 | 1687,0 | 492,0 | 65,0 | 14,0 | 8,0 | 5,0 | 4,0 | 4,0 | 4,0 | 4,0 | 4,0 | 5,0 | 6,0 | 6,0 | 7,0 | 8,0 | 9,0 | 10,0 | 10,0 |
| | 4,5 | 2261,0 | 1337,0 | 313,0 | 38,0 | 9,0 | 6,0 | 4,0 | 3,0 | 3,0 | 3,0 | 3,0 | 3,0 | 4,0 | 4,0 | 5,0 | 6,0 | 6,0 | 7,0 | 8,0 | 8,0 |
| | 5 | 1922,0 | 1033,0 | 203,0 | 22,0 | 6,0 | 4,0 | 3,0 | 2,0 | 2,0 | 2,0 | 2,0 | 2,0 | 3,0 | 3,0 | 4,0 | 4,0 | 5,0 | 6,0 | 6,0 | 7,0 |
| | 5,5 | 1583,0 | 792,0 | 132,0 | 14,0 | 4,0 | 3,0 | 3,0 | 2,0 | 2,0 | 2,0 | 0,0 | 0,0 | 0,0 | 0,0 | 0,0 | 0,0 | 0,0 | 0,0 | 0,0 | 0,0 |
| | 6 | 1315,0 | 629,0 | 92,0 | 10,0 | 3,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 |
| | 6,5 | 1100,0 | 504,0 | 66,0 | 7,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| | 7 | 938,0 | 407,0 | 48,0 | 6,0 | 2,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| | 7,5 | 798,0 | 326,0 | 36,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| | 8 | 682,0 | 266,0 | 28,0 | 4,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| | 8,5 | 582,0 | 216,0 | 21,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| | 9 | 500,0 | 176,0 | 17,0 | 3,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 9,5 | 428,0 | 147,0 | 13,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10 | 370,0 | 124,0 | 11,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 10,5 | 323,0 | 106,0 | 10,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11 | 284,0 | 91,0 | 8,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 11,5 | 251,0 | 81,0 | 7,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| | 12 | 226,0 | 72,0 | 6,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5M

| W4 | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 | 284,0 |
| 0,25 | 276,0 | 276,0 | 276,0 | 277,0 | 279,0 | 278,0 | 276,0 | 275,0 | 275,0 | 273,0 | 271,0 | 268,0 | 263,0 | 262,0 | 261,0 | 264,0 | 265,0 | 266,0 | 267,0 | 267,0 |
| 0,5 | 298,0 | 301,0 | 298,0 | 289,0 | 285,0 | 269,0 | 254,0 | 244,0 | 234,0 | 226,0 | 218,0 | 210,0 | 202,0 | 204,0 | 205,0 | 211,0 | 213,0 | 217,0 | 219,0 | 220,0 |
| 0,75 | 439,0 | 437,0 | 437,0 | 418,0 | 353,0 | 283,0 | 226,0 | 200,0 | 176,0 | 166,0 | 156,0 | 145,0 | 142,0 | 145,0 | 148,0 | 153,0 | 157,0 | 162,0 | 165,0 | 167,0 |
| 1 | 806,0 | 789,0 | 731,0 | 578,0 | 401,0 | 266,0 | 176,0 | 144,0 | 117,0 | 108,0 | 100,0 | 95,0 | 96,0 | 100,0 | 103,0 | 109,0 | 111,0 | 118,0 | 120,0 | 122,0 |
| 1,25 | 1370,0 | 1300,0 | 1069,0 | 686,0 | 360,0 | 205,0 | 117,0 | 93,0 | 74,0 | 69,0 | 65,0 | 64,0 | 65,0 | 68,0 | 72,0 | 77,0 | 80,0 | 85,0 | 87,0 | 90,0 |
| 1,5 | 2002,0 | 1828,0 | 1329,0 | 689,0 | 281,0 | 144,0 | 73,0 | 60,0 | 49,0 | 46,0 | 49,0 | 43,0 | 45,0 | 49,0 | 51,0 | 55,0 | 58,0 | 62,0 | 64,0 | 66,0 |
| 1,75 | 2600,0 | 2278,0 | 1518,0 | 646,0 | 211,0 | 100,0 | 47,0 | 39,0 | 33,0 | 31,0 | 30,0 | 30,0 | 31,0 | 35,0 | 37,0 | 41,0 | 43,0 | 47,0 | 48,0 | 50,0 |
| 2 | 3078,0 | 2668,0 | 1599,0 | 523,0 | 161,0 | 69,0 | 30,0 | 27,0 | 24,0 | 22,0 | 21,0 | 22,0 | 23,0 | 26,0 | 28,0 | 31,0 | 33,0 | 36,0 | 37,0 | 39,0 |
| 2,5 | 3900,0 | 3020,0 | 1365,0 | 275,0 | 66,0 | 33,0 | 17,0 | 15,0 | 13,0 | 12,0 | 12,0 | 13,0 | 13,0 | 16,0 | 17,0 | 19,0 | 21,0 | 23,0 | 24,0 | 25,0 |
| 3 | 4198,0 | 2976,0 | 1055,0 | 151,0 | 26,0 | 15,0 | 9,0 | 8,0 | 8,0 | 8,0 | 8,0 | 8,0 | 9,0 | 10,0 | 11,0 | 13,0 | 14,0 | 16,0 | 17,0 | 18,0 |
| 3,5 | 4221,0 | 2710,0 | 723,0 | 72,0 | 14,0 | 8,0 | 5,0 | 5,0 | 4,0 | 5,0 | 6,0 | 6,0 | 6,0 | 7,0 | 8,0 | 9,0 | 10,0 | 12,0 | 12,0 | 13,0 |
| 4 | 4111,0 | 2377,0 | 501,0 | 36,0 | 8,0 | 5,0 | 4,0 | 3,0 | 3,0 | 3,0 | 4,0 | 4,0 | 4,0 | 5,0 | 6,0 | 7,0 | 8,0 | 9,0 | 9,0 | 10,0 |
| 4,5 | 3713,0 | 1940,0 | 324,0 | 19,0 | 6,0 | 4,0 | 3,0 | 3,0 | 3,0 | 3,0 | 3,0 | 3,0 | 3,0 | 4,0 | 5,0 | 6,0 | 6,0 | 7,0 | 7,0 | 8,0 |
| 5 | 3285,0 | 1558,0 | 189,0 | 12,0 | 4,0 | 3,0 | 2,0 | 2,0 | 2,0 | 2,0 | 3,0 | 3,0 | 3,0 | 3,0 | 4,0 | 5,0 | 5,0 | 6,0 | 6,0 | 7,0 |
| 5,5 | 2840,0 | 1230,0 | 125,0 | 7,0 | 3,0 | 3,0 | 3,0 | 2,0 | 2,0 | 2,0 | 0,0 | 0,0 | 0,0 | 0,0 | 0,0 | 0,0 | 0,0 | 0,0 | 0,0 | 0,0 |
| 6 | 2498,0 | 966,0 | 75,0 | 5,0 | 3,0 | 3,0 | 3,0 | 2,0 | 2,0 | 0,0 | 0,0 | 0,0 | 0,0 | 0,0 | 0,0 | 0,0 | 0,0 | 0,0 | 0,0 | 0,0 |
| 6,5 | 2211,0 | 763,0 | 51,0 | 4,0 | 2,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7 | 1885,0 | 599,0 | 35,0 | 4,0 | 2,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 |
| 7,5 | 1631,0 | 471,0 | 25,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8 | 1398,0 | 372,0 | 20,0 | 3,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 1189,0 | 300,0 | 15,0 | 2,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 |
| 9 | 1024,0 | 249,0 | 12,0 | 2,0 | 2,0 | 2,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 891,0 | 210,0 | 11,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 784,0 | 176,0 | 8,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 686,0 | 151,0 | 7,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 589,0 | 131,0 | 6,0 | 2,0 | 1,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 532,0 | 115,0 | 5,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 479,0 | 103,0 | 5,0 | 2,0 | 1,0 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 5N

| | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | -910,0 | -908,4 | -910,4 | -911,6 | -914,3 | -919,5 | -916,7 | -919,0 | -920,1 | -918,5 | -917,8 | -920,3 | -914,5 | -917,0 | -917,2 | -915,0 | -911,9 | -912,8 | -910,8 | -909,6 |
| 0,25 | -824,9 | -825,0 | -823,4 | -823,2 | -820,2 | -825,1 | -828,2 | -832,2 | -832,7 | -835,1 | -837,9 | -844,3 | -838,2 | -845,2 | -848,7 | -852,4 | -854,7 | -856,9 | -863,5 | -862,7 |
| 0,5 | -570,8 | -573,0 | -574,7 | -587,4 | -595,2 | -613,1 | -622,3 | -638,0 | -653,0 | -664,4 | -672,2 | -686,6 | -687,2 | -688,4 | -694,2 | -698,1 | -709,2 | -718,7 | -721,6 | -721,9 |
| 0,75 | -226,2 | -224,2 | -234,9 | -264,2 | -320,6 | -379,3 | -424,4 | -455,1 | -481,5 | -492,8 | -503,3 | -513,9 | -514,6 | -510,8 | -518,8 | -528,5 | -539,0 | -547,4 | -555,8 | -559,0 |
| 1 | 196,7 | 192,0 | 152,9 | 37,8 | -103,1 | -215,4 | -293,5 | -328,8 | -354,3 | -364,3 | -371,7 | -371,1 | -368,3 | -366,2 | -370,0 | -377,0 | -386,6 | -398,6 | -405,8 | -411,1 |
| 1,25 | 654,9 | 623,3 | 501,6 | 244,0 | -0,2 | -142,0 | -226,2 | -249,9 | -267,9 | -269,6 | -270,9 | -270,2 | -265,8 | -265,2 | -268,5 | -273,1 | -283,5 | -291,0 | -299,7 | -305,0 |
| 1,5 | 1067,6 | 999,5 | 749,3 | 321,7 | 17,3 | -115,5 | -179,1 | -196,6 | -205,2 | -203,5 | -203,2 | -196,3 | -191,1 | -190,8 | -193,1 | -199,7 | -208,0 | -217,1 | -223,9 | -229,6 |
| 1,75 | 1417,2 | 1298,6 | 898,3 | 318,9 | 1,5 | -108,8 | -153,7 | -161,5 | -165,3 | -161,6 | -157,9 | -147,1 | -141,2 | -139,4 | -142,4 | -148,6 | -157,0 | -163,3 | -171,2 | -173,7 |
| 2 | 1673,3 | 1500,8 | 949,9 | 260,2 | -23,4 | -106,5 | -131,2 | -134,2 | -133,4 | -128,6 | -124,7 | -114,8 | -108,0 | -105,7 | -109,0 | -113,8 | -120,5 | -126,9 | -132,7 | -136,1 |
| 2,5 | 2009,1 | 1641,3 | 811,4 | 123,4 | -56,0 | -88,0 | -96,7 | -91,6 | -88,2 | -83,0 | -79,7 | -71,4 | -67,1 | -64,6 | -66,9 | -70,2 | -74,1 | -79,6 | -83,4 | -86,7 |
| 3 | 2079,8 | 1564,7 | 613,5 | 38,6 | -61,7 | -71,7 | -71,5 | -64,9 | -60,3 | -56,0 | -52,6 | -46,4 | -43,5 | -42,5 | -43,7 | -46,1 | -49,7 | -53,1 | -56,5 | -58,9 |
| 3,5 | 2004,7 | 1371,3 | 419,0 | -5,0 | -54,1 | -55,3 | -51,9 | -46,4 | -42,6 | -38,7 | -35,4 | -30,8 | -29,0 | -28,1 | -29,3 | -31,7 | -34,2 | -37,0 | -40,1 | -41,4 |
| 4 | 1863,3 | 1153,0 | 272,4 | -27,8 | -49,3 | -45,2 | -40,3 | -35,2 | -31,5 | -28,5 | -26,4 | -22,8 | -20,9 | -20,7 | -21,4 | -22,7 | -24,4 | -26,9 | -29,0 | -30,7 |
| 4,5 | 1628,4 | 916,9 | 161,5 | -36,2 | -42,2 | -36,4 | -31,6 | -27,3 | -24,0 | -21,3 | -19,7 | -16,6 | -15,0 | -14,9 | -15,4 | -16,4 | -18,3 | -19,9 | -21,8 | -23,1 |
| 5 | 1401,7 | 715,8 | 86,9 | -37,5 | -36,3 | -30,1 | -25,5 | -21,5 | -18,8 | -16,6 | -14,8 | -12,1 | -11,1 | -11,0 | -11,2 | -12,5 | -13,9 | -15,3 | -16,9 | -17,8 |
| 5,5 | 1179,6 | 550,9 | 44,1 | -36,4 | -31,5 | -25,0 | -20,3 | -17,3 | -15,0 | -13,2 | 0,0 | 0,0 | 0,0 | 0,0 | 0,0 | 0,0 | 0,0 | 0,0 | 0,0 | 0,0 |
| 6 | 1007,6 | 426,3 | 19,2 | -33,5 | -27,1 | -21,0 | -17,0 | -14,1 | -11,8 | 0,0 | 0,0 | 0,0 | 0,0 | 0,0 | 0,0 | 0,0 | 0,0 | 0,0 | 0,0 | 0,0 |
| 6,5 | 867,6 | 331,3 | 1,5 | -30,9 | -24,0 | -18,4 | -14,6 | -11,7 | 0,0 | 0,0 | 0,0 | 0,0 | 0,0 | 0,0 | 0,0 | 0,0 | 0,0 | 0,0 | 0,0 | 0,0 |
| 7 | 732,3 | 257,3 | -8,3 | -27,9 | -21,2 | -15,8 | -12,2 | -10,0 | 0,0 | 0,0 | 0,0 | 0,0 | 0,0 | 0,0 | 0,0 | 0,0 | 0,0 | 0,0 | 0,0 | 0,0 |
| 7,5 | 625,7 | 198,2 | -13,3 | -25,9 | -18,6 | -13,7 | -10,5 | 0,0 | 0,0 | 0,0 | 0,0 | 0,0 | 0,0 | 0,0 | 0,0 | 0,0 | 0,0 | 0,0 | 0,0 | 0,0 |
| 8 | 528,2 | 153,3 | -17,0 | -23,4 | -16,6 | -11,9 | -9,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 446,3 | 119,5 | -18,8 | -21,7 | -14,7 | -10,5 | -7,8 | 0,0 | 0,0 | 0,0 | 0,0 | 0,0 | 0,0 | 0,0 | 0,0 | 0,0 | 0,0 | 0,0 | 0,0 | 0,0 |
| 9 | 381,5 | 94,7 | -18,8 | -19,7 | -13,1 | -9,3 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 327,1 | 73,0 | -18,9 | -18,3 | -12,3 | -8,6 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 283,3 | 60,2 | -20,7 | -16,7 | -11,1 | -7,8 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 244,9 | 49,0 | -18,8 | -15,4 | -10,0 | -6,9 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 209,1 | 39,6 | -19,1 | -14,1 | -9,1 | -6,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 185,7 | 32,7 | -18,4 | -13,1 | -8,3 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 165,3 | 27,2 | -17,8 | -12,1 | -7,6 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG.6A

| | beta | | | | | | | | | | | | | | | | | | | |
|---|---|---|---|---|---|---|---|---|---|---|---|---|---|---|---|---|---|---|---|---|
| tangente(gamma) | 0 | 2 | 5 | 10 | 15 | 20 | 25 | 30 | 35 | 40 | 45 | 60 | 75 | 90 | 105 | 120 | 135 | 150 | 165 | 180 |
| 0 | 916,9 | 915,6 | 919,8 | 922,9 | 927,5 | 935,5 | 930,9 | 934,8 | 935,9 | 933,2 | 931,0 | 936,1 | 925,2 | 930,0 | 931,4 | 929,2 | 924,5 | 926,3 | 921,9 | 920,3 |
| 0,25 | 834,6 | 837,7 | 836,1 | 837,6 | 834,4 | 837,9 | 842,1 | 845,1 | 842,2 | 843,5 | 846,7 | 855,1 | 851,4 | 864,4 | 863,8 | 868,9 | 866,4 | 867,5 | 876,1 | 871,5 |
| 0,5 | 660,9 | 669,7 | 662,6 | 667,5 | 665,9 | 663,5 | 655,7 | 662,8 | 664,7 | 669,4 | 667,9 | 681,6 | 681,8 | 689,6 | 692,1 | 694,3 | 705,2 | 716,9 | 718,0 | 713,5 |
| 0,75 | 574,9 | 567,0 | 569,3 | 555,8 | 536,0 | 518,2 | 502,8 | 497,4 | 495,1 | 497,1 | 501,2 | 505,5 | 509,2 | 506,1 | 511,1 | 514,4 | 521,0 | 527,1 | 532,4 | 534,2 |
| 1 | 618,9 | 608,2 | 686,7 | 522,6 | 456,5 | 401,1 | 378,0 | 369,8 | 363,7 | 366,3 | 367,4 | 367,7 | 367,3 | 363,9 | 361,6 | 364,4 | 367,1 | 380,6 | 384,4 | 388,0 |
| 1,25 | 810,5 | 778,6 | 682,9 | 514,9 | 383,5 | 320,5 | 285,1 | 282,6 | 277,7 | 276,0 | 275,4 | 270,7 | 264,4 | 259,9 | 260,5 | 261,5 | 264,8 | 270,0 | 275,0 | 278,5 |
| 1,5 | 1039,7 | 966,2 | 766,8 | 480,5 | 309,9 | 251,9 | 218,2 | 218,6 | 211,4 | 210,0 | 206,6 | 197,1 | 187,3 | 186,5 | 183,0 | 184,9 | 187,8 | 195,4 | 198,3 | 202,4 |
| 1,75 | 1272,8 | 1154,7 | 829,0 | 430,9 | 250,9 | 205,5 | 178,8 | 175,0 | 168,9 | 165,8 | 159,2 | 147,6 | 139,6 | 136,9 | 134,9 | 137,2 | 139,7 | 143,1 | 147,7 | 147,9 |
| 2 | 1469,5 | 1298,9 | 842,2 | 367,1 | 211,2 | 173,3 | 152,2 | 144,8 | 137,9 | 132,1 | 127,4 | 115,8 | 106,5 | 101,9 | 102,4 | 103,2 | 105,4 | 109,0 | 111,7 | 114,2 |
| 2,5 | 1785,4 | 1421,8 | 718,0 | 246,1 | 146,9 | 127,9 | 111,7 | 103,6 | 95,7 | 89,0 | 85,1 | 72,5 | 64,5 | 60,7 | 59,9 | 61,1 | 62,9 | 66,6 | 67,3 | 69,6 |
| 3 | 1886,0 | 1378,7 | 567,5 | 180,1 | 116,5 | 102,8 | 89,0 | 80,3 | 72,3 | 65,8 | 60,4 | 49,5 | 43,8 | 41,3 | 40,1 | 40,9 | 42,1 | 44,3 | 45,6 | 46,9 |
| 3,5 | 1861,8 | 1235,3 | 415,7 | 133,1 | 97,0 | 83,8 | 70,7 | 61,9 | 53,8 | 47,6 | 43,3 | 35,1 | 29,7 | 27,5 | 27,3 | 28,2 | 28,7 | 30,8 | 31,9 | 32,2 |
| 4 | 1774,1 | 1071,4 | 303,4 | 107,0 | 83,4 | 68,9 | 57,7 | 48,5 | 41,6 | 36,0 | 32,8 | 25,5 | 21,6 | 20,3 | 19,2 | 19,8 | 20,5 | 21,8 | 22,6 | 23,2 |
| 4,5 | 1579,2 | 872,0 | 217,1 | 91,2 | 72,0 | 58,3 | 47,9 | 40,1 | 33,8 | 28,8 | 25,7 | 19,4 | 16,1 | 14,6 | 14,5 | 15,0 | 15,3 | 16,0 | 16,9 | 17,4 |
| 5 | 1382,4 | 700,6 | 155,3 | 79,7 | 62,4 | 49,7 | 39,8 | 32,6 | 27,2 | 23,1 | 20,3 | 15,1 | 12,7 | 11,1 | 10,9 | 11,4 | 11,3 | 12,4 | 12,8 | 13,8 |
| 5,5 | 1182,9 | 556,2 | 123,7 | 70,6 | 54,3 | 42,7 | 34,1 | 27,0 | 22,8 | 19,1 | 0,0 | 0,0 | 0,0 | 0,0 | 0,0 | 0,0 | 0,0 | 0,0 | 0,0 | 0,0 |
| 6 | 1027,3 | 446,6 | 100,1 | 63,8 | 48,0 | 37,0 | 28,9 | 22,7 | 18,6 | 0,0 | 0,0 | 0,0 | 0,0 | 0,0 | 0,0 | 0,0 | 0,0 | 0,0 | 0,0 | 0,0 |
| 6,5 | 898,4 | 365,3 | 87,5 | 57,8 | 42,8 | 32,1 | 25,1 | 19,9 | 0,0 | 0,0 | 0,0 | 0,0 | 0,0 | 0,0 | 0,0 | 0,0 | 0,0 | 0,0 | 0,0 | 0,0 |
| 7 | 769,8 | 298,1 | 77,4 | 53,0 | 38,2 | 28,3 | 21,8 | 17,4 | 0,0 | 0,0 | 0,0 | 0,0 | 0,0 | 0,0 | 0,0 | 0,0 | 0,0 | 0,0 | 0,0 | 0,0 |
| 7,5 | 665,9 | 244,8 | 69,9 | 48,1 | 34,0 | 25,2 | 19,3 | 0,0 | 0,0 | 0,0 | 0,0 | 0,0 | 0,0 | 0,0 | 0,0 | 0,0 | 0,0 | 0,0 | 0,0 | 0,0 |
| 8 | 573,7 | 204,3 | 65,5 | 44,4 | 30,8 | 22,6 | 16,9 | 0,0 | 0,0 | 0,0 | 0,0 | 0,0 | 0,0 | 0,0 | 0,0 | 0,0 | 0,0 | 0,0 | 0,0 | 0,0 |
| 8,5 | 492,9 | 172,4 | 60,3 | 40,4 | 27,7 | 19,9 | 15,1 | 0,0 | 0,0 | 0,0 | 0,0 | 0,0 | 0,0 | 0,0 | 0,0 | 0,0 | 0,0 | 0,0 | 0,0 | 0,0 |
| 9 | 427,2 | 149,1 | 56,3 | 37,3 | 25,3 | 18,1 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 373,0 | 129,7 | 52,7 | 34,5 | 22,3 | 15,7 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 328,9 | 116,1 | 50,2 | 31,7 | 20,4 | 14,2 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 290,6 | 104,9 | 46,9 | 29,5 | 18,6 | 13,1 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 254,3 | 95,7 | 44,6 | 27,5 | 17,1 | 11,9 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 229,7 | 88,1 | 42,3 | 25,5 | 15,8 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 209,3 | 82,5 | 40,5 | 23,7 | 14,4 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG. 6B

| | | | | | | | | | |
|---|---|---|---|---|---|---|---|---|---|
| -1,36 | -1,34 | -1,25 | -1,12 | -1,03 | -1,01 | -1,07 | -1,21 | -1,31 | -1,36 |
| -1,62 | -1,64 | -1,45 | -1,21 | -1,06 | -1,06 | -1,19 | -1,42 | -1,58 | -1,58 |
| -1,72 | -1,66 | -1,33 | -1,04 | -0,85 | -0,80 | -0,99 | -1,29 | -1,53 | -1,54 |
| -0,49 | -0,47 | -0,23 | -0,13 | 0,11 | 0,01 | -0,35 | -0,80 | -0,99 | -0,62 |
| 1,95 | 2,00 | 2,19 | 2,34 | 2,43 | 2,00 | 1,53 | 1,08 | 1,03 | 1,58 |
| 4,71 | 4,84 | 4,97 | 4,81 | 4,41 | 3,70 | 3,12 | 2,72 | 2,89 | 3,82 |

FIG.7A

| | | | | | | | | | |
|---|---|---|---|---|---|---|---|---|---|
| 1,50 | 1,46 | 1,35 | 1,18 | 1,07 | 1,06 | 1,13 | 1,30 | 1,43 | 1,50 |
| 1,88 | 1,84 | 1,68 | 1,44 | 1,25 | 1,19 | 1,33 | 1,56 | 1,78 | 1,88 |
| 2,30 | 2,36 | 2,12 | 1,73 | 1,48 | 1,43 | 1,57 | 1,91 | 2,27 | 2,38 |
| 3,02 | 3,25 | 2,91 | 2,29 | 2,04 | 1,85 | 1,88 | 2,16 | 2,62 | 2,87 |
| 4,91 | 5,01 | 4,39 | 3,79 | 3,48 | 3,05 | 2,96 | 3,32 | 4,12 | 4,63 |
| 7,29 | 7,39 | 6,60 | 5,64 | 4,86 | 4,18 | 4,00 | 4,42 | 5,58 | 6,52 |

FIG.7B

| tangente(gamma) \ beta | 0 | 2 | 5 | 10 | 15 | 20 | 25 | 30 | 35 | 40 | 45 | 60 | 75 | 90 | 105 | 120 | 135 | 150 | 165 | 180 |
|---|---|---|---|---|---|---|---|---|---|---|---|---|---|---|---|---|---|---|---|---|
| 0 | 422,2 | 423,3 | 424,0 | 426,6 | 428,9 | 420,5 | 428,7 | 431,4 | 432,6 | 428,8 | 427,1 | 431,0 | 426,6 | 428,4 | 424,0 | 428,2 | 427,1 | 426,4 | 429,7 | 429,1 |
| 0,25 | 450,7 | 455,3 | 450,2 | 453,0 | 453,2 | 446,4 | 448,9 | 442,0 | 436,8 | 430,9 | 425,0 | 410,0 | 394,6 | 382,5 | 383,1 | 380,8 | 381,1 | 381,0 | 382,0 | 383,3 |
| 0,5 | 472,5 | 478,5 | 473,7 | 466,6 | 451,2 | 434,1 | 413,6 | 398,6 | 381,5 | 365,5 | 351,4 | 324,0 | 300,5 | 292,4 | 293,6 | 293,1 | 297,8 | 300,6 | 306,4 | 307,4 |
| 0,75 | 545,6 | 539,7 | 529,0 | 503,2 | 458,4 | 409,4 | 366,3 | 328,0 | 295,2 | 271,6 | 258,7 | 224,9 | 206,9 | 206,6 | 211,5 | 213,6 | 224,7 | 228,9 | 232,2 | 233,4 |
| 1 | 650,1 | 640,0 | 612,9 | 539,4 | 449,8 | 365,6 | 307,6 | 259,5 | 220,3 | 195,0 | 176,9 | 149,2 | 142,1 | 139,1 | 144,7 | 149,0 | 157,4 | 163,5 | 169,3 | 171,5 |
| 1,25 | 782,9 | 750,4 | 685,2 | 540,7 | 404,1 | 299,5 | 235,3 | 187,0 | 153,8 | 134,9 | 119,2 | 104,4 | 100,0 | 99,0 | 104,6 | 109,1 | 114,0 | 117,5 | 121,0 | 119,2 |
| 1,5 | 851,4 | 825,1 | 710,9 | 503,6 | 335,9 | 233,4 | 166,8 | 129,3 | 101,8 | 89,2 | 80,0 | 65,8 | 66,1 | 67,3 | 70,0 | 74,9 | 80,2 | 84,9 | 86,8 | 85,9 |
| 1,75 | 891,1 | 846,2 | 690,2 | 443,7 | 268,2 | 178,2 | 122,9 | 94,3 | 74,5 | 63,2 | 57,3 | 48,5 | 45,9 | 46,9 | 49,3 | 53,8 | 59,2 | 61,9 | 63,7 | 63,8 |
| 2 | 898,0 | 844,9 | 647,7 | 371,4 | 213,0 | 135,9 | 93,5 | 69,6 | 55,3 | 48,4 | 42,9 | 34,8 | 32,2 | 32,4 | 35,9 | 39,1 | 43,3 | 45,5 | 48,9 | 48,4 |
| 2,5 | 851,2 | 759,5 | 508,5 | 236,7 | 124,2 | 78,7 | 52,9 | 39,7 | 31,7 | 27,4 | 25,9 | 20,3 | 18,6 | 18,4 | 20,1 | 22,6 | 24,8 | 27,5 | 28,4 | 29,0 |
| 3 | 759,6 | 646,3 | 372,8 | 150,3 | 75,4 | 49,0 | 33,2 | 25,6 | 20,7 | 17,6 | 15,6 | 12,5 | 12,0 | 11,6 | 12,9 | 14,8 | 16,3 | 17,6 | 19,2 | 19,1 |
| 3,5 | 655,2 | 524,7 | 267,4 | 94,9 | 48,1 | 31,4 | 21,5 | 16,4 | 13,1 | 10,8 | 9,8 | 7,6 | 7,3 | 7,8 | 8,7 | 9,0 | 10,7 | 12,3 | 13,1 | 12,8 |
| 4 | 565,5 | 419,4 | 191,6 | 64,7 | 33,9 | 21,8 | 15,3 | 11,6 | 9,4 | 7,9 | 7,2 | 5,6 | 5,0 | 5,1 | 5,5 | 6,4 | 7,4 | 8,2 | 9,1 | 8,7 |
| 4,5 | 474,3 | 326,1 | 137,5 | 45,6 | 24,2 | 16,4 | 11,7 | 8,8 | 6,3 | 5,1 | 4,4 | 3,3 | 2,8 | 2,9 | 3,5 | 4,5 | 5,1 | 5,7 | 6,3 | 6,3 |
| 5 | 395,1 | 258,5 | 97,2 | 32,4 | 17,9 | 12,9 | 9,0 | 6,6 | 4,8 | 3,8 | 2,9 | 2,1 | 2,1 | 2,0 | 2,4 | 2,9 | 3,4 | 3,8 | 4,3 | 4,9 |
| 5,5 | 331,4 | 205,1 | 74,5 | 23,5 | 14,3 | 10,0 | 7,0 | 4,6 | 3,5 | 2,4 | 0,0 | 0,0 | 0,0 | 0,0 | 0,0 | 0,0 | 0,0 | 0,0 | 0,0 | 0,0 |
| 6 | 281,9 | 165,8 | 57,1 | 19,9 | 11,7 | 8,0 | 5,4 | 3,4 | 2,3 | 0,0 | 0,0 | 0,0 | 0,0 | 0,0 | 0,0 | 0,0 | 0,0 | 0,0 | 0,0 | 0,0 |
| 6,5 | 241,7 | 134,5 | 47,1 | 17,2 | 9,9 | 6,8 | 4,7 | 3,1 | 0,0 | 0,0 | 0,0 | 0,0 | 0,0 | 0,0 | 0,0 | 0,0 | 0,0 | 0,0 | 0,0 | 0,0 |
| 7 | 203,6 | 110,0 | 39,0 | 14,4 | 8,8 | 5,7 | 3,9 | 2,6 | 0,0 | 0,0 | 0,0 | 0,0 | 0,0 | 0,0 | 0,0 | 0,0 | 0,0 | 0,0 | 0,0 | 0,0 |
| 7,5 | 174,0 | 92,2 | 32,7 | 12,8 | 7,8 | 5,1 | 3,2 | 0,0 | 0,0 | 0,0 | 0,0 | 0,0 | 0,0 | 0,0 | 0,0 | 0,0 | 0,0 | 0,0 | 0,0 | 0,0 |
| 8 | 149,7 | 78,1 | 29,0 | 11,3 | 6,8 | 4,4 | 3,0 | 0,0 | 0,0 | 0,0 | 0,0 | 0,0 | 0,0 | 0,0 | 0,0 | 0,0 | 0,0 | 0,0 | 0,0 | 0,0 |
| 8,5 | 127,3 | 67,0 | 25,4 | 10,2 | 5,9 | 3,9 | 2,6 | 0,0 | 0,0 | 0,0 | 0,0 | 0,0 | 0,0 | 0,0 | 0,0 | 0,0 | 0,0 | 0,0 | 0,0 | 0,0 |
| 9 | 109,4 | 58,7 | 22,3 | 9,1 | 5,3 | 3,5 | 0,0 | 0,0 | 0,0 | 0,0 | 0,0 | 0,0 | 0,0 | 0,0 | 0,0 | 0,0 | 0,0 | 0,0 | 0,0 | 0,0 |
| 9,5 | 95,5 | 52,8 | 19,6 | 8,5 | 4,5 | 2,9 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10 | 84,2 | 46,6 | 18,7 | 7,4 | 4,2 | 2,3 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,5 | 74,3 | 42,5 | 15,8 | 6,8 | 3,9 | 2,4 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11 | 64,7 | 39,5 | 14,5 | 6,4 | 3,5 | 2,1 | 0,0 | 0,0 | 0,0 | 0,0 | 0,0 | 0,0 | 0,0 | 0,0 | 0,0 | 0,0 | 0,0 | 0,0 | 0,0 | 0,0 |
| 11,5 | 57,4 | 35,9 | 13,3 | 5,9 | 3,2 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 12 | 52,3 | 33,5 | 12,1 | 5,1 | 2,6 | 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2021112647 A1


### Littérature non-brevet citée dans la description


- **BOMMEL et al.** Road Surfaces and lighting. *JOINT TECHNICAL REPORT CIE/PIARC*